Europäisches Patentamt

European Patent Office

Office européen des brevets

(19)

(11) Publication number: **0 410 036 A1**

# EUROPEAN PATENT APPLICATION

(21) Application number: 89113860.4

(22) Date of filing: 27.07.89

(51) Int. Cl.⁵: **G06F 15/40**

(43) Date of publication of application:
**30.01.91 Bulletin 91/05**

(84) Designated Contracting States:
**AT BE CH DE ES FR GB GR IT LI LU NL SE**

(71) Applicant: **YAMATO DENKI ENGINEERING
KABUSHIKI KAISHA
3-go, 1-ban, Nishitenma 5-chome Kita-ku
Osaka-shi(JP)**

(72) Inventor: **Yamamoto, Eizo**

13-banchi, Skuragaoka 3-chome
Mino-shi Osaka-fu(JP)
Inventor: **Maiki, Hayato**
4-21, Kamo 2-chome
Takaishi-shi Osaka-fu(JP)

(74) Representative: **Dipl.-Ing. H. Hauck Dipl.-Ing. E.
Graalfs Dipl.-Ing. W. Wehnert Dr.-Ing. W.
Döring, Dr.rer.nat.,Dipl.-Chem. U. Beines
Neuer Wall 41
D-2000 Hamburg 36(DE)**

(54) Commodity information retrieval system.

(57) A commodity information retrieval system comprising at least one host station and a plurality of user stations interconnected through telecommunication lines by way of a repeater mounted on a communications satellite. The host station stores various commodity data including video data of commodities. Each of the user stations includes a terminal commodity data storage, and a retrieval terminal for searching desired commodities by utilizing commodity data stored in the terminal commodity data storage., When the user wants to look at a selected number of commodity images, corresponding video data are requested from the host station. Desired commodities are made referring to commodity classifications, users' tastes and/or purposes of purchase. Various data are obtained from the selections made by the user, which data are used as history data, demand data and so on for grasping market trends and system operations.

FIG. 1

## COMMODITY INFORMATION RETRIEVAL SYSTEM

BACKGROUND OF THE INVENTION

(1) Field of the Invention

The present invention relates to a commodity information retrieval system for transmitting information regarding a plurality of commodities from a host station to user stations through a repeater mounted on a communications satellite, for the consumer to find desired commodities by referring to such commodity information.

(2) Description of the Prior Art

Conventionally, the following means are available for providing prospective customers with commodity information and enabling the customers to select desired commodities by referring to such information:

(1) One of the conventional means is what is known as catalog sales. In this method, each commodity supplier provides the consumer with a catalog of its products. The consumer selects desired commodity information from the catalog, and obtains a commodity by notifying the brandname or code to the supplier by telephone or post.

(2) What is known as TV shopping is also widely practiced, in which commodity information is provided through television broadcasts. In this method, the supplier communicates information (character information and pictorial information) concerning several types of commodities to individual households. The consumer desiring to buy one or more of the commodities obtains such commodity or commodities by notifying the brandname(s) or commodity code(s) to the supplier by telephone or post.

(3) Further, commodity retrieval apparatus using optical disks have been proposed recently. In this system, a center or host station and a plurality of user stations are interconnected through cable circuits, and each user station is equipped with a commodity retrieval apparatus. The retrieval apparatus contains optical disks storing data necessary for commodity retrieval and video data of various commodities. By operating the retrieval apparatus, the user can retrieve information on desired commodities, and looks at commodity images on a display screen.

Such known examples, however, have the following disadvantages:

(1) In providing commodity information by means of catalogs, it is necessary to distribute catalogs carrying various commodity information to a large number of prospective customers. The supplier must, therefore, make enormous investments for preparation of the catalogs. Consequently, the supplier cannot help limiting catalog-receivers to a certain number (to good customers, for example), so that the commodity information is made available to a limited number of consumers. Further, since the catalogs cannot be re-made frequently for reasons of cost, it is difficult to provide the consumer with information on new products such as seasonable or fashionable goods in a timely manner.

On the part of the consumer, it is time-consuming and cumbersome to retrieve information on desired commodities from catalogs provided by many suppliers. After all, those catalogs are often dismissed without being used to the full extent. Also it is generally difficult for individual consumers to keep a multiplicity of catalogs in their custody.

(2) TV shopping has the advantage over catalog sales of being able to provide the consumer with commodity information quickly. However, there are limits to the number of commodities for which information is provided and to the amount of information on each commodity since the commodity information must be telecast within a short time. Consequently, it often is the case that information on the commodity the consumer actually wishes to purchase is not telecast. TV shopping has the further disadvantage of not allowing the consumer to compare a plurality of commodities.

(3) The system of selecting a desired commodity by retrieving commodity data and video data stored in optical disks has the advantage over the other two methods noted above in that the desired commodity can be found in a short time. With this type of system, however, the video data increases to a great amount for accommodating a large number of commodities in optical disks. It is therefore necessary to install a large number of optical disks at many individual user stations, which results in large and expensive retrieval apparatus installed at the user stations. Conventionally, this type of apparatus must, therefore, be limited to retrieval of information on limited types of commodities (such as for gifts).

Further, whenever the commodity data or video data are renewed with this system, it is necessary to change the optical disks mounted in the retrieval apparatus at the multiplicity of user stations. The renewal operation is thus troublesome, and changing of the optical disks involves large expenses.

SUMMARY OF THE INVENTION

The present invention has been made having regard to the state of the art noted above. A primary object of the present invention, therefore, is to provide a commodity information retrieval system capable of providing a large number of consumers with information on a large number of commodities in a speedy manner, enabling the customers to compare a plurality of commodities and select a favorite commodity, and renewing the commodity information easily and quickly.

This object is achieved, according to the present invention, by a commodity information retrieval system comprising at least one host station and a plurality of user stations, the host station transmitting commodity data to the user stations by way of a repeater mounted on a communications satellite. The commodity data are stored in each user station where desired commodity data are retrieved from the stored commodity data. The user station transmits a video data request to the host station concerning commodities selected through the retrieval. The host station reads video data requested by the user station, out of stored video data. This video data is transmitted through the repeater to the user station from which the image request has originated. Images of the selected commodities are displayed at the user station in accordance with the video data received from the host station.

Thus, according to the present invention, a large number of consumers may be provided with information on a large number of commodities in a speedy manner. Further, necessary video data are transmitted from the host station to the user station upon request from the latter. It is, therefore, unnecessary for the user station to keep a large capacity video database, which realizes a simplified commodity information retrieval system.

Other objects and advantages of the present invention will be apparent from the detailed description of the preferred embodiments to follow.

BRIEF DESCRIPTION OF THE DRAWINGS

Fig. 1 is a block diagram illustrating functions of various components of a commodity information retrieval system according to one embodiment of the present invention,
Fig. 2 is a schematic view of the entire system,
Fig. 3 is a schematic view of a host station,
Fig. 4 is a schematic view of a user station,
Fig. 5 is a schematic perspective view of a retrieving device installed at the user station,
Fig. 6 is a schematic view of a supplier station,
Fig. 7 is a schematic view of a video data creator station,
Fig. 8 is an explanatory view of transmission data format,
Fig. 9 is a flow chart of a system operation,
Fig. 10 is an explanatory view of commodity data for retrieval,
Figs. 11-1 through 11-3 are flow charts illustrating a first example of commodity retrieval,
Fig. 12 is a flow chart illustrating a second example of commodity retrieval,
Fig. 13 is a flow chart illustrating a third example of commodity retrieval,
Figs. 14-1 through 14-10 are illustrations of displays made on a touch screen in the course of information retrieval,
Figs. 15-1 through 15-3 are flow charts illustrating an overall operation according to another preferred embodiment of the invention,
Figs. 16-1 and 16-2 are flow charts illustrating switching of icon highlight.
Figs. 17-1 through 17-5 are illustrations of displays on the touch screen,
Fig. 18 is a view illustrating displays made on a multi-scan monitor,
Figs. 19-1 through 19-4 are flow charts illustrating an image display operation for commodities retrieved,
Figs. 20-1, 20-2 and 21 are views illustrating image displays made by the operation of Figs. 19-1 through 19-4,
Figs. 22-1 through 22-3 are flow charts illustrating retrieval history data collecting and transmitting operations,

Fig. 23 is an explanatory view of a monitor switch and digital switches, and
Fig. 24-1 through 24-3 are explanatory views showing file structures of retrieval history data.

DETAILED DESCRIPTION OF THE PREFERRED EMBODIMENTS

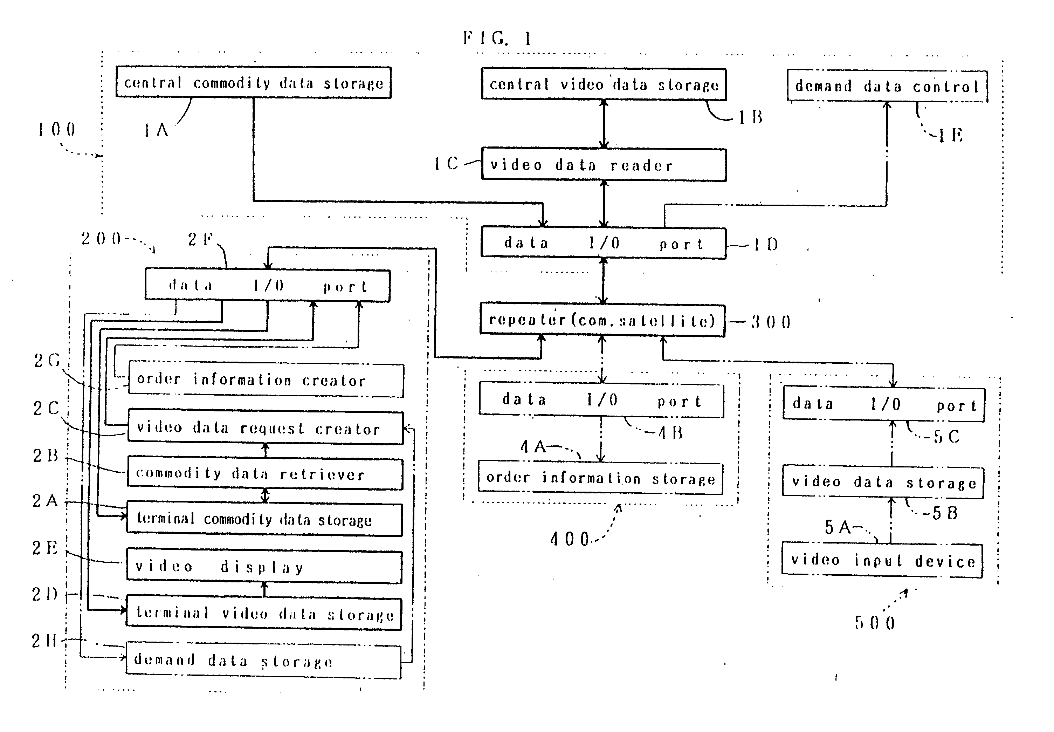

First, a preferred embodiment of the present invention will be described centering on functions of its components with reference to Fig. 1.

The illustrated commodity information retrieval system comprises at least one host station 100, a plurality of user stations 200 (only one of which is shown in Fig. 1), a repeater 300 mounted on a communications satellite, a commodity supplier station 400 and a video data creator station 500.

The host station 100 includes a central commodity data storage 1A for storing retrieval commodity data to be transmitted to the user stations 200, a central video data storage 1B for storing video data of a multiplicity of commodities, a video data reader 1C for reading video data requested by the user station 200 from the central video data storage 1B, a data input/output port 1D for transmitting the commodity data stored in the central commodity data storage 1A and the video data read out by the video data reader 1C to the user stations 200 through the repeater 300 and for receiving image requests and other signals from the user stations 200, and a demand data control 1E for analyzing and recording data regarding order frequency of each commodity (demand data) based on commodity order information received from the user stations 200. The central video data storage 1B consists of a plurality of optical disks on which the video data are stored at random.

Each user station 200 includes a terminal commodity data storage 2A for storing commodity data received from the host station 100, a commodity data retriever 2B for retrieving desired commodity data from the data stored in the terminal commodity data storage 2A, a video data request creater 2C for creating an image request on commodities selected through data retrieval, a terminal video data storage 2D for storing video data corresponding to a predetermined number of images received from the host station 100, a video display 2E for displaying commodity images, a data input/output port 2F for transmitting the image request to the host station 100 through the repeater 300 and for receiving the commodity data and video data from the host station 100 through the repeater 300, an order information creater 2G for transmitting order information on the commodity or commodities that the user has decided to purchase to the host station 100 through the repeater 300, and a demand data storage 2H for storing the demand data received from the host station 100 through the repeater 300.

The number of commodities retrieved through the commodity data retriever 2B may exceed a maximum number of images storable in the terminal video data storage 2D. In such a case, the video data request creator 2C refers to the demand data stored in the demand data storage 2H, selects the frequently ordered commodities corresponding in number to the maximum number of images, and requests video data for the selected commodities from the host station 100.

The commodity supplier station 400 can communicate with the host station 100 through the repeater 300, and includes an order information storage 4A for storing commodity order information, and a data input/output port 4B for communicating data with the host station 100.

The video data creator station 500 can also communicate with the host station 100 through the repeater, and includes a video input device 5A for creating the commodity video data, a video data storage 5B for storing the video data created through the video data input device 5A, and a data input/output port 5C for receiving a video data request and, in response to this request, transmitting the video data stored in the video data storage 5B to the host station 100.

An outline of the system operation is as follows:

The commodity data stored in the central commodity data storage 1A are transmitted to the user stations 200 through the data input/output port 1D and repeater 300. Each user station 200 stores the transmitted commodity in the terminal commodity data storage 2A. The user at the user station 200 operates the commodity data retriever 2B to retrieve desired data from the commodity data stored in the terminal commodity data storage 2A. When the user has selected a certain number of commodities and wishes to look at their images, he or she operates the video data request creator 2C. The video data request creator 2C then creates a video request and transmits it to the host station 100 through the data input/output port 2F and repeater 300.

In response to this video request, the video data reader 1C of the host station 100 reads the video data of the selected commodities from the central video data storage 1B. The video data of commodities are stored at random regardless of commodity classification or the like in the plurality of optical disks constituting the central video data storage 1B. Therefore, when the video data are read out in respect of a plurality of commodities, these data are read from the optical disks in parallel. The video data thus read out are transmitted through the data input/output port 1D and repeater 300 to the user station 200 from which the video request has originated.

The video data transmitted to the user station 200 are temporarily stored in the terminal video data storage 2D. Then the images are displayed on the video display 2E.

The user at the user station 200 looks at the images of the commodities appearing on the video display 2E, and select a favorite commodity or commodities from the retrieved commodities.

When ordering the selected commodity or commodities, the order information creator 2G is operated to transmit order information on the selected commodity or commodities to the host station 100. Then the demand data control 1E of the host station 100 analyzes and records demand data of each commodity with respect to its order frequency.

The demand data created at the host station 100 is transmitted to each user station 200 and stored in the demand data storage 2H. On the other hand, if the number of commodities retrieved at the user station 200 exceeds the maximum number of images storable in the terminal video data storage 2D, the data storage 2D cannot accept the video data of all the retrieved commodities. In this case, reference is made to the demand data stored in the demand data storage 2H for selecting the number of frequently ordered commodities equal to the maximum number of images. The video data for these commodities are requested from the host station 100.

The order information transmitted from user station 200 to host station 100 is transferred to the supplier station 400 to be stored in the order information storage 4A. On the basis of this information, the commodity or commodities are arranged for delivery.

At the video data creator station 500, the original image of each commodity received from the commodity supplier or other source is converted into video data by the video input device 5A for storage in the video data storage 5B. In reponse to the video data request received from the host station 100, the video data stored in the storage 5B is transmitted to the host station 100 to be stored in the central video data storage 1B.

Structural details of the commodity information retrieval system will be described next.

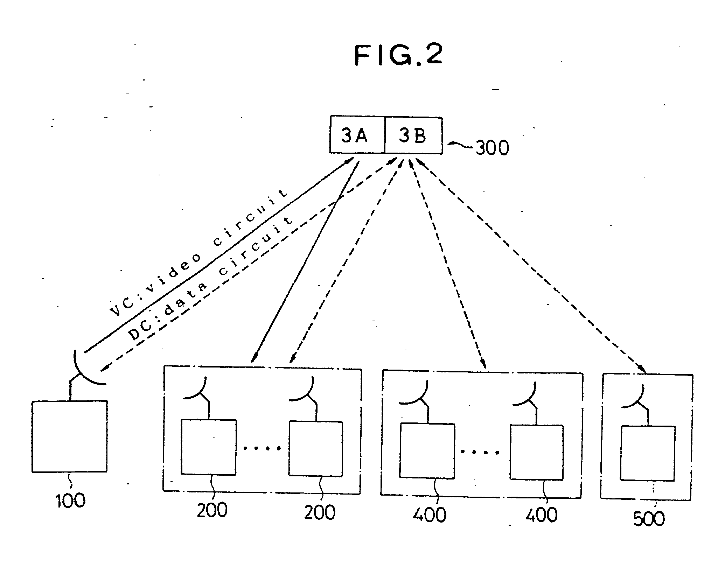

Fig. 2 shows the host station 100, user stations 200, commodity supplier stations 400 and video data creator station 500 which communicate data through the repeater 300 mounted on a communications satellite, and telecommunication lines interconnecting the host station 100 and other stations.

The host station 100 controls various commodity data and video data used in the commodity retrieval at the user stations 200, and communicates the data with the various stations as necessary. One host station 100 is included in this embodiment, but a plurality of host stations 100 may be provided. Where a plurality of host stations 100 are provided, one host station may be used as a backup when another is disabled of communication for some reason.

The user stations 200 are for users to search and select desired commodities from the commodity data filed therein, and transmit commodity orders to the host station 100. The user stations 200 should desirably be installed in coffee houses, beauty parlors, hospitals and the like where many people stay for certain periods of time. The user stations 200 are installed in a greater number than the other stations, and their number is not limited.

The commodity supplier stations 400 receive commodity order information through the host station 100, and arrange delivery of the ordered commodities. The number of supplier stations 400 is not limited.

The video data creator stations 500 create commodity data and descriptions on behalf of the host station 100, for transmitting such data to the host station 100 to be stored therein. The number of creator stations is not limited.

The repeater 300 relays the data transmission between the host station 100 and other stations, and includes a video circuit repeater 3A and a data circuit repeater 3B. The number of repeaters is not limited, and one circuit may be used for transmitting the video and other data. By mounting the repeater 300 on a communications satellite, the various stations may be installed over a wide range. This facilitates construction of this system, and secures "broadcasting" or simultaneous data transmission from the host station to many other stations.

A video circuit VC shown in solid lines in Fig. 2 is a video data transmission circuit interconnecting the host station 100 and user station 200. The circuit VC transmits the data one way from host station 100 to user station 200.

Data circuits DC shown in boken lines transmit various data bidirectionally between host station 100 and other stations.

The data transmission is on-line or batch processed depending on the kind. The on-line processing is used for information transmission made by any non-host station when an immediate response from the host station 100 is required. The batch processing is used for transmission of a group of data, in which the host station 100 polls another station for prompting transmission of a group of necessary data, if any, to the host station 100.

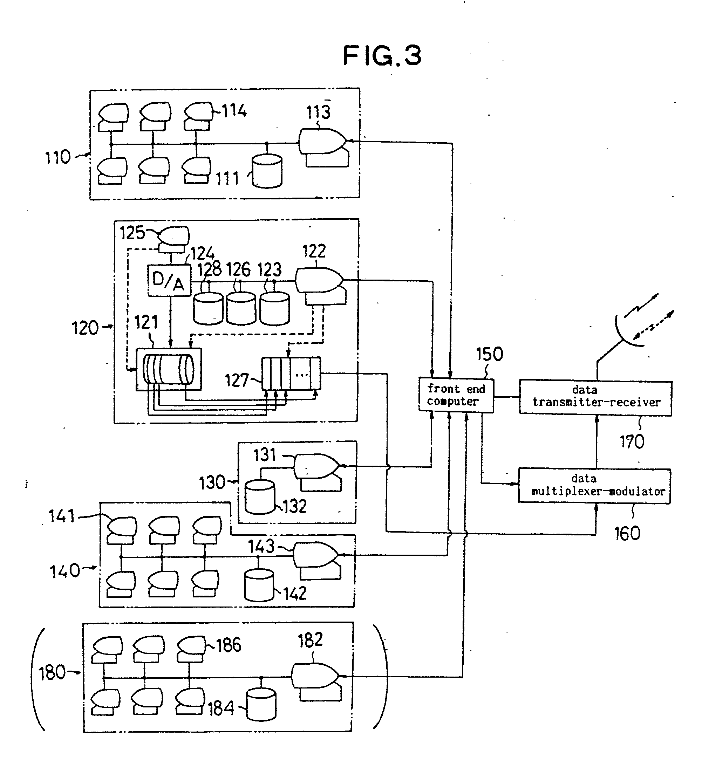

Next, constructions of the respective stations will particularly be described with reference to Figs. 3 through 7.

A specific construction of the host station 100 will be described first with reference to Fig. 3.

The host station 100, broadly, includes the following four data control sections.

The first section is a commodity data control section 110 for controlling a multiplicity of commodity data to be transmitted to the user stations 200 for commodity retrieval. The commodity data control section 110 includes a commodity data file 111 for storing the commodity data, a commodity data controlling computer 113 for controlling accumulation, renewal and deletion of the commodity data, and a plurality of terminal units 114 for inputting commodity data. The commodity data file 111 corresponds to the central commodity data storage 1A shown in Fig. 1.

The second section is a video data control section 120 for controlling the video data and description data of commodities transmitted to the user stations 200 upon request. The video data control section 120 includes an video file 121 corresponding to the central video data storage 1B shown in Fig. 1, and a video data controlling computer 122 corresponding to the video data reader 1C. In this embodiment, the video file 121 is made up of a plurality of optical disks. The video file 121 may of course be made up of magnetic disks or the like.

The digital video data transmitted from the video data creator station 500 are once stored in the video data file 123. These data are converted by a digital-to-analog converter 124 into a frequency-modulated analog signal, which is stored at random in the video file 121 under control of an optical disk recording console 125.

The random storage of the video data means that video data of commodities highly likely to be requested simultaneously by the user stations 200 are stored in different optical disks. Normally, about one second is required for reading out video data corresponding to one image from the optical disks. Assume that a user station 200 requests video data of each of five articles of ladies' wear. If the video data of ladies' wear were all stored in the same optical disk, there would occur a five-second waiting time for read-out the video data of the five commodities, resulting in a slow video data transmission to the user station 200. Where the video data are stored at random in the optical disks as above, the video data may be read in parallel from different optical disks, thereby achieving a reduced read-out time.

The data indicating storage locations of the commodity video data are stored in a video data classification data file 126 associated with the optical disk recording console 125. The video data controlling computer 122 reads the commodity classification data from the video data classification data file 126 in response to commodity codes received from the video data requesting host station 100, and reads necessary video data from the video file 121 by referring to the classification data.

The video data control section 120 further includes a video transmission buffer 127 having a plurality of frame memories corresponding to the optical disks of video file 121, respectively. The video data read out of the optical disks under control of the video data controlling computer 122 are once stored in the frame memories corresponding to the optical disks, and are sequentially output from the video transmission buffer 127.

The video data control section also includes a commodity description data file 128 for storing description data transmitted from the video data creator station 500. As are the video data, these description data are stored as associated with the commodity codes. Upon receipt of a video data request from the user station 200, the video data are read out and the description data are read out of the description data file 128.

The third section is a demand data control section 130 corresponding to the demand data control 1E shown in Fig. 1. The demand data control section 130 includes a demand data controlling computer 131 for analyzing and taking the statistics of commodity order frequencies based on the commodity order information received from the user stations 200, and a demand data file 132 for storing the analyzed demand data.

The commodity demand data are analyzed according to various aspects such as demands from the respective user stations 200, demands for different commodity trends, demands varying from region to region, demands varying from one age bracket to another, and so on. The demand data here means the data indicating commodity order frequencies for each of small commodity classification (including about 4,000 to 5,000 groups, for example) used at the user stations 200 when requesting the commodity video data as described later.

The fourth section is an order receiving and transmitting control section 140. This section 140 includes a data input terminal 141 for re-inputting commodity order receiving data based on order forms image-transferred from the user stations 200, data files 142 which include an order transmitting file for temporarily storing the data image-transferred from the user stations 200 and an order receiving file for storing the order receiving data re-input by the data input terminal 141, and a data file controlling computer 143 for writing data in and reading data from the data files 142.

Fig. 3 also shows a retrieval history data control section 180, which is not described here since it is a section added to a different embodiment described later.

The foregoing control sections 110, 120, 130 and 140 are connected to a data communicating front end computer 150. This computer 150 analyzes the data received from the various stations and assigns these data to appropriate control stations.

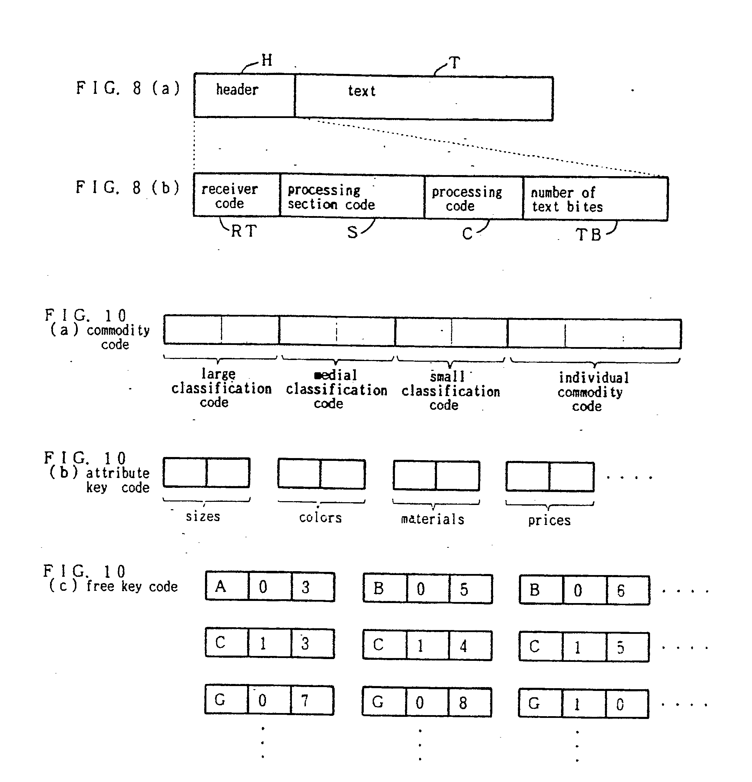

Specifically, as shown in Fig. 8(a), the host station 100 receives a data format transmitted from the various stations, which format is made up of a head region H for data identification, and a text region T containing a data text. As shown in Fig. 8(b) the header region H includes a receiver code RT for identifying the station transmitting the data, a processing section code S for identifying the control section of the host station 100 which processes the data, a processing code C for indicating the nature of data processing, and the number of text bites TB for indicating a data amount of the text transmitted.

The front end computer 150 ascertains the processing section code S in the header region H, and assigns the data to an appropriate control section. The controlling computer in each section carries out processing corresponding to the processing code C in the assigned data.

Further, the front end computer 150 produces a format similar to that shown in Fig. 8, for the data (such as commodity data and description data) to be transmitted to a non-host station, and transmits the format to the non-host station with the code of that station. In the case of data transmission based on a request, such as the video data request, from a particular user station, the front end computer 150 memorizes the receiver code RT contained in the header region H, and adds this code to the data transmitted to that user station.

The video data read out at the video data control section 120 and the commodity description data formatted by the front end computer 150 are multiplexed, modulated and scrambled by a data multiplexer-modulator 160 for application to a data transmitter-receiver 170.

The data transmitter-receiver 170 communicates data with the non-host stations, and corresponds to the data input/output port 1D shown in Fig. 1.

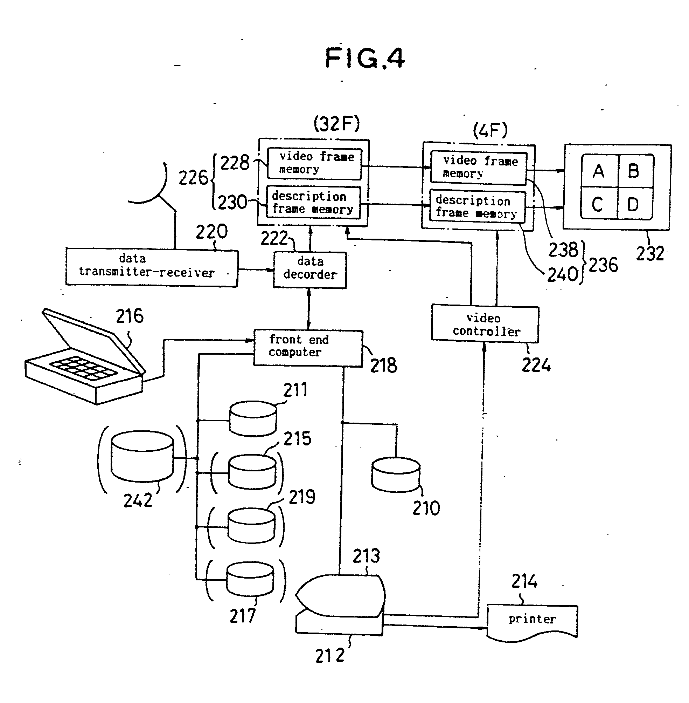

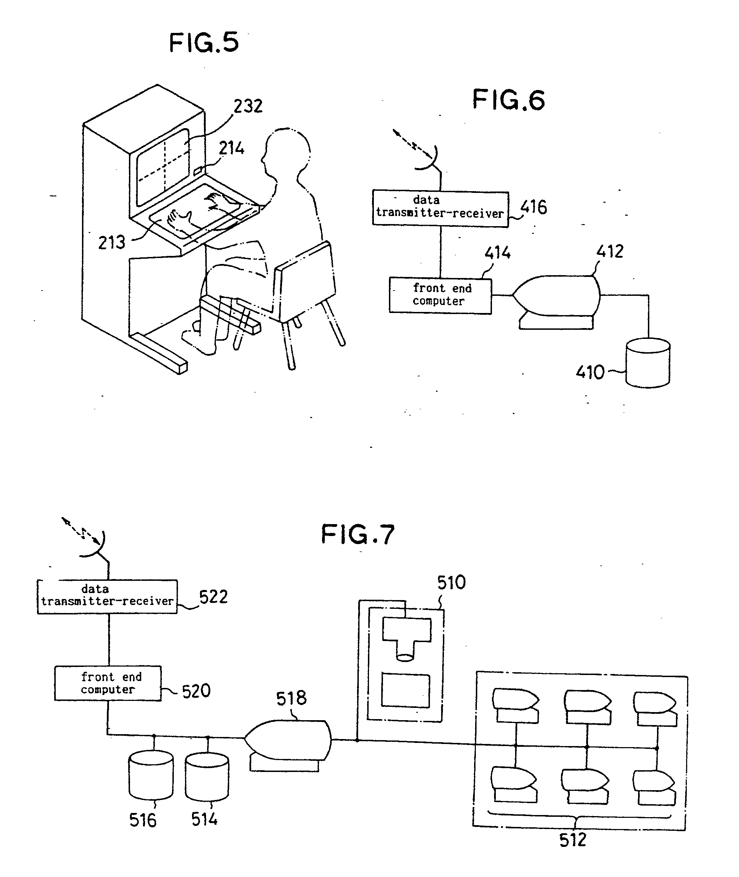

The user station 200 will be described next with reference to Figs. 4 and 5.

Fig. 4 is a block diagram of the user station 200, and Fig. 5 is a schematic perspective view of a retrieving device installed at the user station 200.

The user station 200 includes commodity data file 210 for storing the commodity data transmitted from the host station 100, and a demand data file 211 for storing the demand data. The commodity data file 210 corresponds to the terminal commodity data storage 2A shown in Fig. 1, while the demand data file 211 corresponds to the demand data storage 2H shown in Fig. 1.

A retrieval terminal 212 is provided as associated with the data files 210 and 211 for carrying out commodity retrieval and image request. As shown in Fig. 5, the retrieval terminal 212 includes a touch screen 213 for use in the commodity retrieval. The retrieval terminal 212 corresponds to the commodity data retriever 2B and video data request creator 2C shown in Fig. 1.

Number 214 indicates a printer 214 for printing out the brandnames, numbers and the like of commodities selected by a user. The printout is rewritten into a suitable order slip which is converted by an image scanner 216 into image data for transmission to the host station 100. This image scanner 216 corresponds to the order information creator 2G shown in Fig. 1. The order information creator 2G may allow the user to operate the retrieval terminal 212 for creating the order information and directly transmitting it to the host station 100. In this embodiment, however, a staffmember at the user station 200 transmits the image of order information in order to avoid ordering errors and pranks.

A front end computer 218 formats the data transmitted to the host station 100 (see Fig. 8), and distributes the data received from the host station 100 to various parts of the user station 200.

A data decoder 222 decodes the video data and description data received by a data transmitter-receiver 220. The video data and the like transmitted as scrambled from the host station 100 can be decoded correctly only at the user station 200 answering the receiver code transmitted with the data. Decoded video data and description data are stored in a video buffer memory 226 controlled by a video controller 224. The video buffer memory 226 includes a frame memory 228 capable of storing video data corresponding to a maximum of 32 frames, and a frame memory 230 for storing description data corresponding to the video data. The maximum number of frames storable is of course not limited to 32, but may be set as desired. This video buffer memory 226 corresponds to the terminal video data storage 2D shown in Fig. 1.

The video buffer memory 226 is connected to a display buffer memory 236 which includes a video

7

frame memory 238 for storing video data for four frames transferred from the video buffer memory 226, and a description frame memory 240 corresponding to the four frames corresponding to the above video data.

The video data and description data are transmitted from the host station 100 along with commodity codes. The front end computer 218 memorizes the respective commodity codes as associated with storage locations of the video data in the video buffer memory 226. Upon receipt of a video display command for a selected commodity from the retrieval terminal 212, the front end computer 218 referred to the commodity codes and designates the storage location of the corresponding data to the video controller 224. The video controller 224 reads the video data and description data of that commodity from the designated storage location in the video buffer memory 226, and outputs these data through the display buffer memory 236 to a multi-scan monitor 232.

The multi-scan monitor 232 is capable of a quarter split display mode for displaying four commodity images on one screen under control of the video controller 224. This mode allows the user to compare the four commodity images for selecting a favorite commodity or commodities. If desired, one enlarged commodity image may be displayed on the entire monitor screen. This multi-scan monitor 232 corresponds to the video display 2E in Fig. 1.

Fig. 4 also shows an icon storage file 215, an icon display attribute file 219, an icon highlight display file 217 and a retrieval history data file 242, which are not described here since they are added to the different embodiment described later.

Next, the commodity supplier station 400 will be described with reference to Fig. 6.

The supplier station 400 includes data files 410 consisting of an order receiving file and a commodity recording file, a computer 412 for controlling the data files 410, a front end computer 414 for distributing received data and formatting data to be sent out, and a data transmitter-receiver 416. The data files 410 to the order information storage 4A shown in Fig. 1.

Next, the video data creator station 500 will be described with reference to Fig. 7.

The video data creator station 500 includes a video input device 510 for photographing, with a camera, original images of commodities mailed from suppliers, for example, and converting the images into video data, and a description data input device 512 for inputting descriptions of the commodities. The video input device 510 corresponds to the video input device 5A in Fig. 1.

The video data produced by the video input device 510 are stored in a video data file 514, while the description data input through the description data input device 512 are stored in a description data file 516. The video data file 514 corresponds to the video data storage 5B in Fig. 1.

The video data creator station 500 further includes a file controlling computer 518 for controlling writing of the video data and description data into the files, a front end computer 520 for formatting the data to be sent out, and a data transmitter-receiver 522.

The video data creator station 500 need not be provided as an independent non-host station. For example, the commodity supplier station 400 may include a video input device and a description data input terminal for transmitting video and other data to the host station 100.

How the system according to this embodiment operates will be described next.

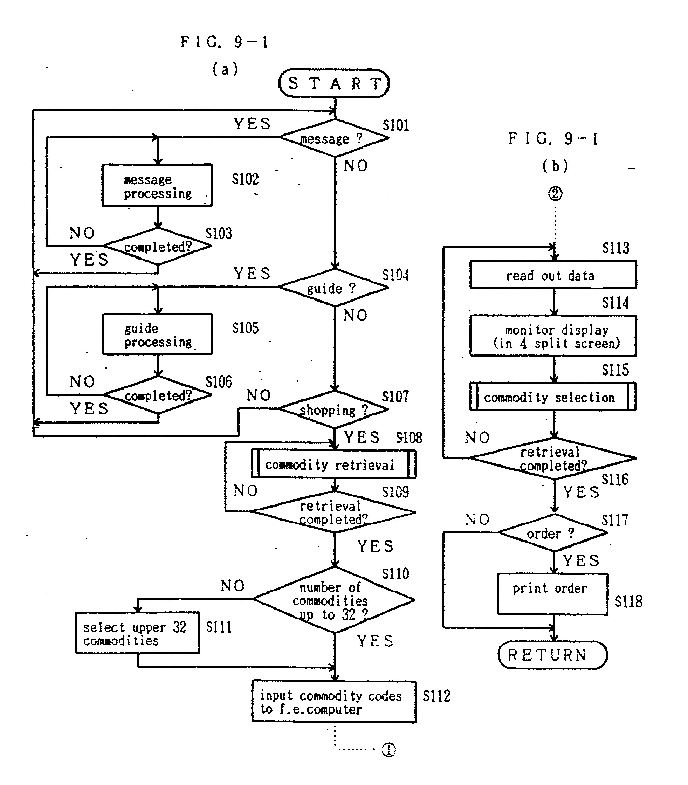

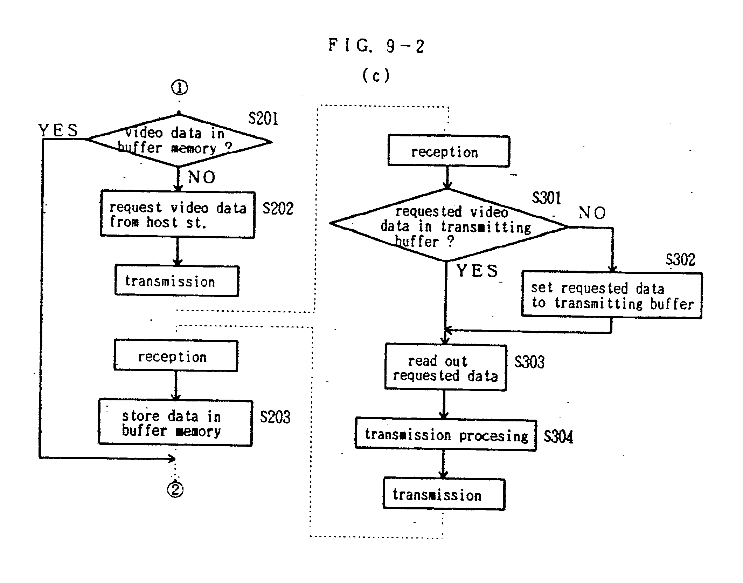

[A] An operation of the retrieval terminal 212 in the user station 200 and relating operation of the host station 100 will be described referring to Figs. 9-1 and 9-2.

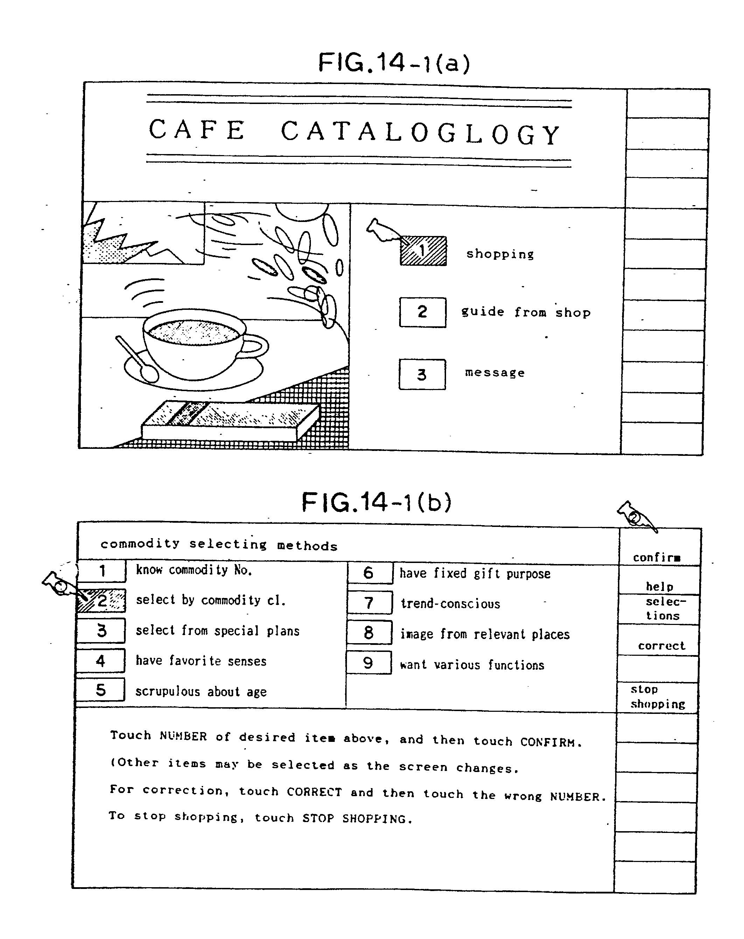

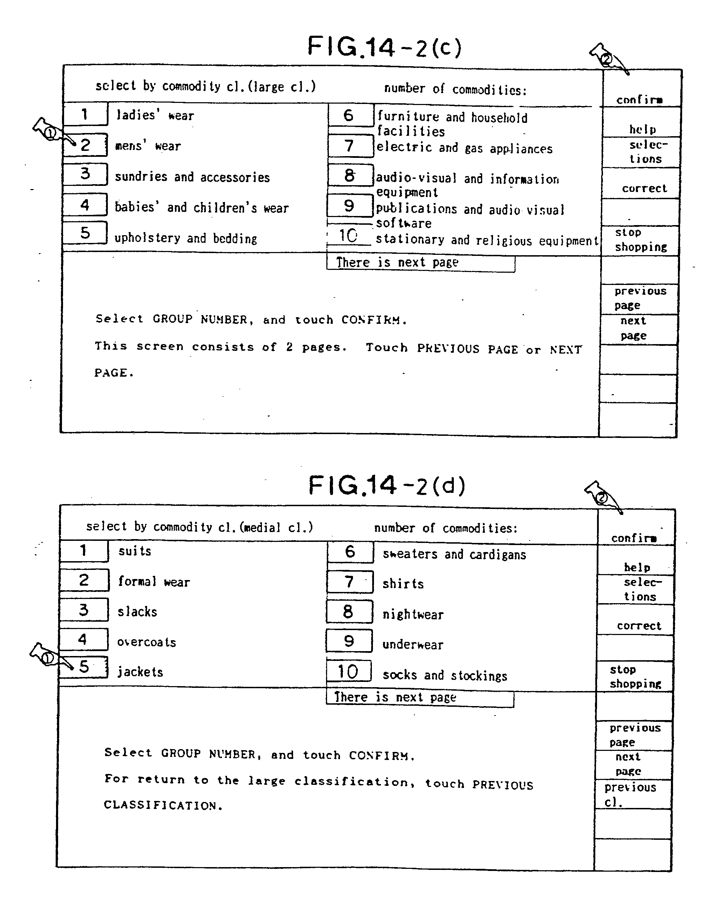

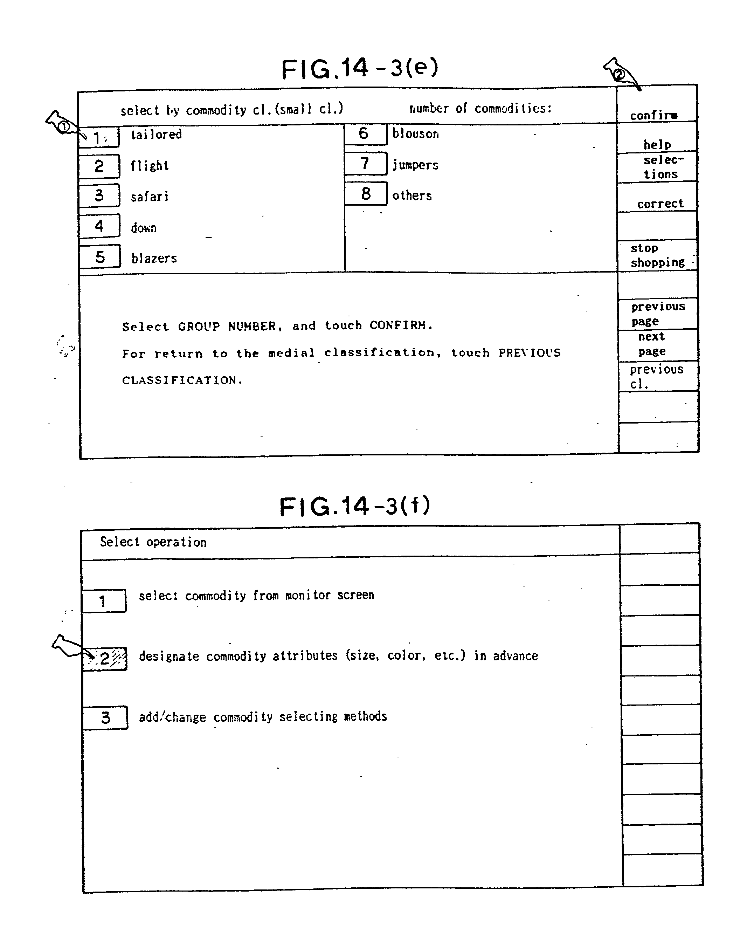

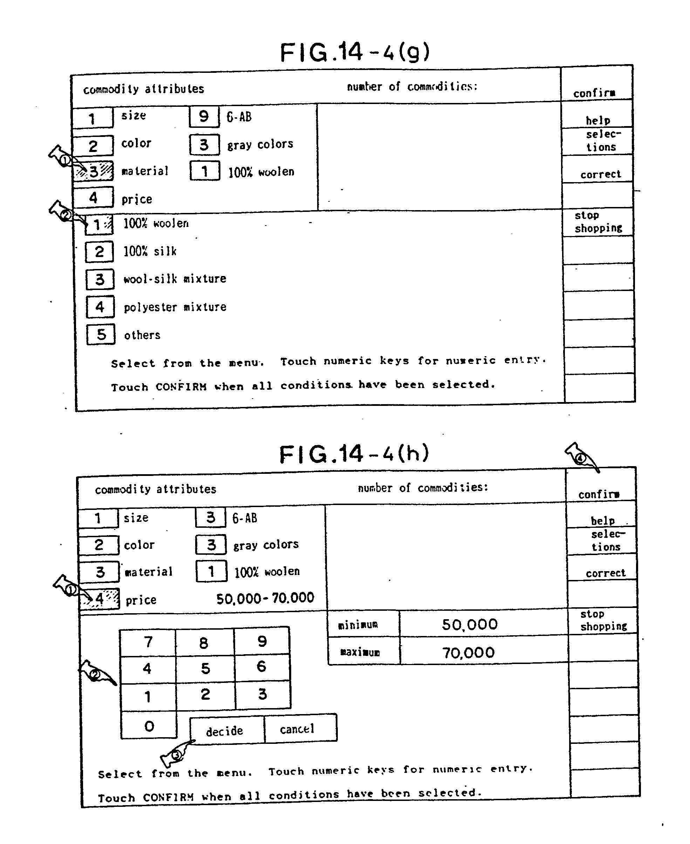

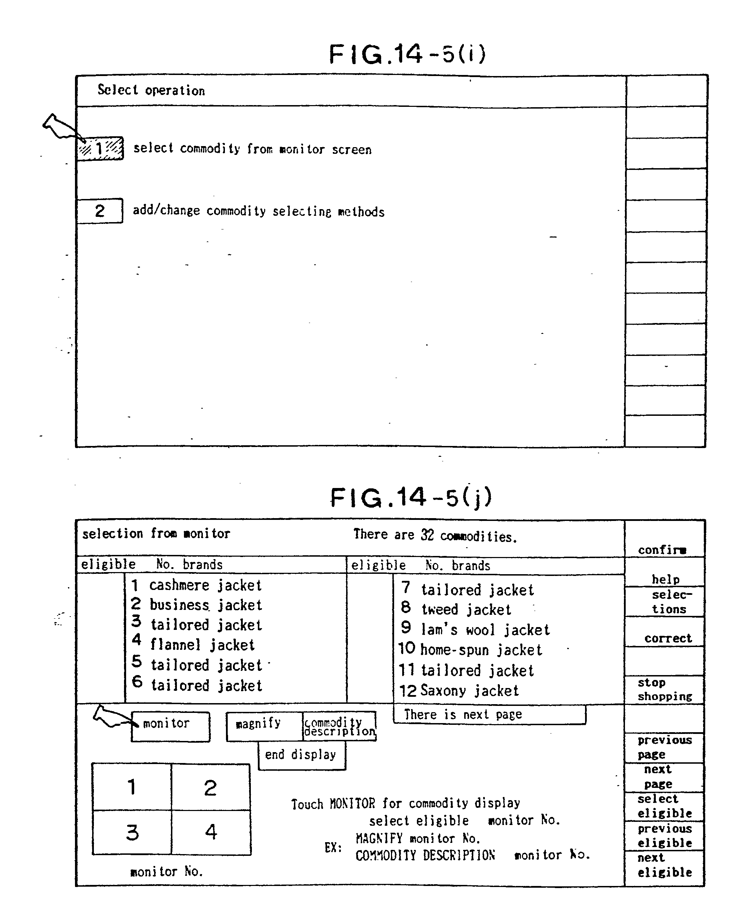

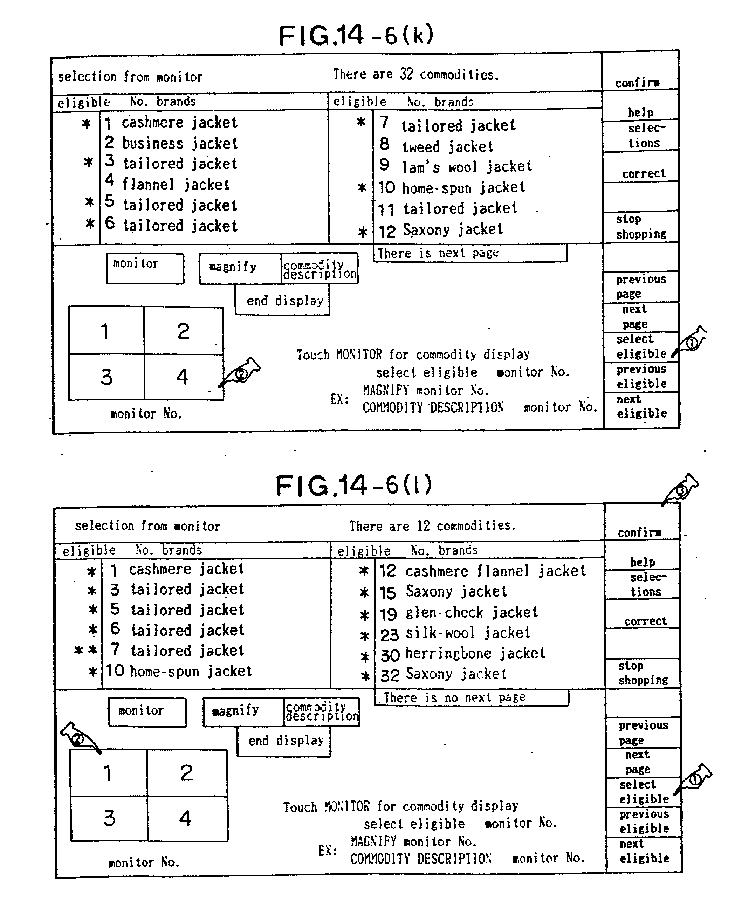

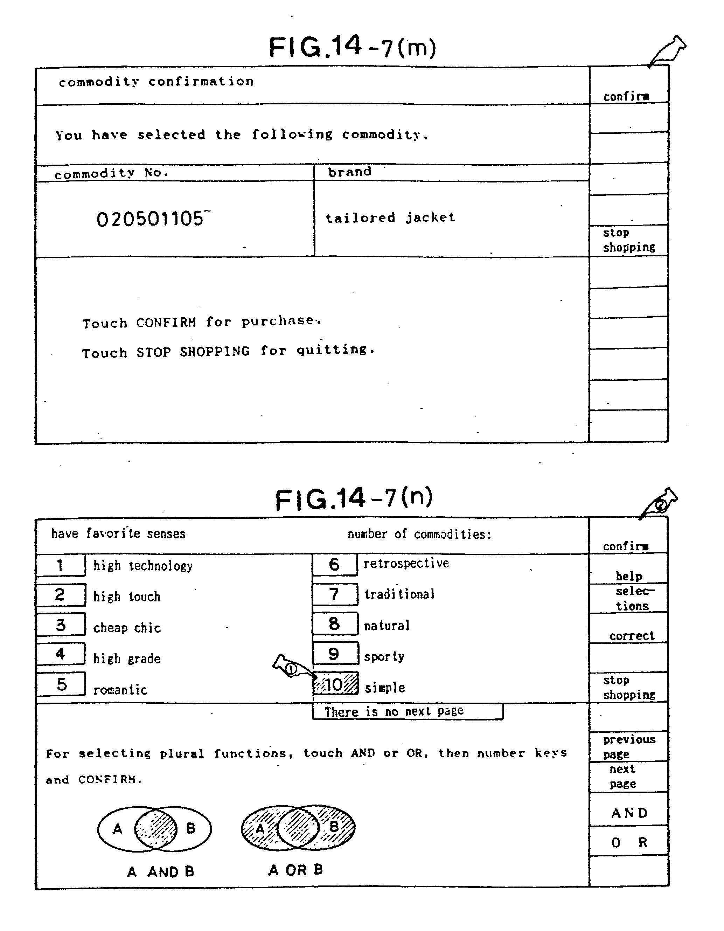

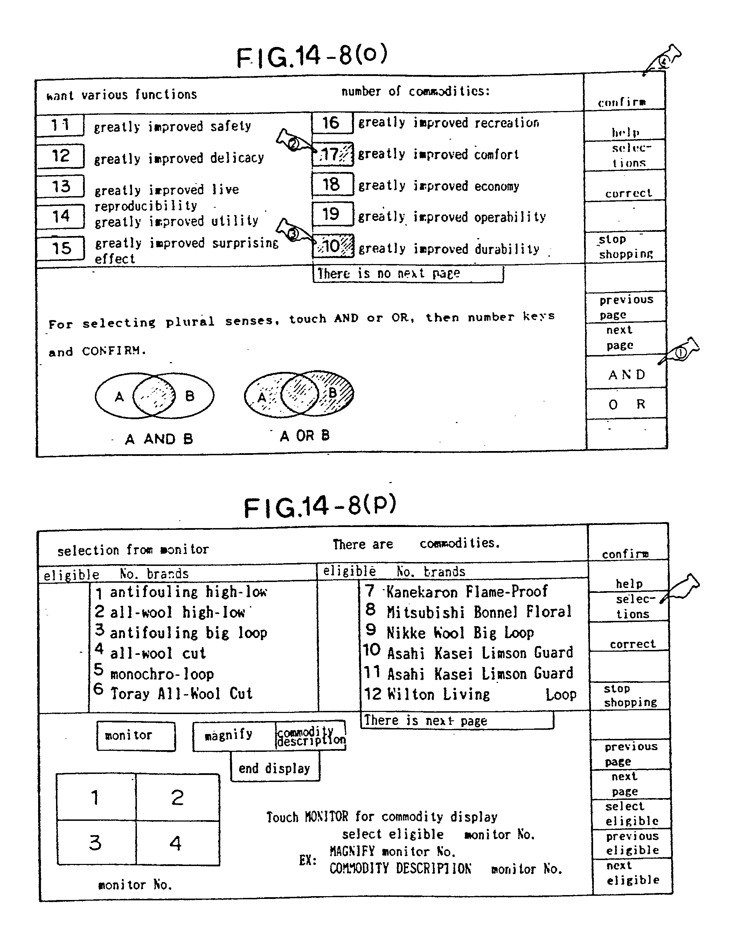

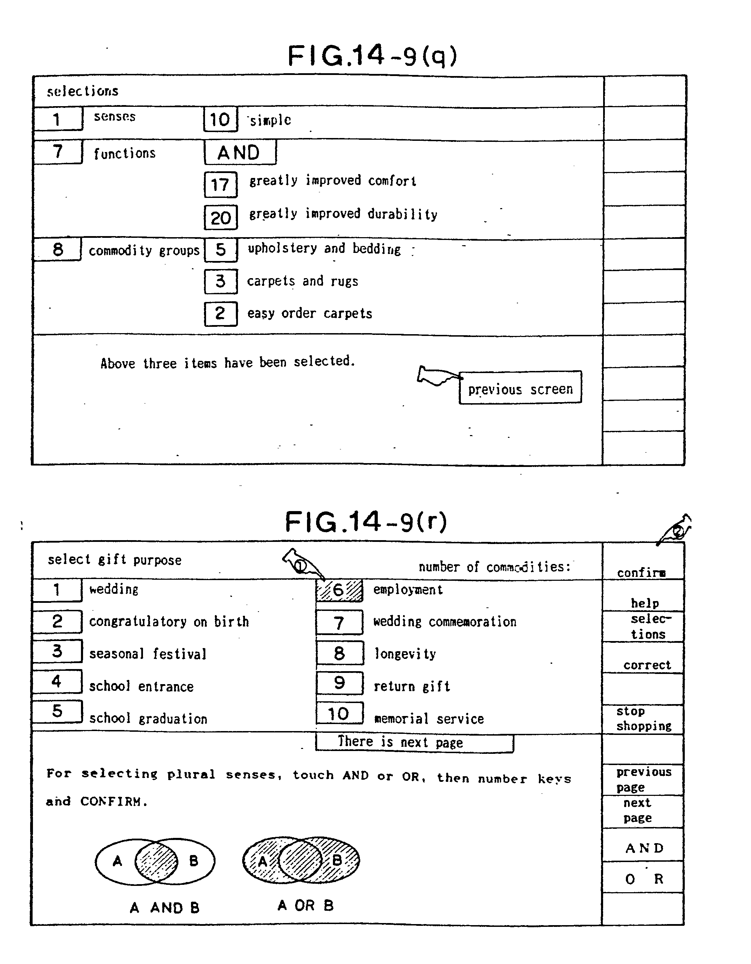

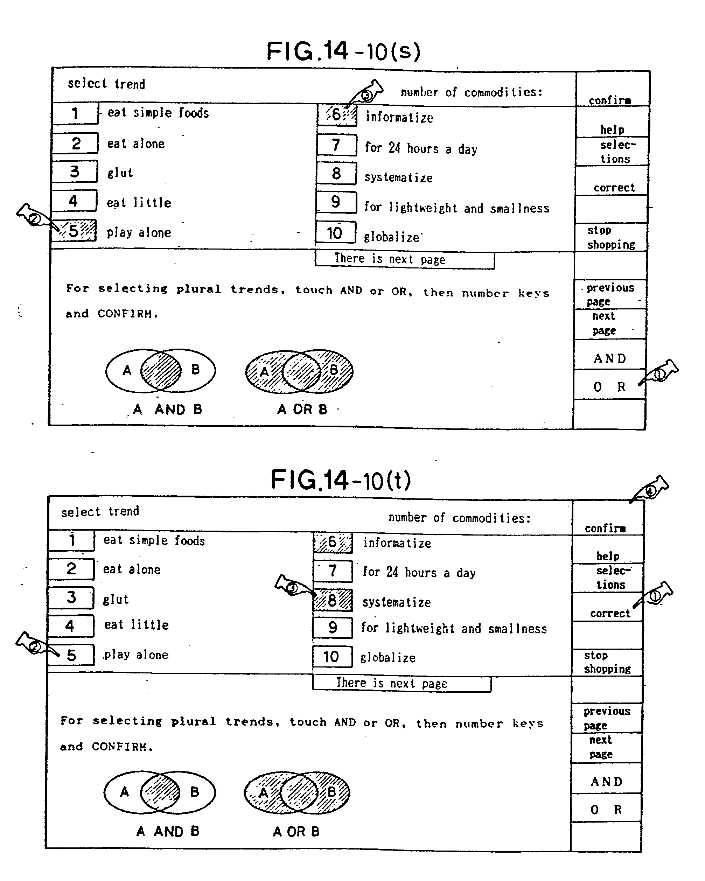

As shown in Fig. 14-1(a), the touch screen 213 of the retrieval terminal 212 in the user station 200 displays an initial screen including three menus, (1) message, (2) guide, and (3) shopping. The "message" is used for communications between users. Specifically, one user hand-writes characters on the touch screen 213, whereupon the characters are memorized inside the retrieval terminal 212 for retrieval by another user. The "guide" is used for advertising the shop or other establishments where the user station 200 is installed. When the "message" or "guide" is selected, the corresponding process is executed (steps S101 to S106).

When the "shopping" is selected, the program moves from step S107 to step S108 for commodity retrieval processing. In the commodity retrieval processing, one or more commodities meeting the conditions set by the user is/ore retrieved from the multiplicity of commodity data stored in the commodity data file 210 of the user station 200. This commodity retrieval processing will be described in detail later.

If step S109 confirms completion of the retrieval, step S110 checks if the number of retrieved commodities is up to the maximum number of video frames storable in the video buffer memory 226 (32 frames in this embodiment). If over 32 commodities have been retrieved, 32 most frequently ordered commodities are selected from the retrieved commodities by referring to the demand data stored in the demand data file 211 (step S111).

If the number of retrieved commodities is up to 32, or after the 32 commodities are selected at step S111, the program moves to step S112 for communicating the codes of these commodities to the front end computer 218.

At step S201, the front end computer 218 checks from the commodity codes stored in the video buffer memory 226 as associated with the video data whether or not the video data and description data of the commodities notified are stored in the video buffer memory 226.

If the video and other data of these commodities are not stored in the video buffer memory 226, the program moves to step S202 for requesting such data from the host station 100, the request being transmitted on-line to the host station 100. More particularly, as described with reference to Fig. 8, the code number of the user station 200, the code of the relevant processing section of the host station 100 (the video data control section 120 in this case), the processing code for requesting video output processing, and the number of bites of the text are set to the header region H of the data transmitted to the host station 100, with the codes of the commodities whose images are requested being set to the text region T.

Upon receipt of the video request, the host station 100 assigns the video request data to the video data control section 120. At step S301, the video data controlling computer 122 of the video data control section 120 checks whether the requested video data are stored in the video transmission buffer 127 or not. If the video data are found, the computer 122 reads the description data of the requested commodities from the description data file 128 at step S303. At step S304, transmission processing is carried out for the requested video data in the video transmission buffer 127 and the corresponding description data, and these data are transmitted to the user station 200 from which the video request has originated. If the video data are not stored in the video transmission buffer 127, a high-speed search is made through the video file 121 for the necessary video data by referring to the video data classification data file 126, and these data are set to the video transmission buffer 127 (step S302). Then the program moves to steps S303 and S304 for transmitting the video and other data.

When the video data and description data are transmitted to the user station 200 having made the video request, these data are stored in the respective frame memories 228 and 230 of the video buffer memory 226 (step S203).

If step S201 finds the video data of the selected commodities in the video buffer memory 226 of the user station 200, or when the necessary data transmitted from the host station 100 are set to the the video buffer memory 226, the program moves to step S113 for reading the video data and description data of the selected commodities from the video buffer memory 226. The video data read out are sequentially displayed in fours on the multi-scan monitor 232 (step S114).

At step S115, the user makes a commodity selection while looking at the commodity images appearing on the multi-scan monitor 232. The commodity selection processing carried out at step S115 will be described later. Step S116 judges whether the commodity selection is completed or not. The commodity images are displayed in sequence until the commodity selection is completed.

When the commodity selection is completed, step S117 checks whether a commodity or commodities are ordered or not. If the commodity or commodities are ordered, the printer 214 prints out an order slip carrying the commodity number(s) and brandname(s) (step S118). When the order slip has been printed or when none of the selected commodities are ordered (quitting shopping), the program returns to step S101.

[B] Order Placement Processing

The commodities selected at each user station 200 are ordered as follows:

When the order slip is printed out as described above, the user takes the slip to an appointed place (such as the cashier's counter) in the shop where the user station 200 is installed, and fills in a prescribed form. Then a staffmember of the shop operates the image scanner 216 to read the form. The resulting image data are stored in an order data file of the commodity data file 210.

[C] Order Data Collection

The order data stored at the user station 200 are collected by the host station 100 as follows:

If, for example, users are allowed to make commodity retrievals during business hours from 10 a.m. to 10 p.m., the host station 100 successively polls the user stations 200 during non-business hours from 10 p.m. to 10 a.m. the following morning, to find out if order data are stored at the user stations 200.

If order data are stored, the user stationa 200 take the order data out of the order data file of the data files 210, carry out transmission processing and transmit the data in a batch (batch processing).

Upon receipt of the order data, the host station 100 successively stores in the order file of the data files 142 in the order data control sections 140.

[D] Order Processing for Commodity Supplier Station 400

The order data stored in the order file of the host station 100 are transferred to the commodity supplier station 400 after being processed as follows:

The order data stored in the order file are bit image data. These data are displayed on a CRT of the input terminal 141. An operator looks at the displayed data, and operates keys on the input terminal 141 to re-input necessary items as character data.

The re-input order data are stored in the order file of the data files 142, and forwarded to the demand data control section 130. The data are analyzed as appropriate at the control section 130 and resulting demand data are stored in the data file 132.

The data stored in the order file are transmitted in a batch to an appropriate commodity supplier station 400 along with the corresponding commodity codes.

Upon receipt of the order data from the host station 100, the supplier station 400 stores the data in the data file 410.

[E] Demand data Processing

The demand data stored in the data file 132 of the host station 100 are transmitted to each user station 200 as follows:

The host station 100 reads the demand data from the data file 132 of the demand data control section 130, and transmits the demand data all at once to the user stations 200 during the non-business hours of the latter.

The demand data received at each user station 200 are stored in the data file 211 thereof for use in the described video request made during the commodity retrieval.

[G] Commodity Data Renewal Processing

The commodity data are renewed as follows:

The host station 100 polls the commodity supplier stations 400 to find out if each supplier station 400 has commodity data to be renewed 9such as commodity data to be added or deleted).

If there are commodity data for renewal, the supplier station 400 takes these data out of the data file 410 and transmits them in a batch to the host station 100. The host station 100 sends these commodity data to the commodity data control section 110 for adding new commodity data to the commodity data file 111 or deleting commodity data made redundant.

The renewed commodity data are transmitted from the host station 100 to the user stations 200 all at once during the non-business hours of the latter. Upon receipt of these commodity data, each user station 200 adds new commodity data to the data file 210 or delete redundant commodity data.

By thus renewing the commodity data stored in the user stations 200 all at once, information on new commodities is made available to users promptly. Since the commodity data renewal is effected during the non-business hours of the user stations 200 when the communication circuits are relatively free, the commodity data renewal processing is carried out smoothly.

Where the commodity supplier station 400 has a video input device of its own, the commodity renewal data are transmitted to the host station 100 as accompanied by the video data and description data of the commodities to be renewed. The host station 100 renews the contents of the video data file 121 and description data file 128 of the video data control section 120 with such video and other data.

[H] Video and Description Data Transmission Processing

The video data and description data created at the video data creator station 500 are transmitted to the host station 100 as follows:

The host station 100 polls the video data creator station 500 to find out if there are new video and/or description data.

If there are new data, the video data creator station 500 reads the video data and description data from the video data file 514 and description data file 516, respectively, and transmits them in a batch to the host station 100 after transmission processing. The data thus transmitted are forwarded on the video data control section 120 where the video data are stored in the video data file 123 and to the description data in the description data file 128. The video data stored in the video data file 123 are stored in the video file 121 after being converted into the analog signal. Similar processing is carried out where the video and description data are transmitted directly from the commodity supplier station 400.

[l] Commodity Retrieval Processing

Example of commodity retrieval processing by the commodity information retrieval system according to this embodiment will be described next.

Prior to description of specific examples of retrieval processing, the commodity data set to each commodity for commodity retrieval will be described.

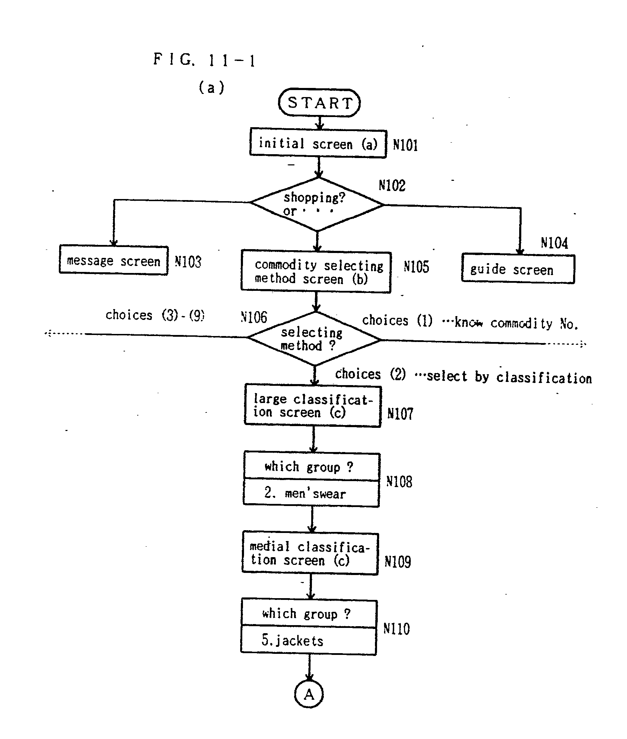

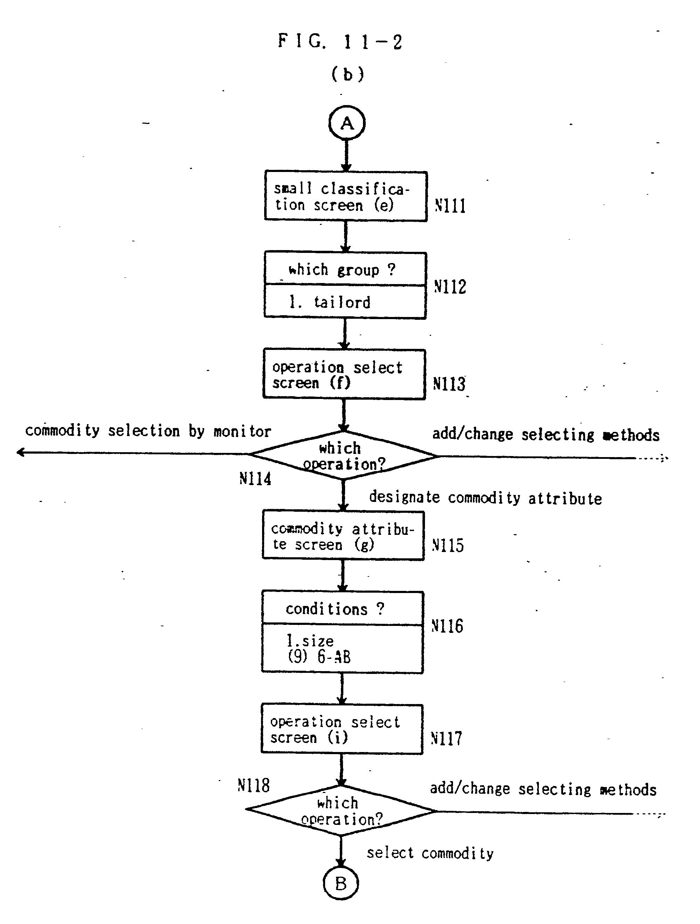

Referring to Fig. 10, the commodity data include commodity codes as shown at (a) of Fig. 10, attribute key codes as at (b), and free key codes as at (c).

The commodity codes include large classification codes for broadly classifying the commodities for retrieval into about 20 large groups, medial classification codes for classifying each large group into about 20 intermediate groups, small classification codes for classifying each intermediate group into about 20 small groups, and individual commodity codes for identifying individual commodities belonging to each small group. The number of groups resulting from each classification is not limited to the above example but may be selected as desired.

The attribute key codes are determined according to commodity attributes such as commodity sizes, colors, materials and prices.

The free key codes are provided for allowing users to retrieve commodities according to their sense, taste or purpose of purchase, thereby retrieving desired commodities promptly and accurately. The free key codes are used in the commodity retrieval independently of or in combination with the commodity codes. In this embodiment, the free codes, broadly, are assigned to the contents set forth hereunder. The following free key codes may be set in a plural number to each commodity. The following setting is only one example, and assignment of the free key codes may be varied as desired.

[1] A Codes: Select from Special Plans

These are codes set to commodities forming the subjects of special plans offered by the commodity suppliers or the like. Specifically, these codes are assigned to features as set out in Table 1.

Table 1

| A Codes | Select from Special Plans |
|---------|---------------------------|
| A01 | Special Products of Hokkaido |
| A02 | Spring Release of New Cars |
| A03 | Spring Release of Ladies' Garments |
| A04 | Sale of Children's Wear |
| ... | ............. |

(2) B Codes: Have Favorite Senses

These are codes for classifying commodities according to the favorite senses of users. Specifically, these codes are assigned to senses as set out in Table 2.

Table 2

| B Codes | Have Favorite Senses |
|---------|----------------------|
| B01 | High Technology |
| B02 | High Touch |
| B03 | Cheap Chic |
| B04 | High Grade |
| B05 | Romantic |
| B06 | Retrospective |
| B07 | Traditional |
| B08 | Natural |
| B09 | Sporty |
| B10 | Simple |
| ... | ....... |

(3) C Codes: Scrupulous about Age

These are codes for classifying commodities according to the age brackets to which users belong. Specifically, these codes are assigned to age brackets as set out in Table 3.

Table 3-1

| C Codes | Scrupulous about Age |
|---------|----------------------|
| C01 | Male: 0 to 5 years |
| C02 | Male: 6 to 11 years |
| C03 | Male: 12 to 17 years |
| C04 | Male: 18 to 25 years |
| C05 | Male: 26 to 35 years |
| C06 | Male: 36 to 50 years |
| C07 | Male: 51 to 70 years |
| C08 | Male: 71 years and above |

Table 3-2

| C Codes | Scrupulous about Age |
|---------|----------------------|
| C09 | Female: 0 to 5 years |
| C10 | Female: 6 to 11 years |
| C11 | Female: 12 to 17 years |
| C12 | Female: 18 to 25 years |
| C13 | Female: 26 to 35 years |
| C14 | Female: 36 to 50 years |
| C15 | Female: 36 to 50 years |
| C16 | Female: 36 to 50 years |
| C17 | Female: 51 to 70 years |
| C18 | Female: 71 years and above |

(4) D Codes: Have Fixed Gift Purpose

These are codes for classifying commodities according to the gift purpose. Specifically, these codes are assigned to purposes as set out in Table 4.

Table 4

| D Codes | Have Fixed Gift Purpose |
|---------|-------------------------|
| D01 | Wedding |
| D02 | Congratulatory on Birth |
| D03 | Seasonal Festival |
| D04 | School Entrance |
| D05 | School Graduation |
| D06 | Employment |
| D07 | Wedding Commemoration |
| D08 | Longevity |
| D09 | Return Gift |
| D10 | Memorial Service |
| ... | ....... |

(5) E Codes: Have Fixed Gift Purpose

These are codes for classifying commodities according to the trends relating to commodities. Specifically, these codes are assigned to trends as set out in Table 5.

Table 5

| E Codes | Trend-Conscious |
|---------|-----------------|
| E01 | eat simple foods |
| E02 | eat alone |
| E03 | glut |
| E04 | eat little |
| E05 | play alone |
| E06 | informatize |
| E07 | for 24 hours a day |
| E08 | systematize |
| E09 | for light weight and smallness |
| E10 | globalize |
| ... | ....... |

(6) F Codes: Image from Relevant Places

These are codes for classifying commodities according to the the places with which the commodities are associated. Specifically, these codes are assigned to places as set out in Table 6.

Table 6

| F Codes | Image from Relevant Places |
|---------|----------------------------|
| F01 | Living-Room |
| F02 | Dining-Room |
| F03 | Kitchen |
| F04 | Bathroom |
| F05 | Toilet |
| F06 | Closet or Shed |
| F07 | Bedroom |
| F08 | Study |
| F09 | Japanese Tatami-Room |
| F10 | Children's Room |
| ... | ....... |

(7) G Codes: Want Various Functions

These are codes for classifying commodities according to the various functions of the commodities. Specifically, these codes are assigned to functions as set out in Table 7.

Table 7

| G Codes | Want Various Functions |
|---------|------------------------|
| G01 | Greatly Improved Safety |
| G02 | Greatly Improved Delicacy |
| G03 | Greatly Improved Live Reproducibility |
| G04 | Greatly Improved Utility |
| G05 | Greatly Improved Surprising Effect |
| G06 | Greatly Improved Recreation |
| G07 | Greatly Improved Comfort |
| G08 | Greatly Improved Economy |
| G09 | Greatly Improved Operability |
| G10 | Greatly Improved Durability |
| ... | ....... |

examples of commodity retrieval will be described next. Since the commodity retrieval has many divergent sequences, three typical examples will be described hereinafter.

First Example

In the first example, the user searches commodities in the order of the large, medial and small commodity classifications and commodity attributes, observes selected commodities on the monitor, and selects which commodity or commodities to purchase in the end.

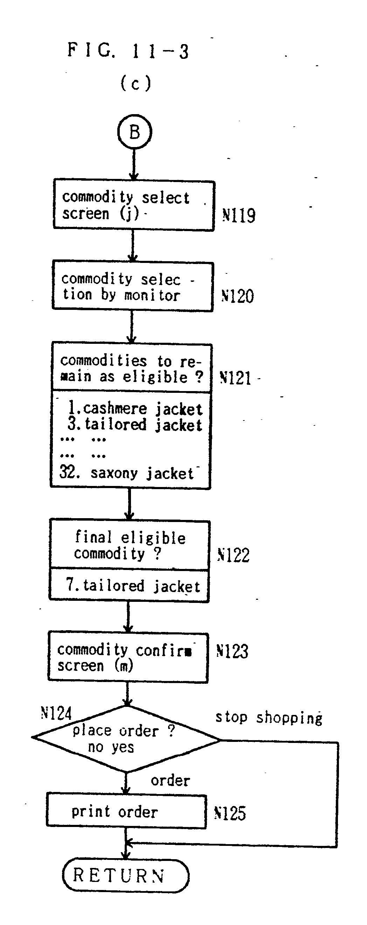

The description will be made referring to Figs. 11-1 through 11-3 showing a flow chart of commodity retrieval and to figs. 14-1 through 14-10 showing displays given on the touch screen as various steps of the retrieval are executed. The finger marks in Figs. 14-1 through 14-10 indicate positions on the touch screen touched by a finger of the user (i.e. choices made), and are not part of the displays made on the screen. The numerals in the finger marks indicate the sequence of operation.

In carrying out the commodity retrieval at step S108 of Fig. 9-1, the initial screen (a) of Fig. 14-1 is displayed on the touch screen 213 at step N101. The initial screen (a) prompts the user to select (1) shopping, (2) guide from the shop, or (3) message at step N102.

If the "message" is selected, a "message" screen (not shown) is displayed at step N103. If the "guide from the shop" is selected, a "guide" screen (not shown) is displayed at step N104.

If the "shopping" is selected, a "commodity selecting methods" screen (b) is displayed at step N105. This screen (b) prompts the user to designate one of the commodity selecting methods by means of choices (1)-(9) at step N106.

Choice (1) is designated by a user who already knows the code of the commodity he or she wants to purchase. Choice (2) is designated when a commodity to be purchased is retrieved through the commodity classification. Choices (3) to (9) are selected when commodities are retrieved according to senses, tastes and the like of the user.

In this example, choice (2) is designated for retrieving commodities by the commodity classification. For designating choice (2), the user touches the choice (2) key (finger mark (1)) and then touches a "confirm" key at the to of the righthand side of the screen (finger mark (2)).

The "confirm" key acts as a control key for advancing the screen to the next stage or, if there is no next stage, reinstating the initial screen (a). The "help" key is for use when the user does not know how to operate the touch screen. When this key is touched, detailed explanations of the operation are displayed on the touch screen. The "selections" key is used for displaying the selections the user has made in his or her commodity retrieval. The "correct" key is used for correcting wrong selections. The "stop shopping" key is used for discontinuing the commodity retrieval and other operations. When this key is touched, the touch screen returns to the initial screen (a).

When choice (2) is designated for carrying out the retrieval by the commodity classification, a "large classification" screen (c) appears on the touch screen at step N107. This screen (c) prompts the user to select one of the large groups at step N108. The indication "There is next page" on the screen (c) means that this classification is shown on a plurality of screens. If the user touches a "next page" key on the righthand side, a second "large classification" screen is displayed. If the user touches a "previous page" key, a previous screen is displayed.

If, for example, choice (2) (men's wear) and the "confirm" key are touched, a medial classification screen (d) for men's wear appears on the touch screen at step N109. This screen (d) prompts the user to select a medial group at step N110. The "previous classification" key at the bottom on the righthand side of the screen (d) is a control key for returning to a previous classification screen (the large classification in this case). This key is touched when a wrong selection has been made from the large classification, so that the user may select a right group by returning to the large classification screen.

If, for example, choice (5) (jackets) and the "confirm" key are touched, a small classification screen (e) for jackets appears on the touch screen at step N111. This screen (e) prompts the user to select a small group at step N112.

When one of the choices is selected from the small classification screen (e) and then the "confirm" key is touched, an operation select screen (f) is displayed at step N113. This screen (f) prompts the user to select one of three choices at step N114.

Choice (1) is selected when the user wants to select a commodity while watching the monitor 232 shown in Figs. 4 and 5. Choice (2) is selected when the user wants to narrow down the commodities in one of the small groups by designating commodity attributes such as sizes and colors. Choice (3) is selected when the user wants to add or vary commodity selecting methods.

If, for example, choice (2) is selected, a commodity attribute screen (g) for the "tailored" selected from the small classification is displayed at step N115. This screen (g) asks the user what conditions he or she wishes to set to (1) size, (2) color, (3) material, and (4) price (step N116).

These commodity attributes (1)-(4) are displayed on an upper half of the screen, with the lower half displaying conditions to be designated for each attribute. In the illustrated example, the screen (g) is in the state for designating conditions for the "material". The conditions include (1) 100% wool, (2) 100% silk, (3) wool-silk mixture, (4) polyester mixed, and (5) others. If, for example, (1) 100% wool is selected, "(1) 100% wool" is displayed at the right- hand side of "(3) material" on the upper half of the screen (g). In the illustrated example, (9) 6-AB has already been selected for the "size" and gray colors for the "color", and accordingly these designations are also shown on the upper half of the screen (g).

When "(4) price" is touched as the next commodity attribute, the lower half of the screen (g) changes and a screen (h) appears. The user sets a desired range of commodity prices by touching numeric keys included in the lower half of the screen (h). Then the user touches a "decide" key under the numeric keys, whereupon the desired range of prices as input appears at the righthand side of the "price" on the upper half of the screen (h). When the user touches the "confirm" key at the righthand top, the screen (h) switches to an operation selecting screen (i) prompting the user to select a next operation (step N118).

Assume here that choice (1) is designated for selecting a commodity from the monitor screen (step N119). Once choice (1) is designated, the commodity retrieval conditions are established.

In this example, selections from the large, medial and small commodity classifications and the commodity attributes have been made, which determine the large, medial and small classification codes and the attribute key codes. Then a group of commodities having these codes are read out of the commodity data file 210 shown in Fig. 4, and displayed on a screen (j) (step N119). This screen (j) prompts the user to select eligible commodities (step N121).

The number of retrieved commodities is given on top of this screen (j) (32 commodities in this example). Where the pertinent commodities exceed 32, the commodities are automatically restricted to 32 most frequently ordered commodities by referring to the demand data as described hereinbefore.

Screen (j) shows the names of 12 commodities out of the 32, and the remaining 20 commodities are included in the next page and the third page.

When the commodity retrieval is completed, the video request processing is carried out as described with reference to Fig. 9-2. As a result, the video data and description data of these commodities are set to the video buffer memory 226.

When the user touches the "monitor" key on the screen (j), the video data of commodities Nos. 1 through 4 are read out of the video buffer memory 226, and their images are displayed in the split mode on the monitor 232. When the user touches the "monitor" key again, images of commodities Nos. 5 through 8 appear on the monitor 232. Thus, by repeatedly touching the "monitor" key, the user may select commodities while watching the commodity images.

The monitor No. keys included in the screen (j) are for the user to select one of the four commodities displayed on the monitor 232.

The "magnify" key is for use when one of the four commodity images is enlarged to fill the entire monitor 232. When the user touches the "magnify" key and then a "monitor No. key" ("2" for example, the image of the designated number (in this example, the image shown on the upper right frame of monitor 232) is enlarged.

The "commodity description" key is used when the user wants to look at the description of a commodity displayed on the monitor 232. When the user touches the "commodity description" key and then one "monitor No. key", the description data of the corresponding commodity is read out of the video buffer memory 226. At this time, the image display alongside the image designated by this "monitor No. key" (for example, the image of monitor No. 2 if monitor No. 1 is touched) disappears and the commodity description is displayed instead. The user obtains commodity information in greater detail by referring to this description.

The "select eligible" key is used for designating the commodities to the user's liking (eligible commodities) from among the retrieved commodities. The user touches the "select eligible" key and a "monitor No. key" when one of the four commodities displayed on the monitor 232 is selected as eligible for purchase. An asterisk or star (*) is displayed at the lefthand side of the name of each commodity selected as eligible (see screen (k)).

This embodiment allows the eligibility selection up to four times for narrowing down a plurality of eligible commodities. When the first eligibility selection is over and the user touches a "next eligible" key on the righthand side of screen (k), the touch screen changes to screen (1). This screen (1) shows 12 commodities selected in the first eligibility selection. If a "previous eligible" key is touched in this state, the screen (k) is reinstated for making the first eligibility selection all over again.

When the user touches the "monitor" key on the screen (1), the monitor 232 displays the first four, Nos. 1, 3, 5 and 6, of the 12 commodities emerging from the first eligibility selection. When the user touches the "monitor" key again, the next four commodities, Nos. 7, 10, 12 and 15, are displayed. If the user wants to select the commodity of monitor No. 1 (i.e. commodity No. 7) a second time, the user may just touch the "select eligible" key and "monitor No. 1" as for the first eligibility selection. As a result, a star (*) is added in the eligibility column against commodity No. 7 on the screen (1) (step N122).

The user touches the "confirm" key at the top right of the screen (1) if he or she has decided on the commodity to purchase (commodity No. 7 in this example) through the second eligibility selection. Then the screen changes to a screen (m) displaying the commodity number and brandname of the selected commodity (step N123). If there are a plurality of commodity affixed with two stars (**), their commodity numbers and brandnames are displayed.

When the screen (m) appears, the user decides whether to buy the commodity or not (step N124). If the user decides to buy the commodity, he or she touches the "confirm" key at the top right of the screen. Then the sequence moves to step N129 (corresponding to step S118 in Fig. 9-1) for printing an order slip. If the "stop shopping" key at the righthand side of the screen (m) is touched at step N124, the touch screen returns to the initial screen (a).

Second Example

In the First Example, the selection of a small group on the screen (e) was followed by the selection of choice (2) on the screen (f) (step N114) to designate commodity attributes. In the Second Example, the commodity group selection is followed by selection of choice (3) on the screen (f) for adding or varying commodity selecting methods. This sequence will be described hereinafter.

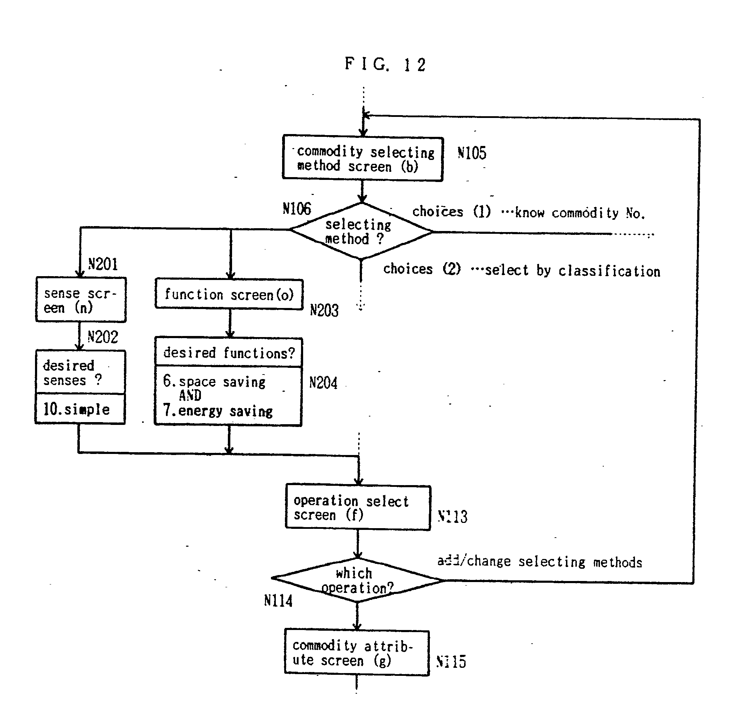

Fig. 12 shows a flow chart of the commodity retrieval carried out in the Second Example. The parts overlapping the First Example are omitted from the flow chart, and like steps are labeled with like numerals with respect to Figs. 11-1 through 11-3.

If the operation to add or vary commodity selecting methods is selected at step N114 of the First Example, the program returns to step N105 to display the "commodity selecting methods" screen (b) shown in Fig. 14-1. Assume here that choice (4) (Have Favorite Senses) is selected. Then the touch screen displays a "senses" screen (n) at step N201. This screen (n) prompts the user to select a desired sense at step N202.

The user is allowed to select a plurality of senses (1) to (10) displayed on the "senses" screen (n). The user can select between an AND process for selecting commodities having all the selected senses, and an OR process for selecting commodities having at least one of the selected senses. When selecting the AND process, the user touches an AND key at the right side of screen (n), a plurality of desired choices, and then the "confirm" key. When selecting the OR process, the user touches an OR key at the right side of screen (n), a plurality of desired choices, and then the "confirm" key. If neither the AND process nor the OR process is selected, the commodity retrieval is automatically carried out by the AND process.

It is assumed that choice (10) (Simple) is selected. Then, at step N113, the operation select screen (f) is displayed again on the touch screen for confirmation purposes, prompting the user to select an operation (step N114).

At this time the user touches the choice (3) key on the screen (f) if he or she wants further commodity selecting methods. The touch screen then returns once again to the commodity selecting methods screen (b) at step N105, and prompts the user to select a commodity selecting method at step N106.

If choice (9) (Want Various Functions) is selected from the screen (b), the program moves to step N203 to display a function (o), which prompts the user to select particularly desirable functions at step N204. In this example, the user is selecting two functions, choice (7) (greatly improved comfort) and choice (10) (greatly improved durability), by the AND process.

When the additional designation of a commodity function is completed and the "confirm" key is touched, the touch screen again displays the operation select screen (f) at step N113, which prompts the user to select an operation at step N114.

If choice (2) (designation of commodity attributes) is selected then, the commodity attribute screens (g) and (h) are displayed at step N115 as in the First Example, prompting the user to set desired conditions. After the commodity attribute designation, the screen (i) is displayed as in the First Example. If choice (1) (Select Commodities from Monitor) is selected, the screen (j) is displayed for the commodity retrieval as in the First Example.

In the Second Example, the favorite senses (B codes) and commodity functions (G codes) are designated besides the large, medial and small commodity groups and the commodity attributes. Consequently, the commodities having these codes are retrieved from the commodity data file 210 shown in Fig. 4.

In this example, the names of the retrieved commodities are displayed as on a screen (p), for example. When the "selections" key at the righthand side of the screen (p) is touched at this time, a "selections" screen (q) is displayed. From this screen (q) the user can confirm the selections having been made. If the user touches a "previous screen" key, the touch screen returns to the screen (p) for the user to select desired commodity or commodities. The operation for selecting commodities is the same as in the First Example, and its description is omitted here.

Third Example

In the First and Second Examples, the commodity selection was based on the retrieval through the commodity classifications. In the Third Example, desired commodities are retrieved and selected by the functions from the beginning without going through the commodity classifications.

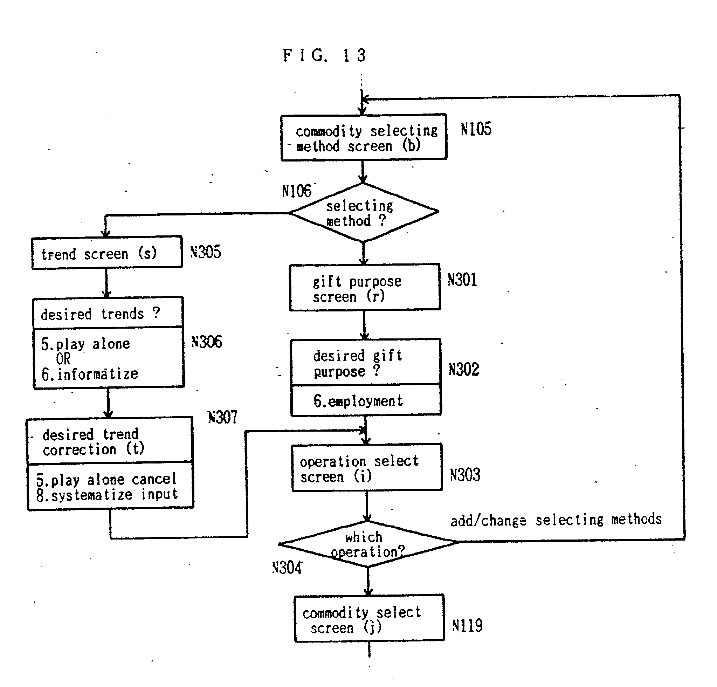

Fig. 13 shows a flow chart of the commodity retrieval carried out in the Third Example. The parts overlapping the First Example are omitted from the flow chart, and like steps are labeled with like numerals with respect to Figs. 11-1 through 11-3.

If choice (6) (Have Fixed Gift Purpose) is selected from the selecting methods screen (b), a gift purpose screen (r) is displayed at step N301, which prompts the user the select a gift purpose at step N302.

If choice (6) (Congratulatory on Employment) is designated, for example, the operation select screen (i) is displayed at step N303, which prompts the user to select an operation at step N304. The choices for designating the commodity attributes are not displayed at this stage since the attribute designation presumes selection of a small group of commodities.

If choice (2) (Add or Vary Commodity Selecting Methods) is selected from the screen (i), the commodity selecting methods screen (b) is displayed again. If choice (7) (Trend-Conscious) is selected at this time, a "trend" screen (s) is displayed at step N305, which prompts the user to select a desired trend at step N306.

The commodity trends may also be selected by the AND process or OR process. In the illustrated example, choice (5) (Play Alone) and choice (6) (Informatize) are selected from the screen (s) for the OR process. If choice (5) is touched by mistake, the user may touch a "correct" key on the righthand side as shown on a screen (t) and then the choice (5) key, thereby cancelling the selection of choice (5). Thereafter the user touches a desired choice key (choice (8) (Systematize), for example) and then the "confirm" key to establish the desired commodity trends (step N307).

Once the desired commodity trends are established, the operation select screen (i) is displayed at step N303. If choice (1) (Select Commodities from Monitor) is selected from the screen (i), retrieval is made from the commodity data file 210, based on the selections made by the user, of commodities having D06 code (gifts suited for employment) or E08 code (commodities having the systematization trend). Thereafter the commodity selection is made as in the First Example.

As described above, when retrieving desired commodities according to the present invention, the commodity retrieval may be made having regard to the users' senses, tastes and purposes of purchase in addition to designation of the large, medial and small commodity classifications and the commodity attributes. This system allows the users to retrieve desired commodities quickly and reliably.

Another preferred embodiment of the present invention will be described next. The commodity information retrieval system according to this embodiment has the following features:

(1) Each user station 200 maintains retrieval history data as to the processes through which the users have selected the desired commodities and the time periods the users have consumed at each retrieval step. The host station 100 collects such retrieval history data from the user stations 200 and analyzes these data for grasping market trends and improving the retrieval system.

(2) The retriever touch screen 213 at each user station 200 has an improved display mode to facilitate operations by the users.

(3) The multi-scan monitor 232 at each user station 200 displays commodity images such that a selected commodity image is fixed to one of the split screen sections, with remaining commodity images shown on the other screen sections by scrolling. This facilitates comparison between the commodity images.

As in the foregoing embodiment, this embodiment comprises a host station 100, user stations 200, a repeater 300, a commodity supplier station or stations 400, and a video data creator station 500.

The host station 100 includes a retrieval history data control section 180 (Fig. 3) in addition to the sections noted in the foregoing embodiment.

The retrieval history data control section 180 includes a history data collecting computer 182, a history data storage file 184, and a history data analyzer terminal 186. The history data collecting computer 182 transmits a retrieval history data collect command to the user stations 200 for transmission of collected retrieval history data therefrom, transmits a data reception complete signal to the user stations 200 when the retrieval history data have been received and stored in the retrieval history data file 184, transmits a history data collection cancel command to the user stations 200 for canceling the retrieval history data collect command transmitted before, and transmits a delete command to the user stations 200 for deletion of the collected retrieval history data stored at the user stations 200.

As shown in Fig. 4, each user station 200 in this embodiment includes, in addition to the components included in the foregoing embodiment, an icon storage file 215, an icon display attribute file 219, an icon highlight file 217 and a retrieval history data file 242.

The icon storage file 215 is a file for storing, as decoded, icons transmitted from the host station 100.

The icon display attribute file 219 is a file for storing data of icon display attributes indicating the number of icons to be displayed and their arrangement on the touch screen 213 at each retrieval stage.

The icon highlight file 217 is a file for storing icon highlight attributes indicating the manner of highlighting when highlighting one of the icons simultaneously displayed on the touch screen 213.

The retrieval history data file 242 is a file for storing retrieval history data including a series of retrieval items selected through a plurality of stages sequentially selected from the touch screen 213 and time periods consumed by the user in making these selections.

The touch screen 213 in this embodiment displays, in icon form, the retrieval choice items, function keys and the like necessary for retrieving a plurality of commodities. The icons include those showing the retrieval choice items and function keys only in pictorial patterns, and those showing them in pictorial patterns and characters. However, both types of icons comprise image data. The icon storage file 215 stores, along with the icons, explanations of the operations as character data. For expediency, the term "icon" is used in certain sections of the description to follow for embracing both the icons as pictorial data and the character data.

Icon highlighting means the display of an icon in a manner distinct from other icons. This may be achieved in various ways such as by changing the color of edges, changing the color of an icon per se, highlighting the icon only, or by highlighting only the characters represented by character data.

The icon data, icon display attribute data, and icon highlight data are created at the video data creator station 500, and transmitted through the repeater 300 to the host station 100 for storage in the video file 121. These data are transmitted through the repeater 300 to each user station 200 to be stored in the respective files 215, 219 and 217 through the front end computer 218.

The retrieval terminal 212 has its own retrieval control software basically independently of the front end computer 218. Its touch screen 213 gives displays based on the icon data, icon display attribute data, and icon highlight data read out of the files 215, 219 and 217 by the front end computer 218. In addition, the retrieval terminal 212 has various functions: a function to actuate the video controller 224 for read ing the video data and description data from the video buffer memory 226 and transferring these data to the display buffer memory 236, functions to read out the images of retrieved commodities for display in the four split screen mode on the touch screen 213, and to switch one image after another for scroll display, a freeze processing function to stop the image designated by the user from scrolling, a function to display the commodity description relating to the frozen image, a magnifying function to display one image over the entire screen, and functions to set and renew a history data collecting mode transmitted from the host station 100, and to control as to whether the retrieval history data should be transmitted to the host station 100 or the data should be deleted from the retrieval history data file 242.

As in the foregoing embodiment, each commodity is affixed with the commodity codes, attribute key codes and free key codes for enabling the commodity retrieval. The retrieval by the free key codes is hereinafter referred to as the free group retrieval.

Further, each retrieval choice item is affixed with codes for enabling the retrieval history data collection. Generally, these codes comprise a code number, and parameters indicating time consumed in selecting the retrieval choice item and the selections made.

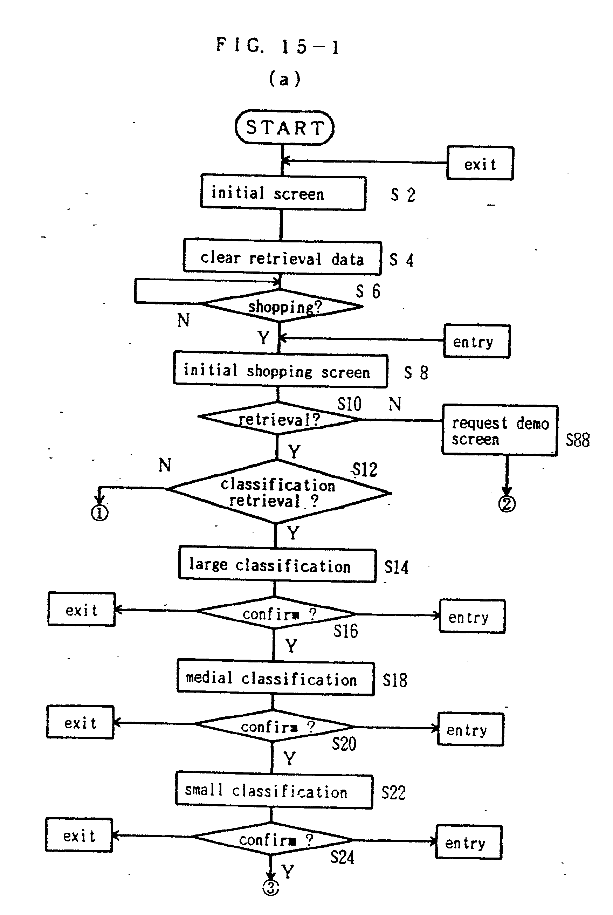

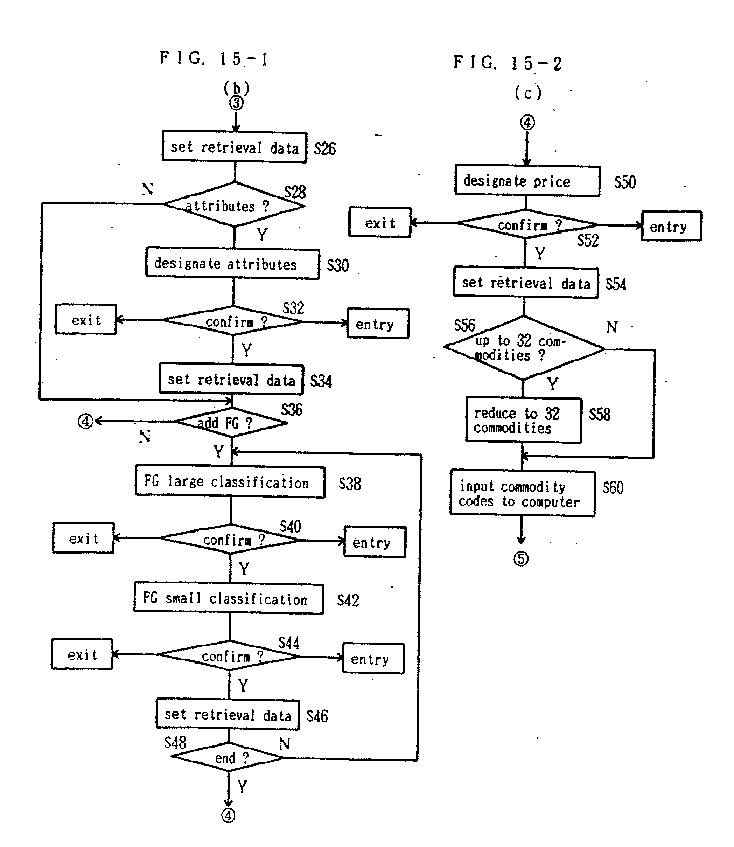

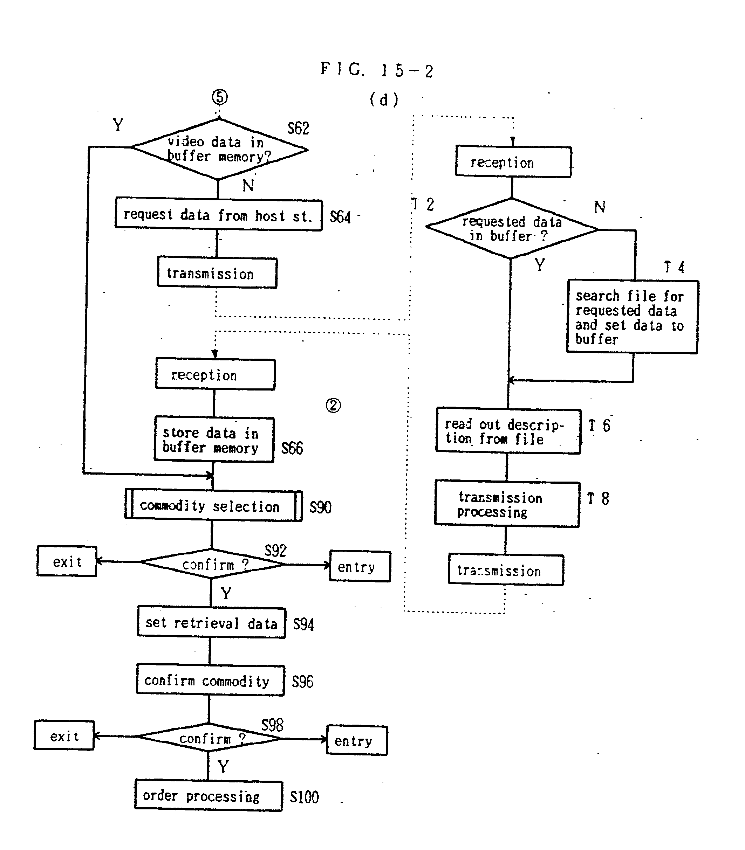

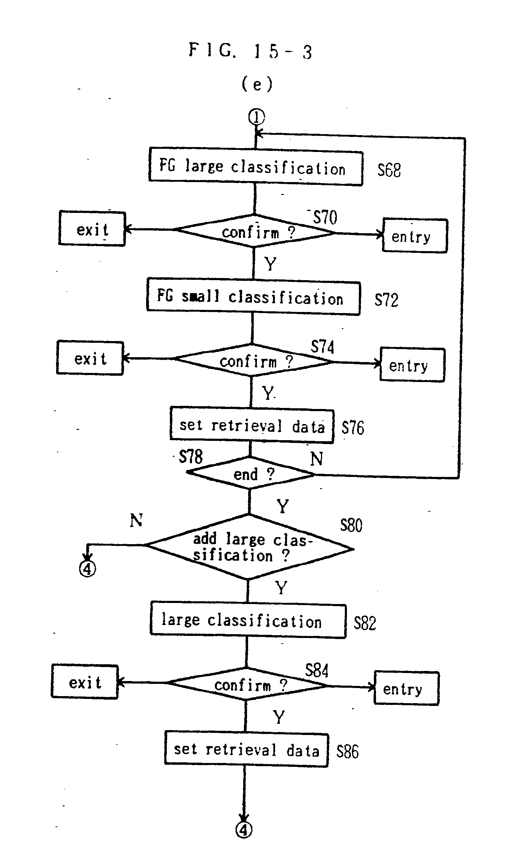

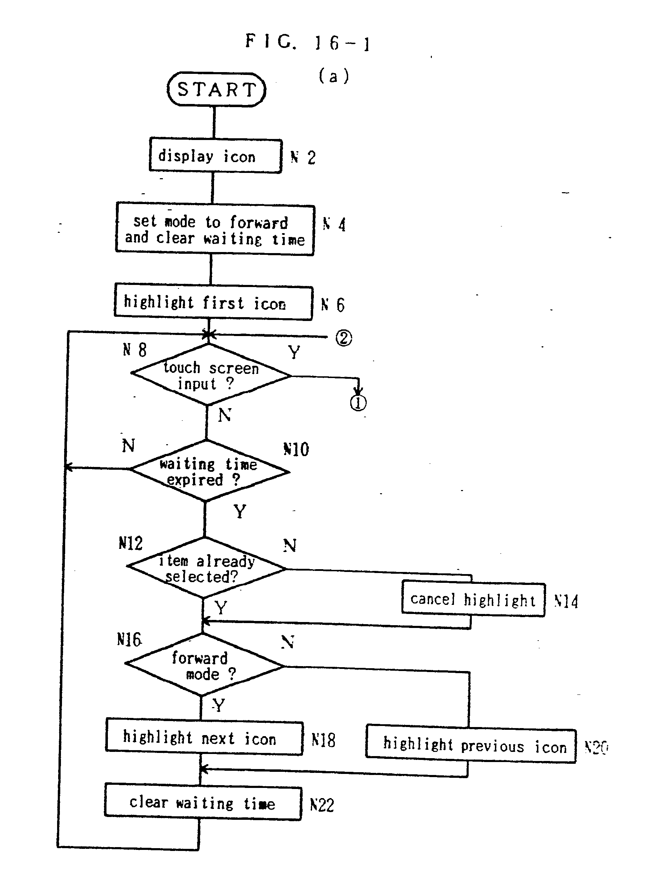

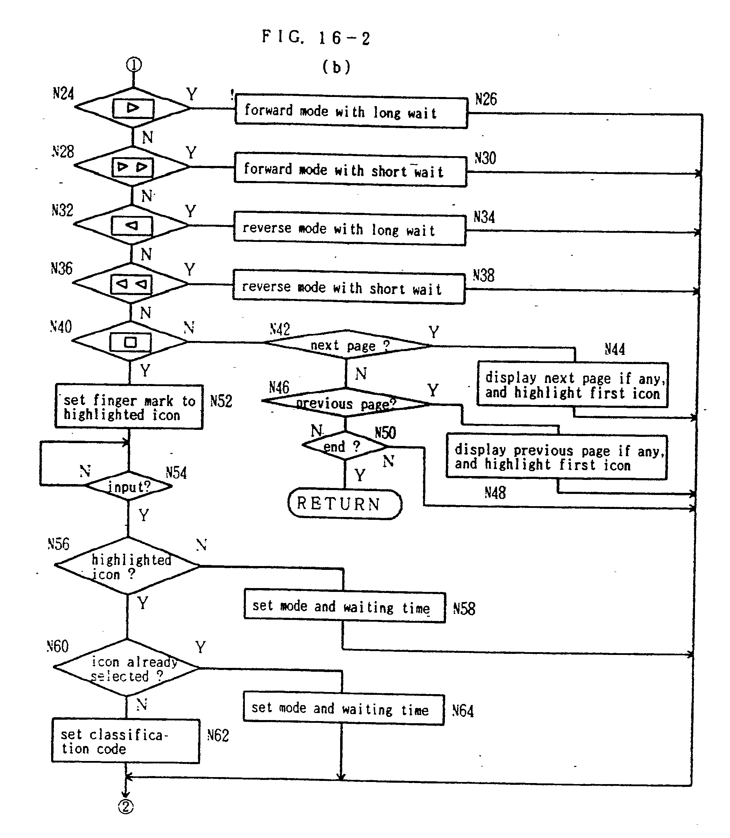

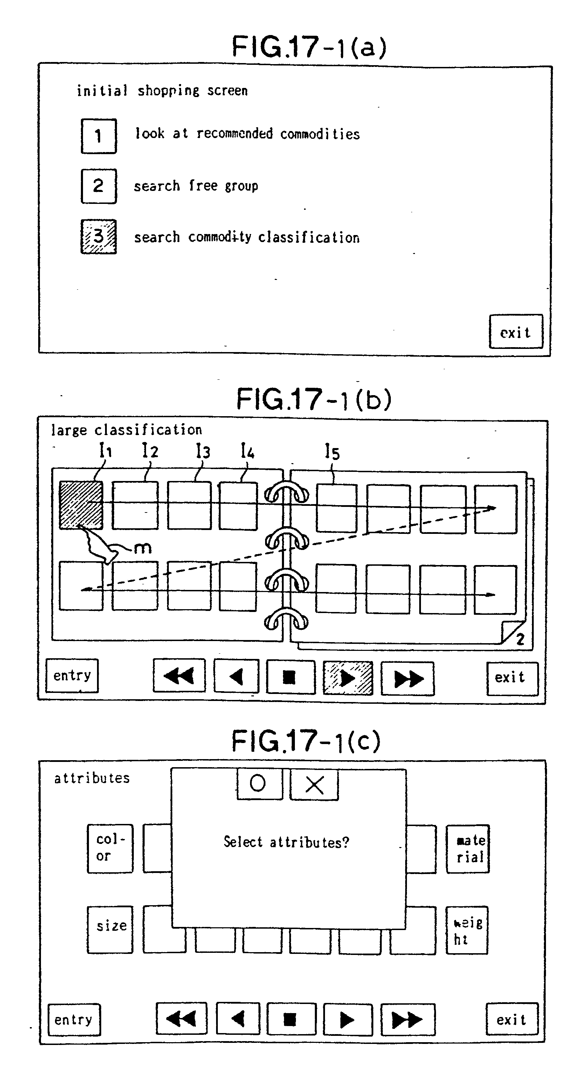

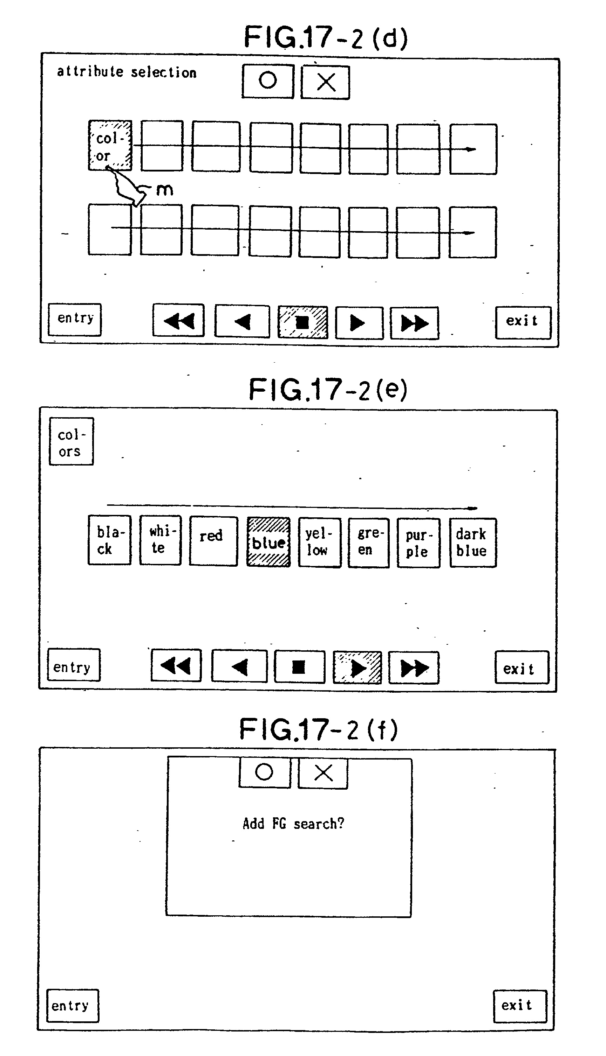

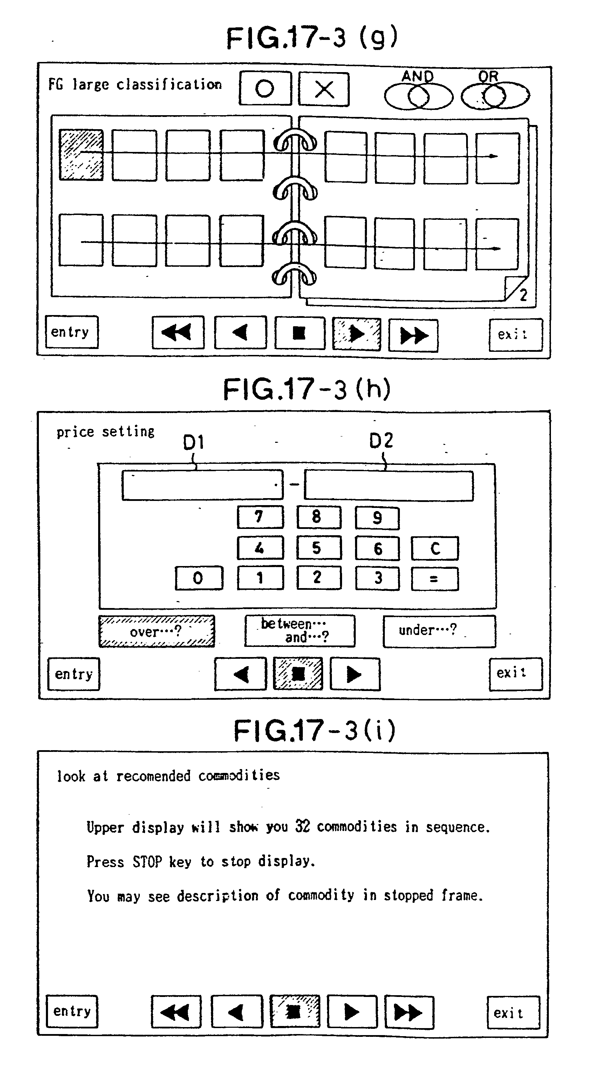

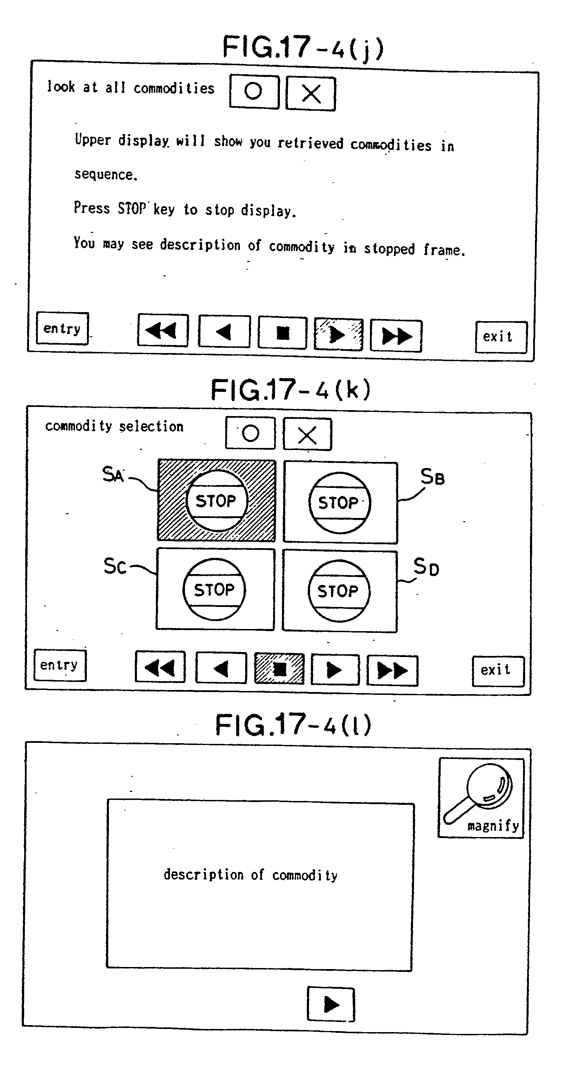

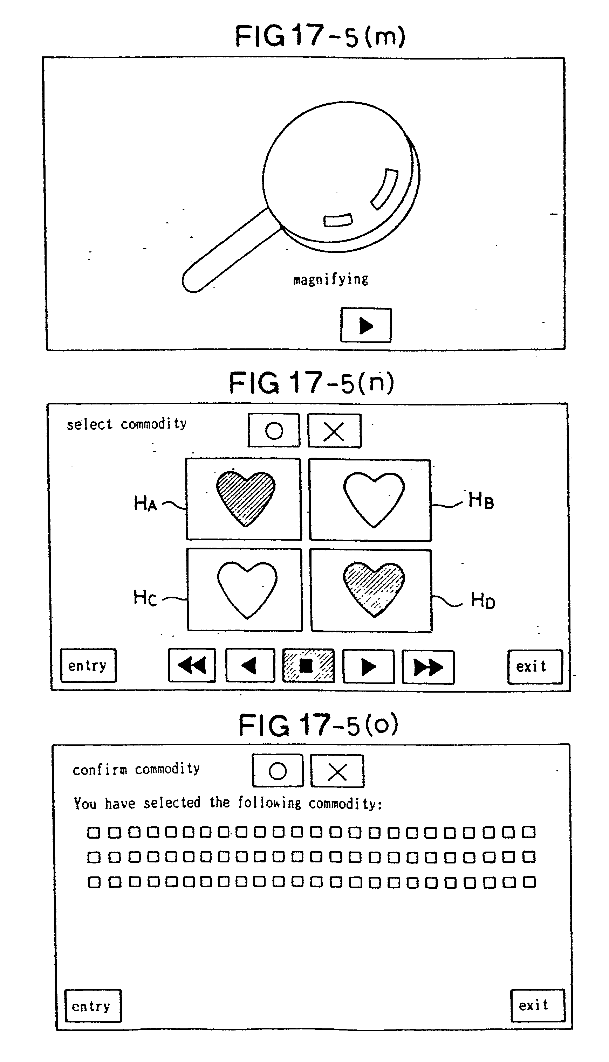

How the system according to this embodiment operates will be described next with reference to Figs. 15-1 through 16-2 showing flow charts and Figs. 17-1 through 17-5 showing touch screen displays.


[A] Selection of Retrieval Choice Items

When power is supplied or when a previous retrieval operation is finished, the touch screen 213 of the retrieval terminal 212 displays an initial screen at step S2, including three menus, (1) message, (2) guide, and (3) shopping. Previous retrieval data are cleared at step S4. Assume here that the "shopping" is selected (YES at step S6).

Then the touch screen 213 displays an initial shopping screen (a) as shown in Fig. 17-1. This screen (a) includes (1) "look at recommended commodities", (2) "search free group", and (3) "search commodity classification" (step S8).

The user touches choice (1) when he or she wants to look at recommended commodities (demonstration) transmitted from the host station 100. Choice (2) is touched when the user wants to make the free group retrieval, i.e. retrieval of commodities according to the taste or sense of the user. Choice (3) is touched when the user wants to search a desired commodity or commodities by the commodity classification. This screen (a) further includes an "exit" key which is touched for reinstating the initial screen.

The following description assumes the case where the user touches choice (3) key for retrieval by the commodity classification. In this retrieval, the user searches commodities in the order of the large, medial and small commodity classifications, commodity attributes, (free group retrieval), and price setting. Then the user observes selected commodities on the multiscan monitor 232, and selects which commodity or commodities to purchase in the end.

When the user touches choice (3) on the initial shopping screen displayed on the touch screen 213, choice (3) is highlighted with a beep. In Fig. 17-1, the highlight is shown by shading. Referring to the flow chart of Fig. 15-1, YES is the answer to step S10 "Retrieval?" and YES to step S12 "Classification Retrieval?".

Then a "large classification" screen (b) as shown in Fig. 17-1 appears on the touch screen 213 at step S14. This large classification screen (b) includes a plurality of icons I1, I2, etc. for large commodity groups to be selected from, such as of men's wear, ladies' wear, sundries and accessories, babies' and children's wear, upholstery and bedding, furniture and household facilities, electric and gas appliances, audio-visual and information equipment, publications and audio-visual software, stationery and religious equipment, and so on. This screen (b) further includes five audio switch type function keys, an entry key and an exit key. The function keys consist of a forward key, a fast forward key, a reverse key, a fast reverse key and a stop key. Each icon Ij includes a pictorial pattern and characters representing the features of the commodities to which the icon corresponds. The highlighting thereof comprises three modes, i.e. highlighting of the pattern only, highlighting of the characters only, and highlighting of both the pattern and characters.

Selection of the choice items from this retrieval screen will be described in detail with reference to the flow charts of Figs. 16-1 and 16-2, and so it will be described only briefly here.

The plurality of icons Ij are all displayed as choice items until a next screen appears. However, only one icon is highlighted at one point of time. With progress of time, the highlight shifts in sequential scroll in the direction in which the icons are arranged, e.g. from icon I1 to icon I2, then to icon I3 and so on.

The user touches the stop key when the icon of the choice the user desires is highlighted. Then the highlighting scroll stops, maintaining this icon in highlight, and a finger mark m appears adjacent the highlighted icon for prompting the user to touch this icon. When the user touches the highlighted icon, this icon is established as the selected choice item (step S16).

When the entry key is touched, the program returns to step S8 for displaying the initial shopping screen. When the exit key is touched, the program returns to step S2 for displaying the initial screen. It is assumed here that "men's wear" has been selected.

After the choice has been made from the large classification screen, a medial classification screen (not shown) appears on the touch screen 213 at step S18. This screen is the same as the large classification screen excepting that here a plurality of icons are displayed as choices for commodities belonging to medial groups.

Where "men's wear" is selected from the large classification, the medial groups given as choice icons include, for example, suits, formal wear, slacks, overcoats, jackets, sweaters and cardigans, shirts, nightwear, underwear, and socks.

The selecting operation carried out on the medial classification screen is the same as on the large classification screen, and is therefore not described again.

Assume here that the user touches the "jackets" icon while in highlight with the scrolling stopped. Then the "jackets" group is established as the selected item (step S20).

After the choice has been made from the medial classification screen, a small classification screen (not shown) appears on the touch screen 213 at step S22. This screen is the same as the large classification screen excepting that here a plurality of choices are displayed for commodities belonging to small groups.

Where the group "jackets" is selected from the medial classification, the small groups given as choices include, for example, tailored, flight, safari, down, blazers, blouson, jumpers and so on, which are displayed in characters.

The choices from the small classification are not displayed in icon form because there is a great number of choices which would require the icon storage file 215 to have a very large capacity. The selecting operation carried out on the small classification screen is also the same as on the large classification screen, and is therefore not described again.

Assume here that the user touches the "tailored" while in highlight with the scrolling stopped. Then the "tailored" group is established as the selected item (step S24).

In accordance with the choices "men's wear", "jackets" and "tailored" selected from the large, medial and small classifications, respectively, the corresponding data are retrieved from the commodity data file 210 and set as retrieval data (step S26).

Next, an attribute selecting screen (c) as shown in Fig. 17-1 appears on the touch screen 213, with a message "Select attributes?", on "O" key (YES key) and an "X" key (NO key), prompting the user to make a selection (step S28).

If the user touches the "X" key, a complex retrieval select screen (f) as shown in Fig. 17-2 appears. If the user touches the "O" key, an attribute select screen (d) as shown in Fig. 17-2 appears. This screen includes icons indicating attributes such as color, size, material and weight, an "O" key, an "X" key, a stop key, a forward key, a fast forward key, a reverse key, a reverse key, a fast reverse key, an entry key and an exit key.

A desired attribute is selected as when selecting a choice item from the large classification screen. It is assumed here that the user touches the stop key when the "color" is highlighted in scrolling, the finger mark m is displayed adjacent the "color", and the user touches the "color" in highlight.

Then a "color" selecting screen (e) as shown in Fig. 17-2 appears on the touch screen 213. This screen (e) displays "black", "white", "red", "blue", "yellow", "green", "purple" and "dark blue" as choices.

It is assumed here that the user touches the stop key when the "blue" is highlighted in scrolling, the finger mark m is displayed adjacent the "blue", and the user touches the "blue" in highlight. As a result, "blue" is established as the selected choice (step S32).

When "blue" is touched, the attribute select screen (d) as shown in Fig. 17-2 is reinstated for allowing the user to select a plurality of attributes. The user touches the "O" key when a desired number of attributes are selected. Then the commodity data agreeing with the attribute "blue" are retrieved from the commodity data set as a result of retrieval carried out at step S26, and are set as retrieval data (step S34).

Thereafter, the complex retrieval select screen (f) as shown in Fig. 17-2 appears on the touch screen 213. This screen (f) asks the user whether or not to add the free group retrieval after completing the retrieval by the classification and attribute (step S36).

If the user touches the "X" key, the program moves to the next stage for a price setting screen. If the user touches the "O" key, a large classification for the free group retrieval screen (g) as shown in Fig. 17-3 appears on the touch screen 213 (step S38).

This screen (g) gives, for example, "select from special plans", "have favorite senses", "scrupulous about age", "have fixed gift purpose", "trend-conscious", "image from relevant places" and "want various functions" as choices for the free group retrieval.

If the user touches the stop key when the character display "have favorite senses" is highlighted in scrolling, the finger mark m appears adjacent this character display. Then if the user touches this character display, "have favorite senses" is established as the selected choice (step S40).

Thereafter, a small classification for the free group retrieval screen (not shown: similar to the screen (g) shown in Fig. 17-3) appears (step S38). This screen gives "high technology", "high touch", "cheap chic", "high grade", "romantic", "retrospective", "traditional", "natural", "sporty" and "simple" in characters as choices belonging to the favorite senses.

Here the user is allowed to select a plurality of the sense choices. The user touches an AND key for searching commodities having all of the selected senses, or an OR key if the user is satisfied with commodities having at least one of the selected senses. If the user touches neither key, the AND processing is automatically carried out.

If, for example, the user wants to select only one choice "simple", he or she touches the stop key when the "simple" is highlighted in scrolling. Then, in accordance with the finger mark m appearing adjacent this character display, the user touches this character display, whereby only the "simple" is established as the selected choice (step S44). As a result, the commodity data agreeing with "simple" are retrieved and set as retrieval data (step S46).

If, for example, the user wants to select two choices "simple" and "romantic", he or she first touches the AND key and then touches the stop key when the "romantic" is highlighted in scrolling. Then, in accordance with the finger mark m appearing adjacent "romantic", the user touches this character display. Next, the user touches the forward key or the fast forward key to resume the scroll. When the "simple" is highlighted, the user touches the stop key. Then, in accordance with the finger mark m, the user touches the "simple" display.

In this way, the "romantic" and "simple" are established as the selected choices (step S44). As a result, the commodity data agreeing with "romantic" and "simple" are retrieved and set as retrieval data (step S46). Then the large classification for the free group retrieval screen (g) is reinstated.

Assume the user touches the "want various functions" choice on this screen. Then a "functions" screen appears on the touch screen 213, showing as choice items "greatly improved safety", "greatly improved delicacy", "greatly improved live reproducibility", "greatly improved utility", "greatly improved surprising effect", "greatly improved recreation", "greatly improved comfort", "greatly improved economy", "greatly improved operability" and "greatly improved durability". Here the user selects one or more functions.

If, for example, "greatly improved comfort" and "greatly improved durability" are selected (step S44), the commodity data agreeing with these two functions are retrieved and set as retrieval data (step S46).

Thereafter, the large classification for the free group retrieval screen (g) is reinstated. If the user touches the "O" key on this screen (step S48), a price setting screen (h) as shown in Fig. 17-3 appears (step S50).

This screen includes "over ...?", "between ... and ...?" and "under ...?" for designating a price range, 0 to 9 numeric keys for setting numeric values, a clear key, a numeric value decide key " = ", an upper limit indicator D1 and a lower limit indicator D2. On this screen, scrolling is effected only for "over ...?", "between ... and ...?" and "under ...?".

If the user wants to set a price range from ¥30,000 to ¥50,000, for example, he or she touches the stop key when "between ... and ...?" is highlighted in scrolling, and then inputs 3, 0, 0, 0, 0 by touching the numeric keys, whereby the lower limit indicator D1 displays 30,000. After confirming this, the user touches the numeric value decide key " = ", and thereafter inputs 5, 0, 0, 0, 0 by touching the numeric keys, whereby the upper limit indicator D2 displays 50,000. After confirming this, the user touches the numeric value decide key " = ".

As a result, the commodity data falling within this price range are retrieved and set as retrieval data (step S54).

Thus, desired commodity data have been narrowed down successively through [commodity classification] large classification (men's wear), medial classification (jackets) and small classification (tailored); [commodity attributes] color (blue); [free group retrieval] large classification (favorite senses), small classification (romantic & simple), large classification (want functions) and small classification (greatly improved comfort & durability); and [price] range (¥30,000-50,000) (step S54).

Next, at step S56, checking is made whether the number of commodities retrieved exceeds 32 (the number of frames in the video buffer memory 226) or not. If the number exceeds 32, 32 most frequently ordered commodities are selected from the retrieved commodi ties by referring to the demand data stored in the demand data storage file 211 (step S58).

The 32 most frequently ordered commodities may be selected at step S58 by transmitting all the retrieved commodity data to the host station 100 and referring to the demand data stored at the host station 100. Where the demand data stored at the host station 100 are used directly, the demand data storage file 211 may be omitted from the user station 200.

The operation moves to step S60 next. An Alternative sequence leading to this step is (a) free group retrieval (with the large and small classifications), commodity classification (only the large classification) and then price selection.

In the sequence (a), steps S68 to S78 are similar to steps S38 to S48. At step S80, a complex retrieval select screen similar to the screen (f) shown in Fig. 17-2 is displayed, but with a message "Add large classification retrieval?". If the user touches the "X" key, steps S50 et seq. are executed for price setting. If the user touches the "O" key, the sequence moves to step S50 for price setting after executing steps S82 to S86 for selecting a choice by the large classification only, and for setting the commodity data agreeing with the selected choice as retrieval data.

After step S58, the commodity codes of 32 or less retrieved commodities are notified to the front end computer 218 (step S60). The front end computer 218 checks whether the video data and description data of the notified commodities are stored in the video buffer memory 226 of the user station 200 by referring to the commodity codes corresponding to these commodities, respectively. (step S62).

If the video data of these commodities are not stored in the video buffer memory 226, a video request to be sent to the host station 100 is created at step S64, which is transmitted on-line to the host station 100.

Upon receipt of the video request, the host station 100 assigns the video request data to the video data control section 120. The video data controlling computer 122 of the video data control section 120 checks if the requested video data are stored in the video transmission buffer 127 (step T2).

If the video data are found, the requested description data are read out of the description data file 128 (step T6). The appropriate video data found in the video transmission buffer 127 and the corresponding description data are put to transmission processing (step T8), and are transmitted to the user station 200 from which the video request has originated.

If the requested video data are not found in the video transmission buffer 127, a high-speed search is made to retrieve the requested video data from the video file 121 by referring to the video data classification data file 126, and these video data are set to the video transmission buffer 127 (step T4). Then the program moves to steps T6 and T8 for transmitting the video and description data.

When the user station 200 having made the video request receives the video and description data, these data are stored in the video frame memory 228 and description frame memory 230 in the video buffer memory 226, respectively (step S66).

The sequence moves to step S90 next. An alternative sequence leading to this step is (b) demonstration (look at the recommended commodities from the host station).

In the sequence (b), the initial shopping screen (a) switches to a "look at recommended commodities" screen (i) as shown in Fig. 17-3, and demonstration video data and corresponding description data are requested from the host station 100. Upon receipt of these data, the sequence moves to step S66.

[B] Selection of Desired Commodity from Retrieved Commodities

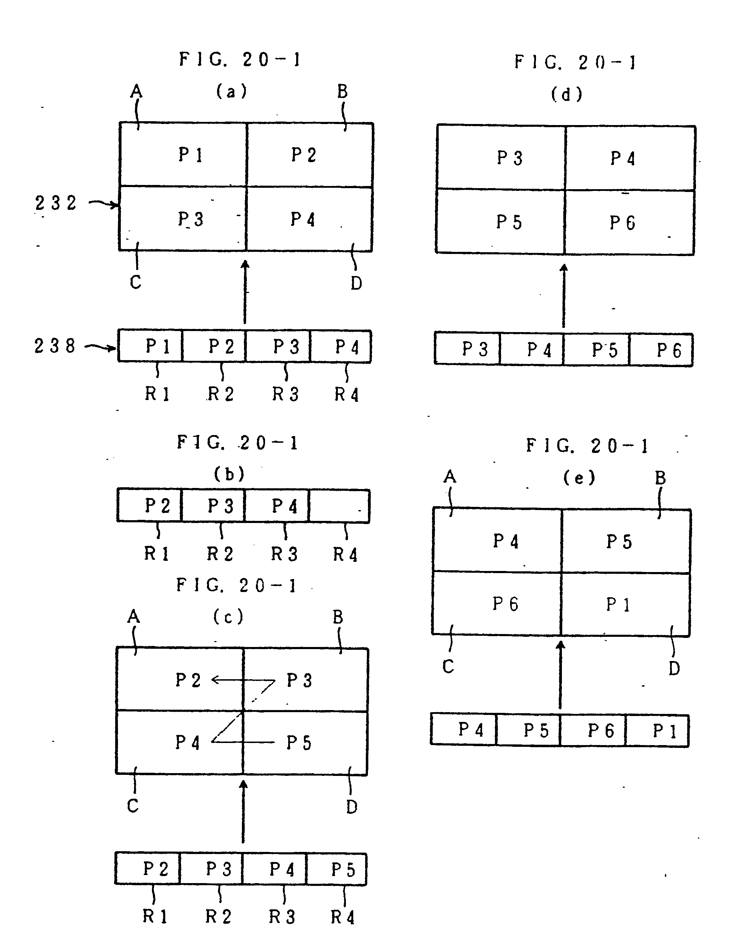

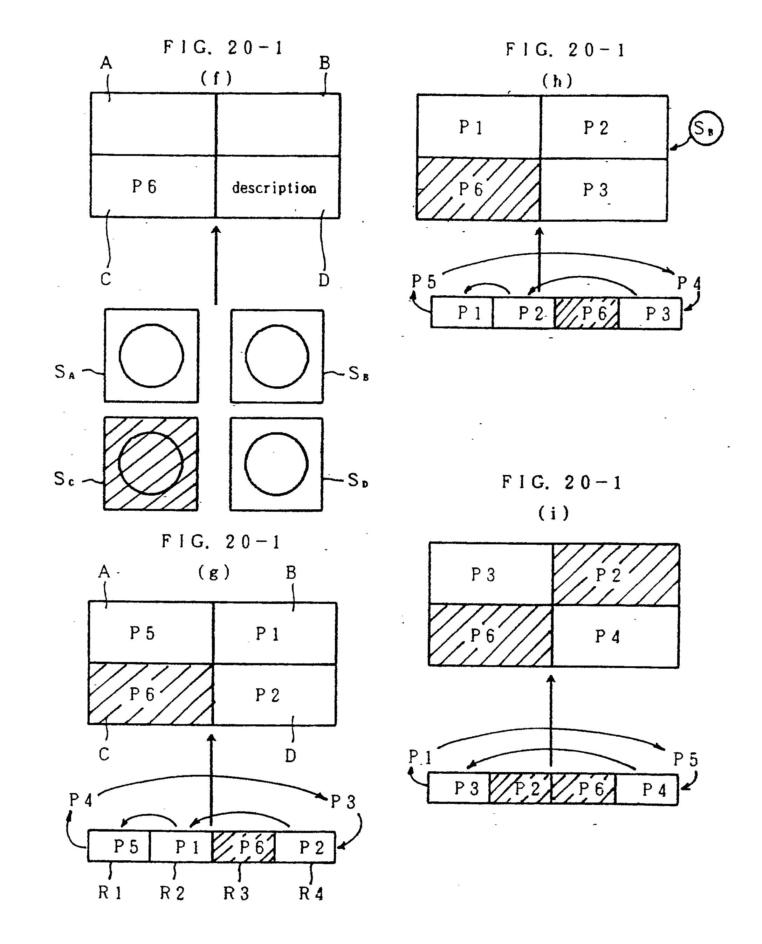

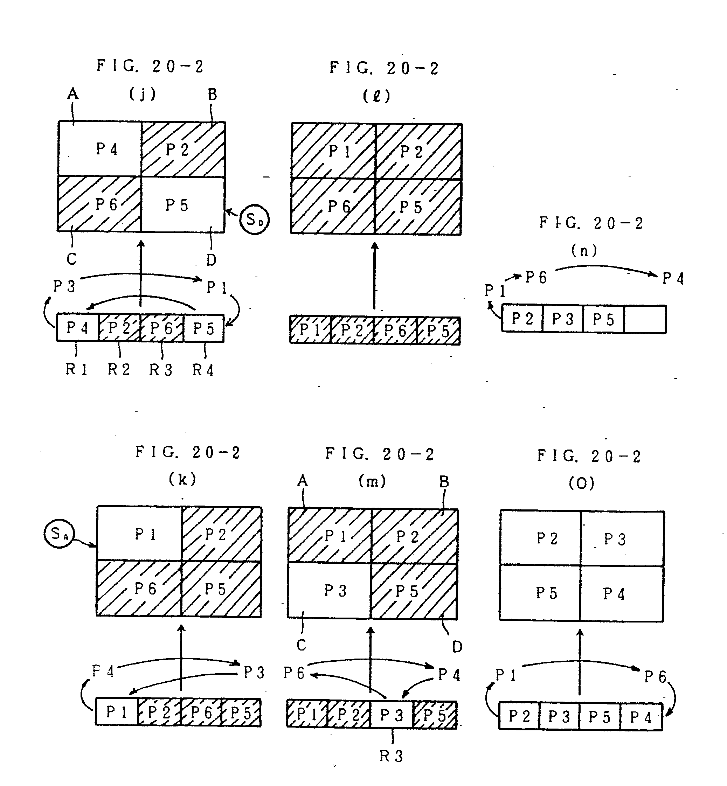

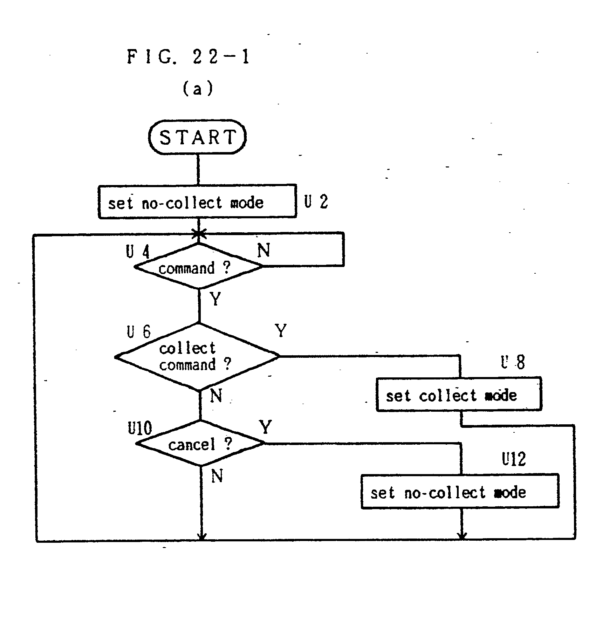

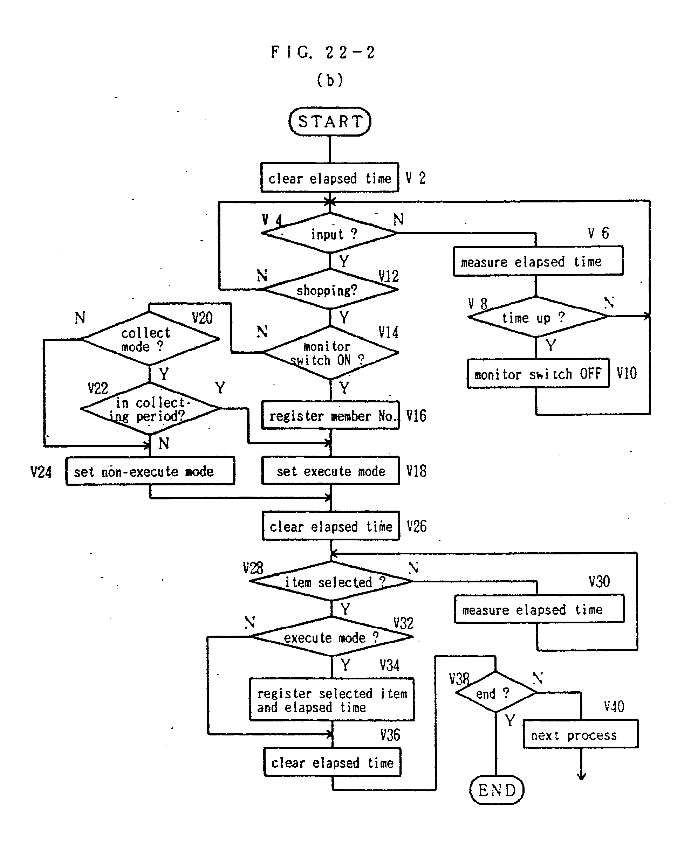

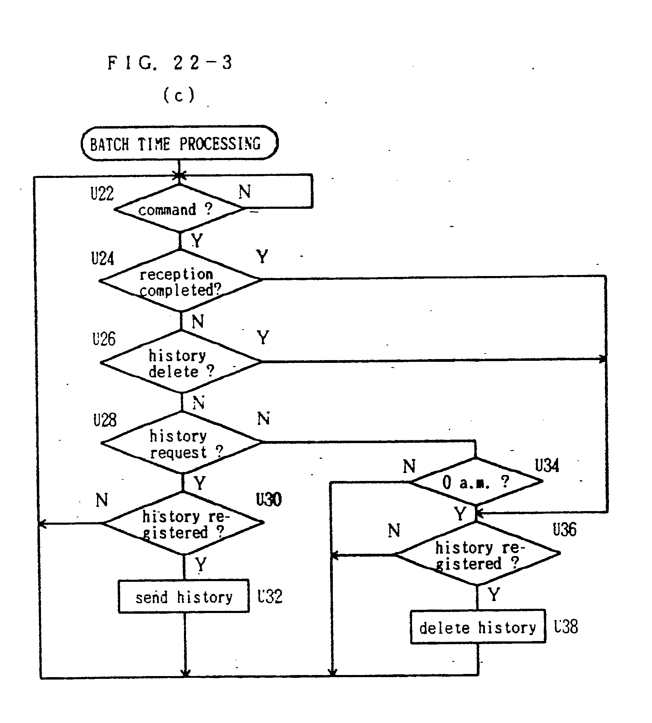

Next, a commodity selecting operation is executed at step S90. In the commodity selecting operation, the user decides on a desired commodity or commodities to purchase by looking at commodity images on the multi-scan monitor 232. This operation will be described in detail later with reference to Figs. 20-1 through 22-3, and so it is described only briefly here.

First, a "look at all commodities" screen (j) as shown in Fig. 17-4 appears on the touch screen 213. If the user touches the "O" key on this screen, a "commodity selection" screen (k) as shown in Fig. 17-4 appears on the touch screen 213. This screen (k) includes icons of "stop commands" SA, SB, SC and SD arranged to correspond to the four sub-frames on the multi-scan monitor 232. These icons are not scrolled.

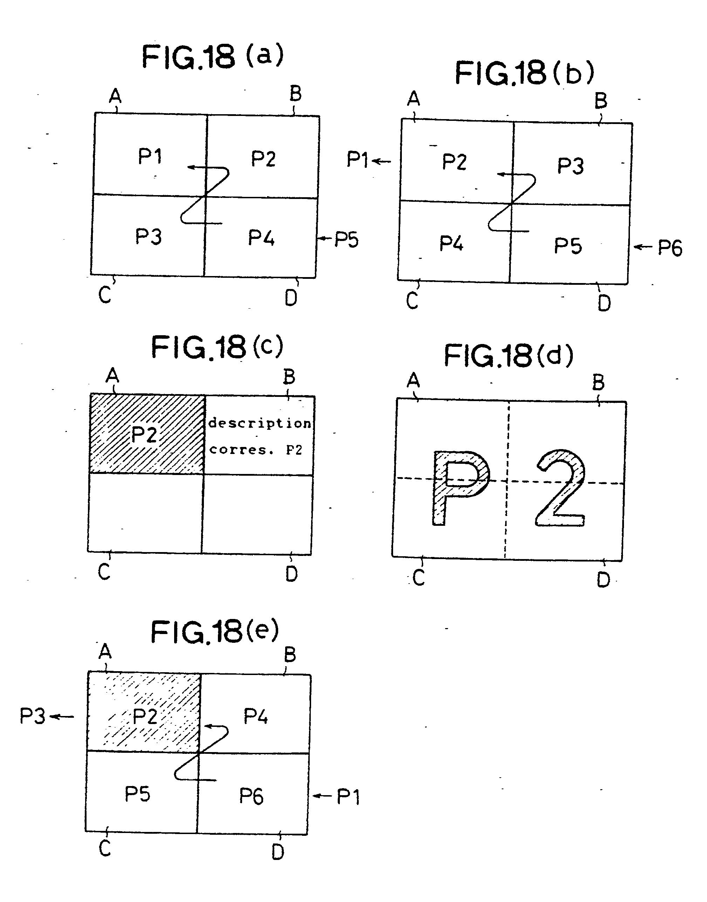

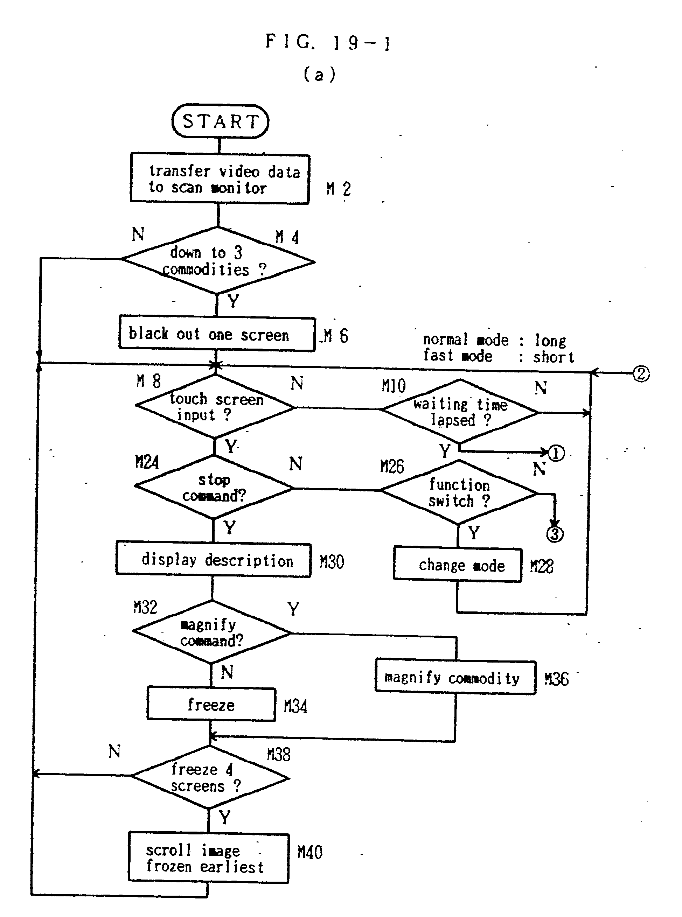

The first four images P1-P4 of the retrieved commodities are displayed in the sub-frames A-D on the multi-scan monitor 232 as shown in Fig. 18 (a). At the next stage, a Z-flow scroll is effected as shown in Fig. 18 (b). When the user touches the "stop command" SA on the touch screen 213, the image P2 is stopped scrolling and frozen (fixed) in the sub-frame A as shown in Fig. 18 (c). The other images P3-P5 are eliminated, and the commodity description corresponding to the frozen image P2 is displayed in the next sub-frame B.

In this state, a "description of commodity" screen (1) as shown in Fig. 17-4 appears on the touch screen 213. If the user touches a "magnify" icon, the frozen image P2 is enlarged to the entire screen as shown in Fig. 18 (d), and a "magnifying" screen (m) as shown in Fig. 17-5 appears on the touch screen 213.

If the user touches the forward key on the screen (1) or (m), the touch screen 213 returns to the screen (k), and the multi-scan monitor 232 starts scrolling the images other than the image P2 which is maintained frozen as shown in Fig. 18 (e). If the user touches the "O" key on the screen (k), the frozen image P2 is established as eligible, and a "select commodity" screen (n) as shown in Fig. 17-5 appears on the touch screen 213.

This screen includes icons of "heart-shaped purchase marks" HA, HB, HC and HD arranged to correspond to the four sub-frames on the multi-scan monitor 232. These icons are not scrolled. In the four sub-frames A-B on the multi-scan monitor 232, the images of eligible commodities are scrolled in the manner described above.

If the user finds a commodity to his or her liking, he or she touches the corresponding "purchase mark" on the touch screen 213 (step S92). Then this commodity is established as a final eligible, and the corresponding commodity code is recorded as an order data (step S94). A plurality of commodities may be selected as final eligibles.

If the user touches the "O" key, a commodity confirm screen (o) as shown in Fig. 17-5 appears on the touch screen 213 (step S96). The screen displays the commodity codes, numbers and prices of the commodities selected as final eligibles, with the multi-scan monitor 232 displaying the images of these commodities. If the user wants to buy the commodities, he or she touches the "O" key (step S98). Then the sequence moves to a next order processing operation (step S100).

If the user wants to make a selection all over again at each stage, he or she touches the "entry" key. Then the initial shopping screen (a) is reinstated (sep S8). In this case, the operational and retrieval data input up to that stage are retained. If the user wants to quit shopping, the "exit" key is touched. Then the initial screen is reinstated (step S2). In this case, the operational and retrieval data input up to that stage are all erased.

After the commodities to be purchased are determined, their commodity codes are stored as order data in the order data file of the commodity data file 210, and an order slip carrying the commodity numbers, brandnames and the like is output from the printer 214. The order slip printout is kept in custody at the shop where the user station 200 is installed, with a copy thereof given to the user.

As in the foregoing embodiment, the order slip as printed out may be transmitted to the host station 100 through the image scanner installed at the user station 200. In this embodiment, the order data are collected at the host station 100 in a different way as follows:

The host station 100 successively polls the user stations 200 during non-business hours of the latter, to check if order data are stored at each user station 200. The user station 200 takes the order data out of the order data file of the data file 210 for transmission processing, and transmits them in a batch to the host station 100.

Upon receipt of these data, the host station 100 carries out data processing including storage of the data in the order data file, analysis of demand data and transmission of the order data to the commodity supplier station 400. This data processing is the same as in the foregoing embodiment, and is not described here again.

Icon Scroll Operation

An operation to switch highlighting of the icons Ij will be described in detail with reference to the flow charts of Figs. 16-1 and 16-2.

For display at each stage on the touch screen 213, a plurality of icons Ij are read out of the icon storage file 215, corresponding display attributes out of the icon attribute file 219, and corresponding icon highlight attributes out of the icon highlight file 217. The icons Ij are displayed in a prescribed sequence and in prescribed positions on the touch screen 213 (step N2).

Next, the icon feed mode is automatically set (initial setting) to a forward mode with a "long waiting time", and the waiting time is cleared (step N4). Then the first icon I1 is highlighted in accordance with the corresponding highlight attribute (step N6).

At step N8, checking is made whether a touch input has been made on the touch screen 213 or not. In the absence of a touch input, the program waits at step N10 for lapse of a waiting time corresponding to the icon feed mode (the forward mode with a "long waiting time" first).

If no touch input occurs during the waiting time, checking is made at step N12 whether or not the currently highlighted icon Ij is set as a choice item already selected. If not, the current highlighting is canceled for highlight scrolling (step N14).

If the highlighted icon Ij is already set, it means that a plurality of choice items are selected. To make this clear, the current highlighting is left as it is. This is convenient to the AND processing and OR processing described hereinbefore.

Step N16 checks whether the current icon feed mode is the forward mode or not. If it is, a next icon is highlighted at step N18. (Where the icon which has stopped being highlighted is the last icon on a page, the first icon on the same page is highlighted.) In the case of a reverse mode, a preceding icon is highlighted at step N20. (Where the icon which has stopped being highlighted is the first icon on a page, the last icon on the same page is highlighted.)

If an icon has already been selected at this stage, this icon and an icon being scrolled are high lighted simultaneously. Then the program clears the waiting time at step N22, and returns to step N8.

If step N8 finds a touch input made, step N24 checks if the forward key has been touched. If it has, the icons are highlighted in ascending order, i.e. I1, I2, I3 ..., and the forward mode with the "long waiting time" is set to prolong the waiting time from highlighting of one icon to highlighting of the next icon (step N26).

If the forward key has not been touched, step N28 checks if the fast forward key has been touched. If it has, the icons are highlighted in ascending order, and a forward mode with a "short waiting time" is set to shorten the waiting time for highlight switching (step N30).

If the fast forward key has not been touched, step N32 checks if the reverse key has been touched. If it has, the icons are highlighted in descending order (In, In-1, In-2, ...), and a reverse mode with a "long waiting time" is set to prolong the waiting time for highlight switching (step N34).

If the reverse key has not been touched, step N36 checks if the fast reverse key has been touched. If it has, the icons are highlighted in descending order, and a reverse mode with a "short waiting time" is set to shorten the waiting time for highlight switching (step N38).

If the fast reverse key has not been touched, step N40 checks if the stop key has been touched. If not, step N42 checks if the "next page" key has been touched. If the "next page" key has been touched, the next page is displayed with the first icon thereon highlighted (step N44).

If not, step N46 checks if the "previous page" key has been touched. If it has, the previous page is displayed with the last icon thereon highlighted (step N48). Then the program returns to step N8.

In the case of no page change, step N50 checks if the "O" key has been touched. If not, the program returns to step N8. If it has, the program returns to the main routine.

The "next page" and "previous page" keys are displayed on the touch screen 213 where the choice items are given on a plurality of pages. The "next page" key is displayed on all these pages except the last page. The "previous page" key is displayed on all the pages except the first page. These keys (though not shown) are used on the screens (b) and (g) shown in Figs. 17-1 and 17-3.

The user looks at the flow of highlighted icons being scrolled successively through steps N14, N16 and N18 or N20. The forward key may be touched when the user does not hasten to reach the icon of a desired choice item. The fast forward key may be touched when the user considers it time-consuming to reach the desired choice item, and may switch to the forward key as the choice item draws near. The reverse key may be touched when the desired choice item has passed. The fast reverse key may be touched when the desired item has long passed.

In any case, the "waiting time" and icon feed mode are set according to the function key touched. A plurality of icons are scrolled for successive highlighting in the direction of their arrangement by steps N14 through N20 with progress of time and according to the set conditions. The above is the scrolling operation for icon highlighting.

The user touches the stop key when the icon of a desired choice item is highlighted. Then step N40 judges YES, whereby the finger mark m is displayed prompting the user to make the selection (step N52). The program waits at step N54 for a further touch input.

Step N56 judges whether the user has touched the highlighted icon at which the finger mark m is point ed. If one of the function keys (forward, fast forward, reverse, or fast reverse) has been touched, processing similar to that of step N26, N30, N34 or N38 is carried out depending on which function key has been touched, and the "waiting time" and icon feed mode are changed (step N58).

If the user has touched the highlighted icon at which the finger mark m is pointed, step N60 checks if this icon is already set. If this icon is selected for the first time, the choice item corresponding to this icon is set as an item eligible for retrieval (step N62).

If this icon is selected for the second time, it is interpreted as cancellation of the selection, and the record of eligibility corresponding to this icon is canceled. The program then returns to step N8.

When touching of the stop key is followed by steps N56, N60 and N62, the icon remains highlighted without the program moving from step N12 to step N14. When step N56 is followed by step N58 and when step N60 is followed by step N64, the program moves from step N12 to step N14. Thus the highlighted icon returns to the ordinary state.

Commodity Image Display Operation

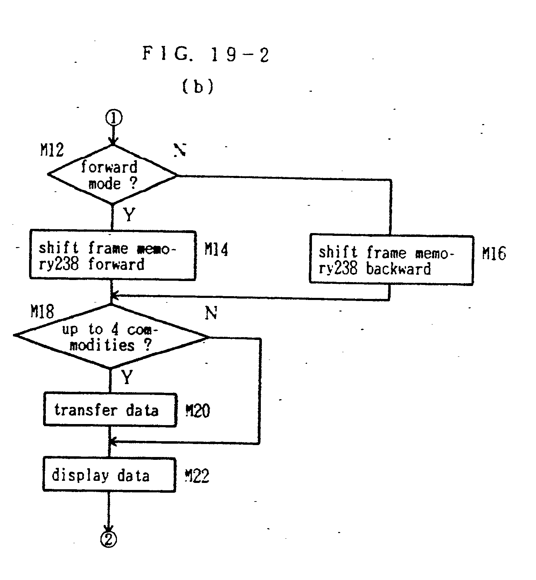

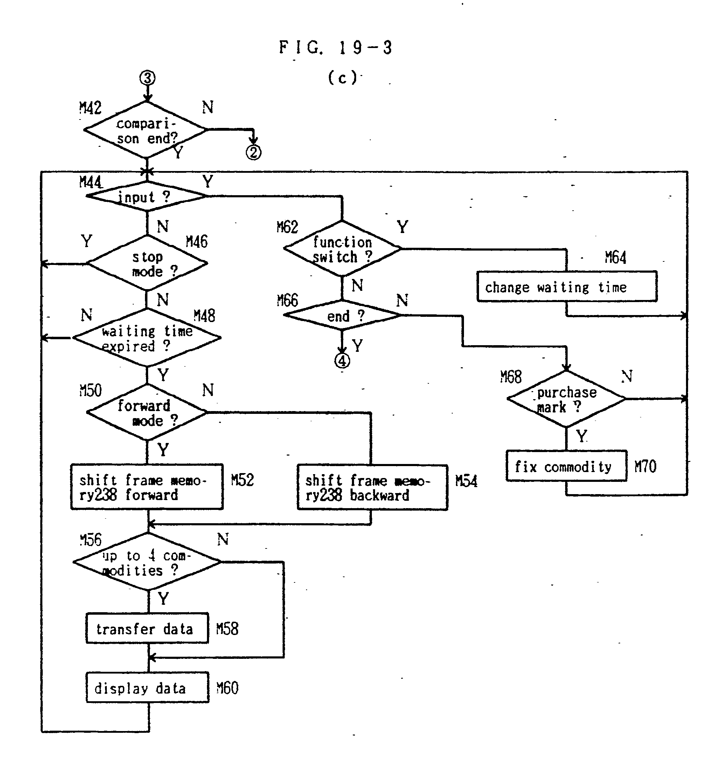

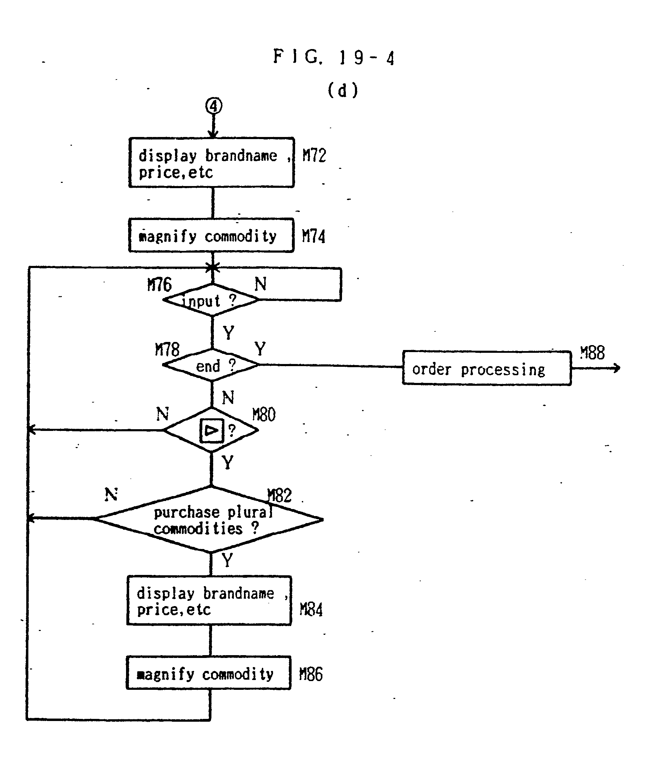

Next, an operation to display the images of retrieved commodities will be described in detail with reference to the flow charts of Figs. 19-1 through 19-4 and explanatory views shown in Figs. 20-1 through 21.

Prior to step M2, the video data and description data of the commodities retrieved according to retrieval data are stored in the video frame memory 228 and description frame memory 230. At step M2, a maximum of first four video data are transferred from the video frame memory 228 to the video frame memory 238 of the multi-scan monitor 232. Thus the images are displayed in the four sub-frames A-D on the multiscan monitor 232.

There is a difference in the scrolling operation between the case where the number of retrieved commodities is 4 or more and the case where the number thereof is less than 4. For expediency, the following description assumes case (a) which deals with six images P1-P6 and case (b) which deals with three images P1-P3.

Thus, in the case (a), the video data transmission effected at step M2 results in the data of images P1-P4 being set to memory areas R1-R4 for four frames in the video frame memory 238. Consequently, the images P1-P4 are displayed in the sub-frames A-D as shown in Fig. 20 (a).

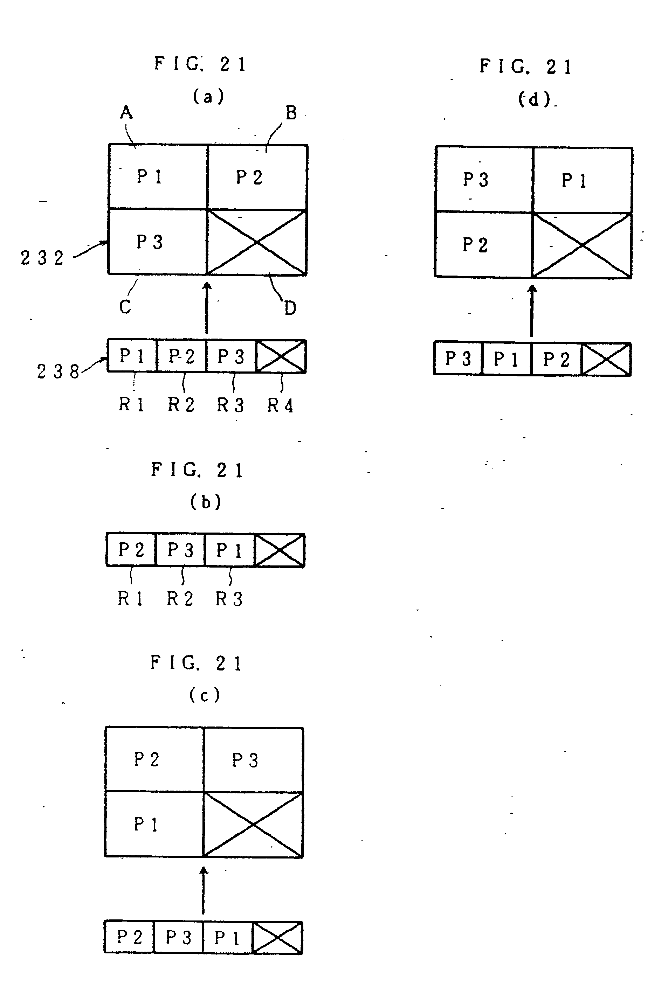

In the case (b), as shown in Fig. 21 (a), the data of images P1-P3 are set to memory areas R1-R3 for three frames, and the images P1-P3 are displayed in the sub-frames A-C.

Next, step M4 checks if the number of retrieved commodities is up to 3 (case b)). If it is, one or more of the four sub-frames A-D on the multi-scan monitor 232 is/are set to a non-display state. In this case, sub-frame D is set to the non-display state since the number of retrieved commodities is 3. Setting to the non-display state means that the memory area R4 of the video frame memory 238 for the one frame is locked to a disabled state. This step is not taken when the number of retrieved commodities is 4 or more (case (a)-).

Next, step M8 checks whether a touch operation has occurred on the touch screen 213 or not. At this time, the touch screen 213 displays the commodity select screen (k) as shown in Fig. 17-4, which includes the icons of "stop commands" SA-SD, function keys (forward, fast forward, stop reverse, and fast reverse keys), "O" key, "X" key, "entry" key and "exit" key.

If no touch input has been made, checking is made at step M10 whether or not the waiting time corresponding to the image feed mode has elapsed. At the initial stage, the image feed mode is set to a forward mode with a "long waiting time". If the waiting time has not elapsed, the program returns to step M8. If the waiting time has elapsed without a touch input, step M12 checks whether the current image feed mode is the forward mode or not.

If it is, step M14 shifts the video data forward in the video frame memory 238 of the multi-scan monitor 232. In the case of a reverse mode, step M16 shifts the video data backward. Since the forward mode is set at the initial stage, the video data are shifted forward.

In the case (a), as shown in Fig. 20 (b), the images P2-P4 are shifted to the memory areas R1-R3, leaving the memory area R4 blank. In the case (b), as shown in Fig. 21 (b), the images P2, P3 and P1 are shifted to the memory areas R1-R3.

Next, step M18 judges if the number of retrieved commodities is 4 or more. In the case (a), the data of next image P5 is transmitted from the video frame memory 228 to the video frame memory 238 of the multi-scan monitor 232, which is set to the memory area R4 left blank (step M20). In the case (b), this step is unnecessary as noted before.

At step M22, the video data in the video frame memory 238 are displayed in the sub-frames of the multi-scan monitor 232 (see Figs. 20 (c) and 21 (c)). This effects a Z-flow scroll of the images. Take the case (a) for example, the images P1-P4 were displayed in sub-frames A-D initially, and now image P1 diappears from sub-frame A, with image P2 moved up for display in sub-frame A, and images P3 and P4 displayed in sub-frames B and D. The sub-frame D now displays a new image P5.

Next, the program returns to step M8 for repeating the loop M8 through M22 and back to M8 until one of the "stop commands" SA-SD is touched, with the Z-flow scroll carried out image after image as shown in Figs. 20 (d) and (e) and Fig. 21 (d). The mode of this image scroll may be adjusted through the function keys on the touch screen 213 displaying the screen (k).

More particularly, when one of the function keys (forward, fast forward, reverse, and fast reverse keys) is touched, step M8 judges YES, step M24 judges that the stop command is not made, and step M26 judges that one of the function keys has been touched. Then the program moves to step M28 for setting the mode corresponding to the touched function key, and returns to step M8.

The mode is set to the forward mode with a "long waiting time" when the forward key is touched, to the fast forward mode with a "short waiting time" when the fast forward key is touched, to the reverse mode with a "long waiting time" when the reverse key is touched, and to the fast reverse mode with a "short waiting time" when the fast reverse key is touched. Consequently, in the loop of steps M8 through M22 and back to step M8, the Z-flow scrolling is accelerated or decelerated and directed forward or backward depending on the selected image feed mode.

When the user finds an image to his or her liking among the scrolled images, the user touches the corresponding "stop command" on the touch screen 213 to select that image as prima facie eligible.

Assume that the user likes image P6 displayed in the sub-frame C as shown in Fig. 20 (e) and touches the "stop command" SC on the touch screen 213 (see Fig. 20 (f)). Then the program moves from step M8 to step M24 which judges YES, whereby the program moves on to step M30.

At step M30, the images P4, P5 and P1 are erased and only the image P6 designated by the touch opera tion remains on display. At the same time, the description data of the commodity corresponding to the image P6 is read out of the description frame memory 240, and the description is displayed in the sub-frame D next to the sub-frame C displaying the image P6 (see Fig. 20 (f)). At this time, the touch screen 213 gives the "description of commodity" screen (1) as shown in Fig. 17-4.

When the user touches the forward key after reading the description, step M32 judges NO, and step M34 is executed for carrying out freeze processing to remove the image P6 from scrolling. The freeze processing is an operation for prohibiting a shift input and a shift output of the video data with respect to the memory area R3 to which the data of image P6 in question is set within the video frame memory 238. As a result of this operation, the frozen image P6 is locked in the sub-frame C.

If the "magnify" icon is touched on the screen (1), the frozen commodity image P6 is magnified to fill the entire screen of multi-scan monitor 232 (step M36). At this time, the touch screen 213 displays the "magnifying" screen (m) as shown in Fig. 17-5).

Step M38 checks if all the four sub-frames are in the freeze state. If not, the program returns to step M8. When step M10 judges expiration of the waiting time, the loop of step M8 through M22 is resumed for the image scrolling operation. At this time the shifting at steps M14 and M15 is prohibited with respect to the memory area corresponding to the frozen image. Accordingly, the screen state changes from Fig. 20 (e) to Fig. 20 (g).

Subsequently, the program repeats the loop of steps M8, M10, M12, M14 (or M16), M18, M20, M22 and back to M8 (including M8, M24, M26, M28 and M8) or the loop of steps M8, M24, M30, M32, M34 (or M36), M38 and back to M8. The former loop relates to the image-after-image scrolling, and the latter to the image freeze processing.

With the image P6 frozen, the remaining images P1-P5 are scrolled in cycle. The user is thus allowed to make comparison by visually observing the frozen image P6 and three times in series of the remaining images at the same time.

If the "stop command" SB is touched when the screen is in the state shown in Fig. 20 (h), to select the image P2, the freeze is effect at two positions as shown in Fig 20 (i). With the images P6 and P2 now frozen, the remaining images P1, P3, P4 and P5 are scrolled in cycle. The user is thus allowed to make comparison by looking at the frozen images P6 and P2 and two images in series of the remaining images at the same time.

If the "stop command" SD is touched when the screen is in the state shown in Fig. 20 (j), to select the image P5, the freeze is effect at three positions as shown in Fig. 20 (k). With the images P6, P2 and P5 now frozen, the remaining images P1, P3 and P4 are scrolled in cycle. The user is thus allowed to compare one of the remaining three images with the frozen images P6, 2 and P5 at the same time.

If the "stop command" SA is touched when the screen is in the state shown in Fig. 20 (k), to select the image P1, the freeze is effect at the four positions as shown in Fig. 20 (1). Then, step M38 judges YES and the program moves to step M40 for restoring the image P6 frozen earliest for the scrolling operation.

Consequently, at step M14 or M16 in the next cycle, the image P6 is shift-output from the memory area R3 and the image P3 is shift-output thereto. At step M22, the image P3 is displayed in the sub-frame C as shown in Fig. 20 (m). Thereafter, the sub-frame C displays images P3, P4, P6 and P3 in cycle. If, for example, the image P3 is frozen in the course of this cycle, the second earliest frozen image P2 is restored for the scrolling operation.

Thus, a maximum of three images may be frozen on the multi-scan monitor 232 since they must be compared with the other images.

Assume that the user has made comparison to a reasonable extent and selected a certain number of commodities as eligible for purchase. Assume, for example, that the user has selected four images P6, P2, P5 and P1 as prima facie eligible, as described above. And assume that the user touches the "O" key on the screen (k) as shown in Fig. 17-4. Then, step M8 will judge YES, step M24 NO, step M26 NO and step M42 YES, whereby the touch screen 213 changes to the screen (n) as shown in Fig. 17-5.

On this screen, the user finally decides which commodity or commodities to purchase. At this time, the multi-scan monitor 232 is in the state shown in Fig. 20 (m). If the commodity the user wants to purchase is displayed in this state, the user touches the "purchase mark" icon corresponding to the position in which that commodity is displayed. Then, step M44 judges YES, step M62 NO, and step M66 NO. whereby the program moves to step M68. The operation carried out at step M68 will be described later.

If the "O" key on the screen (k) is not touched in the state shown in Fig. 20 (m), the program moves from step M44 through step M46 to step M48. When step M48 judges elapse of the waiting time of the current image feed mode, step M50 judges whether the image feed mode is the forward mode or not. If it is, step M52 shifts the contents of the video frame memory 238 forward by one image. If the mode is the reverse mode, step M54 shifts the contents backward. In the forward mode, the shift is made as shown in Fig. 20 (n).

In this case, as distinct from the foregoing case of image comparison, there is not shift prohibition. Specifically, the images P2, P3 and P5 are set to the memory areas R1, R2 and R3, with the memory area R4 left blank. Next, step M56 checks if the number of retrieved commodities is 4 or more. If it is, step M58 reads the next image P4 out of the video frame memory 238 and sets it to the memory area R4. If the number is up to 3, the read-out is unnecessary as described in relation to Fig. 21.

At step M60 the video data are read out of the video frame memory 238 for display on the multi-scan monitor 232. If the number of commodities is 4 or more, the screen is in the state shown in Fig. 20 (o).

When one of the function keys (forward, fast forward, reverse, and fast reverse) is touched on the screen (n) as shown in Fig. 17-5, the image scrolling is resumed in the manner corresponding to the image feed mode of the touched key.

When the user spots a commodity to be purchased in the course of image scroll, the user touches the "purchase mark" icon corresponding to the position in which that commodity is displayed. As a result, the program moves from step M44 through steps M62, M66 and M68 to step M70. Then, the commodity code of the displayed image corresponding to the touched "purchase mark" icon is recorded for purchase. This image is removed from the scrolling operation and is frozen in a sub-frame on the multi-scan monitor 232. If there are a plurality of commodities to be purchased finally, the user repeats touching the "purchase mark" icons.

After completing the selection of a commodity for purchase, the user touches the "O" key on the screen (n). Then, step M66 judges YES, and the program moves to step M72 for displaying the commodity confirm screen (o) as shown in Fig. 17-5. This screen displays the brandname, commodity number and price of the commodity finally selected as eligible. This display is made for one commodity. Step M74 magnifies the commodity image on the multi-scan monitor 232, and the program waits at step M76 for the user to make a touch input.

If the user touches the forward key, the program moves from step M78 to step M80 and then to step M82 to check if there are plurality of commodities recorded for purchase by touching of the "purchase marks". If there are, step M84 displays the brandname, commodity number and price of a/the next commodity on the screen (o), and step M86 magnifies the commodity image. If the user touches the "O" key, the program moves to step M88 for order processing.

In the method of displaying the commodity images according to this embodiment as described above, a commodity is selected as eligible for purchase from among the plurality of commodities narrowed down through the commodity retrieval, which commodity is frozen in a sub-frame on the multi-scan monitor 232, with the other commodities being displayed and scrolled in the remaining sub-frames. This method provides the advantage of allowing the user to determine a finally eligible commodity by comparing the frozen commodity with the other commodities.

[C] Retrieval History Data Collection & Transmission

Operations to collect and transmit the retrieval history data of the system according to this embodiment will be described next with reference to Figs. 22-1 through 22-3.

(1) History Data Mode Switching

The user station 200 has a history data mode switchable by commands from the host station 100. This switching operation will be described first with reference to the flow chart of Fig. 22-1.

The mode switching operation is controlled by software stored in the front end computer 218.

When power is turned on at the user station 200, the history data mode is initially set to no-collect mode (step U2). Then the user station 200 waits for a history collect command, a history collect cancel command or other command to be transmitted from the host station 100 (step U4).

The host station 100 transmits the history collect command to selected user stations 200. The retrieval history data has one day for the unit, and the history collect command is transmitted before a collection starting time of the day. The command format includes the address of the user station 200, contents of the command, the collection starting time, and collection ending time. The period from collection starting time to collection ending time is called the collecting period.

The history collect command, and history collect cancel command are transmitted from the retrieval history collecting computer 182 of the retrieval history data control section 180 at the host station 100.

If the history collect command is received (step U6), the history data mode is set to a collect mode and the collecting time is set as well (step U8). Then the program returns to step U4. If the history collect cancel command is received (step U10), the history data mode is set to the no-collect mode (step U12). Then the program returns to step U4. If a different command is received, the program just returns to step U4.

The collect mode and no-collect mode are maintained in the front end computer at the user station 200. The collect cancel command is transmitted when the history data have become unnecessary following transmission of the history collect command.

(2) Retrieval History Data Collection

A retrieval history data collecting operation carried out at the user station 200 will be described next with reference to the flow chart of Fig. 22-2.

This data collecting operation is controlled by software in the retrieval terminal 212.

The loop from step V2 through step V10 relates to the auto OFF operation of a monitor switch 250, which will be described later.

First, step V4 checks if a touch input is made on the initial screen displayed on the touch screen 213. If a touch input is made, step V12 checks whether it is (3) shopping or not. If not, the program returns to step V4 since the retrieval history data need not be collected. If (3) shopping is selected, step V14 checks whether the monitor switch 250 is turned on.

The retrieval terminal 212 includes the monitor switch 250 which is turned on when the retrieval history data is collected from a monitor member, and digital switches 252 for setting the membership number of the monitor member (these switches being omitted from Fig. 5).

The monitor switch 250 has a toggle function, and is lit when turned on and unlit when turned off. The monitor switch 250 may be automatically turned off by the software. The membership number consists of a shop number set by an 8-figure digital switch 252 and a member's serial number set by a 5-figure digital switch 252. The shop number consists of 2 figures indicating the region in which the user station 200 is installed, 2 figures indicating the type of business, and 4 figures indicating the identification number of the shop.

The monitor switch 250 and digital switches 252 are operated by the staff of the shop where the user station is installed.

## (a) Retrieval History Data Collection from Monitor

When the monitor switch 250 is turned on, the membership number input through the digital switches 252 is recorded in the retrieval history data file 242 (step V16). Next, a collection execute mode is set at step V18, and the time elapse to that point of time is cleared at step V26.

As understood from the above operation, the retrieval history data collection from monitors is carried out with priority independently of the history collect command from the host station 100.

The program then waits for a touch input to be made by the monitor member of any desired choice on any shopping screen appearing on the touch screen 213 (step V28). An internal timer (not shown) included in the user station 200 measures a time elapse till a choice item is touched (step V30).

When a choice item is touched, step V32 checks if the collection execute mode is set. The collection execute mode is set when the monitor switch 250 is turned on, as noted above. Therefore, the choice item and the time elapsed till its determination are recorded in the retrieval history data file 242 (step V34).

Then the elapsed time is cleared at step V36, and checking is made at step V38 whether the user has completed the operation. The operation is judged completed when the user touches the "exit" key at each screen stage or when the user touches the "O" key on the commodity confirm screen (o) shown in Fig. 17-5 to proceed to the order processing. If the operation is not completed, the program moves to a next processing (step V40). The next processing means returning to step V28 in the end.

More particularly, each time the user touches a choice item on any screen appearing on the touch screen 213, the choice item and the time taken for its selection are recorded in the retrieval history data file 242. By repeating this operation through the loop of steps V28 through V40 and back to V28, the entire retrieval history of the user is recorded as retrieval history data in the retrieval history data file 242.

Even when the user touches the "exit" key halfway through the operation thereby reinstating the original screen on the touch screen 213, the retrieval history up to that point of time is recorded in the retrieval history data file 242.

Upon return to the initial screen, step V2 clears the time elapse till then, and step V4 checks if a touch input is made on the touch screen 213. The time elapse till a touch input is measured by the internal timer (step V6). If the step V8 finds no touch input upon lapse of a predetermined time (5 minutes, for example) and the monitor switch 250 remains on, the monitor switch 250 is automatically turned off at step V10. This is for avoiding retrieval history data collection where a next user is not a monitor member.

## (b) Random Retrieval History Data Collection

Next, a retrieval history data collecting operation based on the history collect command from the host station 100 will be described. This operation collects retrieval history data of all users having used the user station 200 during the predetermined data collecting period. In this sense, it is a random collection.

If the V14 judges that the monitor switch 250 is turned off, step V20 checks if the history data mode is set to the data collect mode. If it is, step V22 checks if the current time is in the collecting period. The judgments as to the collect mode, no-collect mode and collecting period are made by referring to the front end computer 218.

If the collect mode is set and the current time is in the collecting period, the collection execute mode is set at step V18. If the collect mode is not set, or if the collect mode is set but the current time is outside the collecting period, a collection non-execute mode is set at step V24.

After the collection execute mode is set, the subsequent operation is carried out in exactly the same manner as in the operation (a) described above. When the collecting period comes to an end, however, the operation is switched to the collection non-execute mode, terminating the retrieval history data collection. Thus the retrieval history data are collected only during the collecting period.

When the collection non-execute mode is set, the subsequent operation is carried out as in the operation (a) except that the choice item and the time taken for its selection are not recorded in the retrieval history data file 242 (i.e. step V34 is skipped).

When the collect mode and the collection non-execute mode are set, the same operation as the operation (a) is carried out with start of the collecting period, to collect the retrieval history data.


(3) History Data Transmission & Deletion

Next, the operation to transmit the data collected in the operations (2) above and stored in the retrieval history data file 242 from the user station 200 to host station 100, and the operation to delete such data from the retrieval history data file 242 will be described with reference to the flow chart of Fig. 22-3.

These operations are controlled by the front end computer 218.

First, step U22 checks if the user station 200 has received any command from the host station 100 during the non-business hours of the stop where the user station 200 is installed. If it has, step U24 checks if the command received is a reception complete signal. If the answer is NO, step U26 checks if the command received is a history delete command. If the answer is NO again, step U28 checks if the command is a history transmit command. If the answer to this is YES, step U30 checks if retrieval history data are recorded in the retrieval history data file 242. If retrieval history data are not recorded, the program returns to step U22. If they are recorded, the retrieval history data are read out and transmitted from the user station 200 to host station 100 (step U32). Then the program returns to step U22.

The history transmit command is transmitted from the retrieval history collecting computer 182 at the host station 100. The retrieval history data transmitted from the user station 200 are stored in the retrieval history data storage file 184 through the retrieval history data collecting computer 182.

When the received data have been stored, the retrieval history data collecting computer 182 transmits the reception complete signal to the user station 200. When the user station 200 receives this signal (YES from step U24), step U36 checks if there are retrieval history data in the retrieval history data file 242. If there are, the data are deleted at step U38.

If the step U28 finds that a history transmit command is not received, the program moves to step U34 to check if the current time is 0 a.m. (data deleting time). If it is not 0 a.m. yet, the program just returns to step U22. If the time has reached 0. a.m. without reception of the history transmit command, step U36 checks if retrieval history data are in the retrieval history data file 242. If there are, these data are deleted at step U38.

Thus, in the absence of a history transmit command from the host station 100, the retrieval history data are automatically deleted at 0 a.m. to be ready for retrieval history data collection to be made the following day.

If the command received is a history delete command (step U26), the retrieval history data are deleted similarly.


Retrieval History Data File Structure

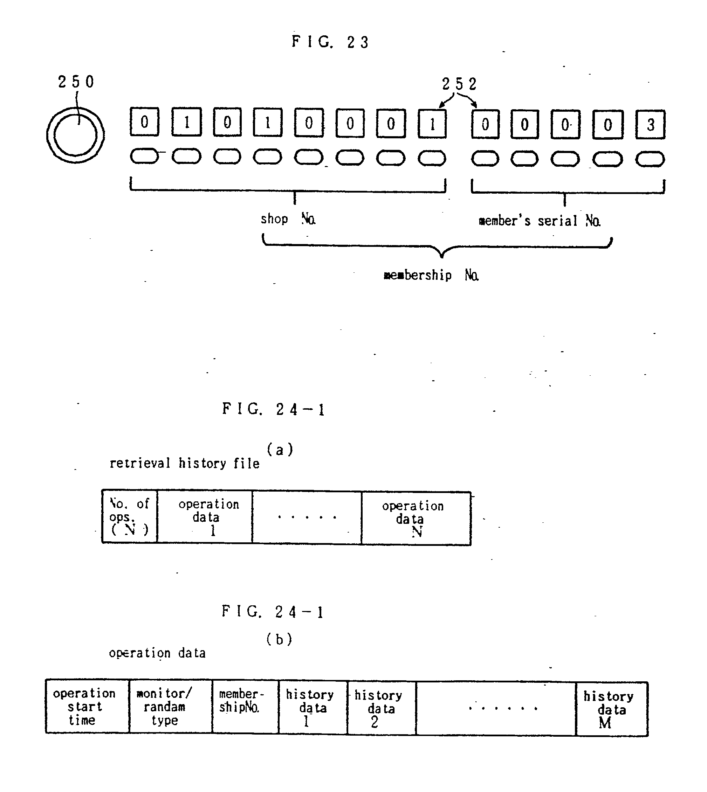

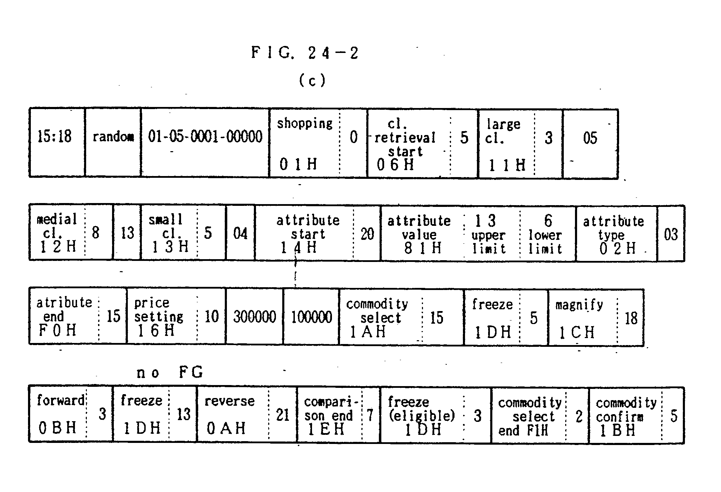

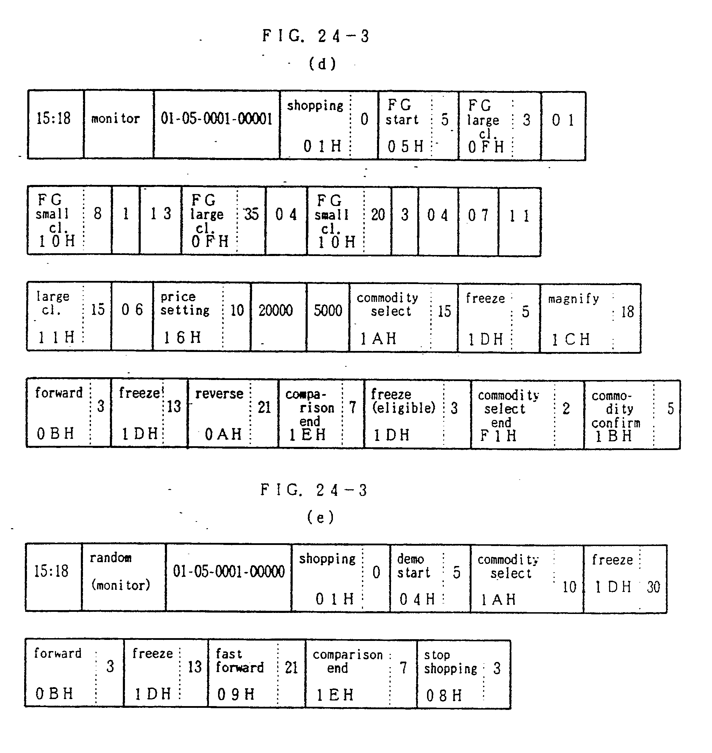

The retrieval history file is for recording retrieval history data collected in one day. As shown in Fig. 24-1 (a), this file contains a number of operations (N) and operation data for each operation. The operation data are in a data row including an operation start time, a monitor/random type, a membership number and history data.

A few samples of operation data are illustrated. Fig. 24-2 (c) shows retrieval history data obtained from a retrieval operation through the commodity classifications (without the free group retrieval). Figs. 24-3 (d) shows retrieval history data obtained from the free group retrieval. Figs. 24-3 (e) shows retrieval history data obtained from the demonstration.

In these examples of the file structures, the choice item in each of the large classification, medial classification, attributes, price setting and commodity selection is followed by a numeric value (righthand side of the dotted line) which represents a time elapse in seconds. The numeric value at the righthand next to it indicates the code number of a selected choice item. The upper and lower limits set to the attributes such as size and weight, and the price are shown separately. In the example of free group retrieval shown in Fig. 24-3 (d), an FG small classification column is followed by "20, 3, 04, 07 and 11", of which "20" indicates a time elapse, "04, 07 and 11" indicate a plurality of selections made, and "3" indicates the number of selections. The number of selections "3" distinguishes between "AND" and "OR" by the way it is expressed.

The retrieval history data received from each user station 200 and stored in the retrieval history data storage file 184 at the retrieval history data control section of host station 100 are analyzed by the retrieval history analyzer terminal 186. The analyzed data are utilized as follows:

The retrieval history data collected include various information regarding operations and choices for the commodity retrieval, commodity selection and determination for purchase, and live or first-hand information about hesitations, uncertainties, and subtle workings of the mind in making the selections and decisions in which the discretion of the user plays no part. Further, the retrieval history data are collected from a multiplicity of user stations 200 distributed extensively. Such data provide a clear picture of motivations for commodity selections and their changes, and enable a correct grasp of market trends and popularity of commodities. These data may, therefore, be used effectively for market researches, product developments, sales plans and so on.

The live information further shows the stages of operation at which users have difficulties. This helps toward improvement in the operating method employed at the user station.

The retrieval history data also include the time taken in selecting the choice items, which shows at which stage and choice item the user has difficulties in making a decision and the extents of such difficulties. This aspect enables the improvement of the operating method still further.

The third system provides information as to characteristics of certain time periods and peak operating times. According to the fourth system, the retrieval history data obtained may be used for analyzing the consuming patterns and life style of customers acting as monitor members. In the fifth and sixth systems, the retrieval history data are automatically deleted at a fixed point of time after transmission thereof to the host station. This feature produces the effects that the file need not have a large capacity and that a next data collecting operation may be carried out without trouble (the following day, for example).

## Claims

1. A commodity information retrieval system comprising at least one host station and a plurality of user stations interconnected through telecommunication lines by way of a repeater mounted on a communications satellite;
wherein said host station includes
central commodity data storage means for storing commodity data for use in commodity searches,
central video data storage means for storing video data of commodities,
video data reading means for reading the video data from said central video data storage means upon request from said user stations, and
data transmitter-receiver means for at least transmitting the commodity data and video data to said user stations and receiving a video request from said user stations through said repeater; and
wherein each of said user stations includes
terminal commodity data storage means for storing the commodity data received from said host station,
commodity data retrieval means for searching desired commodities by utilizing the commodity data stored in said terminal commodity data storage means,
video request creator means for creating a video request with respect to commodities narrowed down through the retrieval, for transmission to said host station,
terminal video data storage means for storing the video data transmitted from the host station in response to the video request,
video display means for receiving the video data from said terminal video data storage means and displaying images of the commodities narrowed down through the retrieval, and
data transmitter-receiver means for at least transmitting the video request to said host station and receiving the commodity data and video data from said host station through said repeater.

2. A commodity information retrieval system as claimed in claim 1, further comprising at least one commodity supplier station connected to said host station by way of said repeater, said commodity supplier station including commodity order information storage means for storing commodity order information received from said host station, and data transmitter-receiver means for carrying out data communication with said host station.

3. A commodity information retrieval system as claimed in claim 1, further comprising at least one video data creator station connected to said host station by way of said repeater, said video data creator station including video input means for creating the video data of commodities, video data storage means for storing the video data created by said video input means, the data transmitter-receiver means for receiving a video data request from said host station and transmitting the video data stored in said video data storage means to said host station in response to the video data request.

4. A commodity information retrieval system as claimed in claim 1, wherein said central video data storage means include a plurality of optical disks for storing the video data of the commodities at random.

5. A commodity information retrieval system as claimed in claim 1, wherein said user stations transmit order information on commodities finally selected by users to said host station through said repeater, and said host station analyzes and records demand data concerning order frequency of each commod ity be referring to the order information received from said user stations.

6. A commodity information retrieval system as claimed in claim 5, wherein each of said user stations further includes demand data storage means for storing the demand data received from said host station, and wherein said video request creator means is operable, when the number of commodities retrieved by said commodity data retrieval means exceeds a maximum number of images storable in said terminal video data storage means, to refer to the demand data stored in said demand data storage means, select most frequently ordered commodities equal to the maximum number of images from the retrieved commodities, and request the video data of the selected commodities from said host station.

7. A commodity information retrieval system as claimed in claim 5, wherein said video request creator means requests the video data of commodities narrowed down by said commodity data retrieval means from said host station, and wherein said video data reading means is operable, when the number of commodities whose video data are requested by the user station exceeds a maximum number of images storable in said terminal video data storage means, to refer to the demand data stored in demand data control means of said host station, read video data of most frequently ordered commodities among the commodities whose video data are requested, equal to the maximum number of images from said central video data storage means, and transmit the video data read out to the user station.

8. A commodity information retrieval system as claimed in claim 1, the commodity data used for commodity retrieval include commodity codes, attribute key codes and free key codes,

said commodity codes being codes for classifying the commodities according to types of the commodities, and including large classification codes corresponding to a plurality of large groups, medial classification codes corresponding to a plurality of medial groups in each large group, small classification codes corresponding to a plurality of small groups in each medial group, and individual commodity codes corresponding to individual commodities belong to each small group,

said attribute key codes being a plurality of key codes assigned to commodity attributes, and

said free key codes being a plurality of key codes corresponding to items selected in relation to the commodities from at least special commodity plans, favorite senses of users, ages of users, gift purposes of the commodities, commodity trends, places associated with the commodities, and functions of the commodities,

and wherein said commodity data retrieval means retrieves commodities corresponding to choice items designated on a touch screen of the commodity data retrieval means, by referring to the commodity codes stored in said terminal commodity data storage means.

9. A commodity information retrieval system as claimed in claim 8, the commodity data stored in said terminal commodity data storage means of the user stations are renewed all at once by transmitting predetermined commodity data from said host station to said user stations through said repeater during non-business hours of said user stations.

10. A commodity information retrieval system as claimed in claim 8, wherein said touch screen of each user station displays a plurality of retrieval choice items and a stop key, only one of the retrieval choice items being highlighted at one point of time, the retrieval choice items being scrolled for successive highlighting with progress of time in a direction in which the retrieval choice items are arranged, the highlight scrolling being stopped when said stop key is touched, a selection prompt being displayed for prompting a user to select a currently highlighted choice item when the scrolling is stopped, and the currently highlighted choice item, when touched by the user, being set as a selected item.

11. A commodity information retrieval system as claimed in claim 10, wherein said choice items are displayed in icons.

12. A commodity information retrieval system as claimed in claim 10, wherein said selection prompt is displayed as a finger mark adjacent the highlighted choice item when the scrolling is stopped, the selection

EP 0 410 036 A1

being made by touching the highlighted choice item per se.

13. A commodity information retrieval system as claimed in claim 10 through 12, wherein said touch screen displays, in addition to the stop key, a forward key, a fast forward key, a reverse key and a fast rewind key for controlling the highlight scrolling, the scrolling being set to a slow forward mode when the forward key is touched, a fast forward mode when the fast forward key is touched, a reverse mode when the reverse key is touched, and a fast reverse mode when the fast reverse key is touched.

14. A commodity information retrieval system as claimed in claim 1, wherein said video display means of each user station includes a multi-scan monitor with a screen split into a plurality of sub-frames for successively displaying a plurality of commodity images read out of said terminal video data storage means and fed forward, one of the plurality of commodity images displayed in scroll being designated by a stop command and frozen in one of the sub-frames, the other commodity images being fed forward for display in the remaining sub-frames by a scroll resume command.

15. A commodity information retrieval system as claimed in claim 14, wherein the commodity images except the one image designated by the stop command are erased from said multi-scan monitor, and a commodity description of the designated image is displayed on said multi-scan monitor.

16. A commodity information retrieval system as claimed in claim 14 or 15, wherein, when the commodity images are frozen in all of sub-frames of said multi-scan monitor by the stop command, one of the commodity images frozen earliest is erased by a subsequent scroll resume command, remaining commodity images being fed forward for display in the sub-frame from which the earliest frozen image is erased.

17. A commodity information retrieval system as claimed in claim 1, wherein each of said user stations is operable, in response to a history collect command, to collect a series of choice items successively selected by a user at a plurality of selection stages and record the selected choice items in a file as retrieval history data, the user station transmitting the retrieval history data to said host station upon receipt of a retrieval history data request from said host station, said host station storing the retrieval history data in a file.

18. A commodity information retrieval system as claimed in claim 17, wherein the retrieval history data include a choice item selected and a time period consumed in the selection at each selection stage, the series of the selected choice items and time period consumed in the selections over the plurality of selection stages being collected and recorded.

19. A commodity information retrieval system as claimed in claim 18, wherein each of said user stations receives the history collect command from said host station including a collecting period, and collects the retrieval history data during said collecting period.

20. A commodity information retrieval system as claimed in claim 18, wherein each of said user stations receives the history collect command set by a monitor member using the user station, the user station starting to collect the retrieval history data at a point of time at which the history collect command is set.

33

FIG. 1

EP 0 410 036 A1

# FIG.2

# FIG.3

# FIG.4

## FIG.5

## FIG.6

232

214

213

data
transmitter-receiver  416

front end
computer  414

412

410

## FIG.7

data
transmitter-receiver  522

front end
computer  520

518

510

516    514

512

FIG. 8 (a)

| H header | text | T |
|---|---|---|

FIG. 8 (b)

| receiver code | processing section code | processing code | number of text bites |
|---|---|---|---|
| RT | S | C | TB |

FIG. 10 (a) commodity code

| | | | |
|---|---|---|---|
| large classification code | medial classification code | small classification code | individual commodity code |

FIG. 10 (b) attribute key code

| sizes | colors | materials | prices | . . . . |
|---|---|---|---|---|

FIG. 10 (c) free key code

| A | 0 | 3 | | B | 0 | 5 | | B | 0 | 6 | . . . . |

| C | 1 | 3 | | C | 1 | 4 | | C | 1 | 5 | . . . . |

| G | 0 | 7 | | G | 0 | 8 | | G | 1 | 0 | . . . . |

FIG. 9-1

(a)

```
                                    ( S T A R T )
                                          │
              ┌───────────────────────────┤
              │      YES      ┌────────┐  S101
              │  ┌────────────<message ?>
              │  │            └────────┘
              │  │                 │ NO
              │  ▼                 │
              │ ┌─────────────┐    │
              │ │  message    │ S102
              │ │  processing │    │
              │ └─────────────┘    │
              │  NO      │  S103    │
              │ ┌────────┐│         │
              └─<completed?>        │
                └────────┘         │
                 YES    │           │
              ┌──────────┤          │
              │   YES    │          │
              │  ┌───────▼──┐   ┌────────┐ S104
              │  │          └───< guide ?>
              │  │              └────────┘
              │  │                 │ NO
              │  ▼                 │
              │ ┌─────────────┐    │
              │ │   guide     │ S105
              │ │ processing  │    │
              │ └─────────────┘    │
              │  NO      │  S106    │
              │ ┌────────┐│   NO    │
              └─<completed?>        │
                └────────┘  ┌───────▼──┐ S107
                 YES        <shopping ?>
                            └──────────┘
                             YES │  S108
                          ┌──────▼──────────┐
                          │ commodity retrieval │
                          └──────┬──────────┘
                       NO        │    S109
                          ┌──────▼──────┐
                          │  retrieval  │
                          │ completed?  │
                          └──────┬──────┘
                              YES │
                                  │    S110
                          ┌───────▼──────┐
                  NO       │  number of   │
              ┌───────────<  commodities  >
              │            │  up to 32 ?  │
              │            └───────┬──────┘
              │                YES │
    ┌─────────▼────────┐ S111      │
    │ select upper 32  │           │
    │   commodities    │           │
    └─────────┬────────┘           │
              └─────────┬──────────┘
                ┌───────▼──────────────┐
                │ input commodity codes │ S112
                │   to f.e.computer     │
                └───────┬──────────────┘
                        ┆
                        ①
```

FIG. 9-1

(b)

```
              ②
              ┆
       ┌──────▼──────┐
       │             │    S113
       │ read out data │
       └──────┬──────┘
              │          S114
       ┌──────▼──────────┐
       │ monitor display │
       │(in 4 split screen)│
       └──────┬──────────┘
              │          S115
       ┌──────▼──────────┐
       │ commodity selection │
       └──────┬──────────┘
      NO      │
       ┌──────▼──────┐
       │  retrieval  │
       │ completed?  │
       └──────┬──────┘ S116
          YES │
      NO      │          S117
       ┌──────▼──┐
       │ order ? │
       └──────┬──┘
          YES │
       ┌──────▼──────┐
       │ print order │ S118
       └──────┬──────┘
              └────┬──────
           ( R E T U R N )
```

FIG. 9-2

(c)

① 

YES ── S201
Video data in
buffer memory ?

NO

request video data   S202
from host st.

transmission

reception

store data in   S203
buffer memory

②

reception

requested video   S301
data in transmitting   NO
buffer ?

YES

set requested data   S302
to transmitting buffer

read out   S303
requested data

transmission procesing   S304

transmission

FIG. 11-1

(a)

START

initial screen (a) | N101

shopping? or ··· | N102

message screen | N103

commodity selecting method screen (b) | N105

N104
guide screen

choices (3)-(9) | N106

selecting method ? | choices (1) ···know commodity No.

choices (2) ···select by classification

large classification screen (c) | N107

which group ?
2. men'swear | N108

medial classification screen (c) | N109

which group ?
5.jackets | N110

A

F I G.  1 1 − 2

( b )

A

┌─────────────────────┐
│ small classifica-   │  N111
│ tion screen (e)     │
└─────────────────────┘

┌─────────────────────┐
│ which group ?       │  N112
├─────────────────────┤
│ 1. tailord          │
└─────────────────────┘

┌─────────────────────┐
│ operation select    │  N113
│ screen (f)          │
└─────────────────────┘

commodity selection by monitor          add/change selecting methods

◄─────────────────────  which     ──────────────────────── ----;·
                        operation?
              N114

designate commodity attribute

┌─────────────────────┐
│ commodity attribu-  │  N115
│ te screen (g)       │
└─────────────────────┘

┌─────────────────────┐
│ conditions ?        │  N116
├─────────────────────┤
│ 1.size              │
│ (9) 6-AB            │
└─────────────────────┘

┌─────────────────────┐
│ operation select    │  N117
│ screen (i)          │
└─────────────────────┘

N118                                    add/change selecting methods

        which      ──────────────────────────── ----;·
        operation?

select commodity

B

FIG. 11-3

(c)

B

```
┌─────────────────────┐
│ commodity select    │  N119
│ screen (j)          │
└─────────────────────┘
          ↓
┌─────────────────────┐
│ commodity selec -   │  N120
│ tion by monitor     │
└─────────────────────┘
          ↓
┌─────────────────────┐
│ commodities to re-  │  N121
│ main as eligible ?  │
├─────────────────────┤
│  1.cashmere jacket  │
│  3.tailored jacket  │
│ ...   ...           │
│ ...   ...           │
│ 32. saxony jacket   │
└─────────────────────┘
          ↓
┌─────────────────────┐
│ final eligible      │  N122
│ commodity ?         │
├─────────────────────┤
│ 7.tailored jacket   │
└─────────────────────┘
          ↓
┌─────────────────────┐
│ commodity confirm   │  N123
│ screen (m)          │
└─────────────────────┘
          ↓
```

N124
stop shopping

place order ?
no yes

order

```
┌─────────────────────┐
│ print order         │  N125
└─────────────────────┘
```

RETURN

## F I G. 1 2

commodity selecting method screen (b) — N105

N106 — selecting method ?

choices (1) ···know commodity No.

choices (2) ···select by classification

N201 — sense scr- een (n)

function screen(o) — N203

N202 — desired senses ?

10.simple

desired functions?

6.space saving AND 7.energy saving — N204

operation select screen (f) — N113

N114 — which operation?

add/change selecting methods

commodity attrib- ute screen (g) — N115

45

FIG. 13

```
                              ┌─────────────────────┐
                              │ commodity selecting │  N105
                              │ method screen (b)   │
                              └─────────────────────┘
                                         │
                              N106        ▼
                                        ╱ selecting ╲
                         ┌──────────────  method ?
                                        ╲          ╱
┌──────────────────┐                         │
│ trend screen (s) │  N305                   ▼
└──────────────────┘              ┌─────────────────────┐
         │                        │ gift purpose        │  N301
         ▼                        │ screen (r)          │
┌──────────────────┐              └─────────────────────┘
│ desired trends ? │                       │
├──────────────────┤                       ▼
│ 5.play alone     │  N306        ┌─────────────────────┐
│    OR            │              │ desired gift        │  N302
│ 6.informatize    │              │ purpose ?           │
└──────────────────┘              ├─────────────────────┤
         │               N307     │ 6.employment        │
         ▼                        └─────────────────────┘
┌──────────────────┐                       │
│ desired trend    │                       ▼
│ correction (t)   │              ┌─────────────────────┐
├──────────────────┤              │ operation select    │  N303
│ 5.play alone cancel             │ screen (i)          │
│ 8.systematize input             └─────────────────────┘
└──────────────────┘                       │
                                            ▼         add/change selecting methods
                                         ╱ which ╲
                                          operation?
                                         ╲        ╱
                              N304         │
                                           ▼
                              ┌─────────────────────┐
                              │ commodity select    │  N119
                              │ screen (j)          │
                              └─────────────────────┘
```

46

## FIG.14-1(a)

CAFE   CATALOGLOGY

| 1 | shopping |
| 2 | guide from shop |
| 3 | message |

## FIG.14-1(b)

commodity selecting methods

| 1 | know commodity No. | 6 | have fixed gift purpose |
| 2 | select by commodity cl. | 7 | trend-conscious |
| 3 | select from special plans | 8 | image from relevant places |
| 4 | have favorite senses | 9 | want various functions |
| 5 | scrupulous about age | | |

confirm

help

selec-
tions

correct

stop
shopping

Touch NUMBER of desired item above, and then touch CONFIRM.

(Other items may be selected as the screen changes.

For correction, touch CORRECT and then touch the wrong NUMBER.

To stop shopping, touch STOP SHOPPING.

# FIG.14-2(c)

| select by commodity cl. (large cl.) | number of commodities: | confirm |
|---|---|---|
| 1 ladies' wear | 6 furniture and household facilities | help |
| 2 mens' wear | 7 electric and gas appliances | selec- tions |
| 3 sundries and accessories | 8 audio-visual and information equipment | correct |
| 4 babies' and children's wear | 9 publications and audio visual software | |
| 5 upholstery and bedding | 10 stationary and religious equipment | stop shopping |
| | There is next page | |
| | | previous page |
| Select GROUP NUMBER, and touch CONFIRM. | | next page |
| This screen consists of 2 pages. Touch PREVIOUS PAGE or NEXT PAGE. | | |

# FIG.14-2(d)

| select by commodity cl. (medial cl.) | number of commodities: | confirm |
|---|---|---|
| 1 suits | 6 sweaters and cardigans | help |
| 2 formal wear | 7 shirts | selec- tions |
| 3 slacks | 8 nightwear | correct |
| 4 overcoats | 9 underwear | |
| 5 jackets | 10 socks and stockings | stop shopping |
| | There is next page | |
| | | previous page |
| Select GROUP NUMBER, and touch CONFIRM. | | next page |
| For return to the large classification, touch PREVIOUS CLASSIFICATION. | | previous cl. |

# FIG.14-3(e)

| select by commodity cl. (small cl.) | | number of commodities: | confirm |
|---|---|---|---|
| 1 tailored | 6 blouson | | help |
| 2 flight | 7 jumpers | | selec-tions |
| 3 safari | 8 others | | |
| 4 down | | | correct |
| 5 blazers | | | stop shopping |
| Select GROUP NUMBER, and touch CONFIRM. For return to the medial classification, touch PREVIOUS CLASSIFICATION. | | | previous page |
| | | | next page |
| | | | previous cl. |

# FIG.14-3(f)

| Select operation | |
|---|---|
| 1 select commodity from monitor screen | |
| 2 designate commodity attributes (size, color, etc.) in advance | |
| 3 add/change commodity selecting methods | |

## FIG.14-4(g)

| commodity attributes | number of commodities: | confirm |
|---|---|---|

| | | | | help |
|---|---|---|---|---|
| 1 | size | 9 | 6-AB | selec-tions |
| 2 | color | 3 | gray colors | |
| 3 | material | 1 | 100% woolen | correct |
| 4 | price | | | |

| | | | stop shopping |
|---|---|---|---|
| 1 | 100% woolen | | |
| 2 | 100% silk | | |
| 3 | wool-silk mixture | | |
| 4 | polyester mixture | | |
| 5 | others | | |

Select from the menu.  Touch numeric keys for numeric entry.

Touch CONFIRM when all conditions have been selected.

## FIG.14-4(h)

| commodity attributes | number of commodities: | confirm |
|---|---|---|

| | | | | help |
|---|---|---|---|---|
| 1 | size | 3 | 6-AB | selec-tions |
| 2 | color | 3 | gray colors | |
| 3 | material | 1 | 100% woolen | correct |
| 4 | price | | 50,000-70,000 | |

| | | | | minimum | 50,000 | stop shopping |
|---|---|---|---|---|---|---|
| 7 | 8 | 9 | | maximum | 70,000 | |
| 4 | 5 | 6 | | | | |
| 1 | 2 | 3 | | | | |
| 0 | decide | cancel | | | | |

Select from the menu.  Touch numeric keys for numeric entry.

Touch CONFIRM when all conditions have been selected.

## FIG.14-5(i)

| Select operation | |
|---|---|
| ▨1▨ select commodity from monitor screen | |
| 2 add/change commodity selecting methods | |

## FIG.14-5(j)

| selection from monitor | There are 32 commodities. | confirm |
|---|---|---|
| eligible No. brands | eligible No. brands | help |
| 1 cashmere jacket<br>2 business jacket<br>3 tailored jacket<br>4 flannel jacket<br>5 tailored jacket<br>6 tailored jacket | 7 tailored jacket<br>8 tweed jacket<br>9 lam's wool jacket<br>10 home-spun jacket<br>11 tailored jacket<br>12 Saxony jacket | selec-tions<br><br>correct<br><br>stop shopping |

monitor    magnify  commodity description

end display

There is next page

| 1 | 2 |
|---|---|
| 3 | 4 |

monitor No.

Touch MONITOR for commodity display
select eligible  monitor No.
EX:  MAGNIFY monitor No.
COMMODITY DESCRIPTION  monitor No.

previous page

next page

select eligible

previous eligible

next eligible

## FIG.14 -6(k)

| selection from monitor | There are 32 commodities. | confirm |
|---|---|---|

| eligible | No. brands | eligible | No. brands | |
|---|---|---|---|---|
| * | 1 cashmere jacket | * | 7 tailored jacket | help |
| | 2 business jacket | | 8 tweed jacket | selec-tions |
| * | 3 tailored jacket | | 9 lam's wool jacket | |
| | 4 flannel jacket | * | 10 home-spun jacket | correct |
| * | 5 tailored jacket | | 11 tailored jacket | |
| * | 6 tailored jacket | * | 12 Saxony jacket | stop shopping |

There is next page

monitor    magnify    commodity description

end display

| 1 | 2 |
|---|---|
| 3 | 4 |

monitor No.

Touch MONITOR for commodity display
select eligible    monitor No.
EX:    MAGNIFY monitor No.
COMMODITY DESCRIPTION    monitor No.

previous page
next page
select eligible
previous eligible
next eligible

## FIG.14 -6(l)

| selection from monitor | There are 12 commodities. | confirm |
|---|---|---|

| eligible | No. brands | eligible | No. brands | |
|---|---|---|---|---|
| * | 1 cashmere jacket | * | 12 cashmere flannel jacket | help |
| * | 3 tailored jacket | * | 15 Saxony jacket | selec-tions |
| * | 5 tailored jacket | * | 19 glen-check jacket | |
| * | 6 tailored jacket | * | 23 silk-wool jacket | correct |
| ** | 7 tailored jacket | * | 30 herringbone jacket | |
| * | 10 home-spun jacket | * | 32 Saxony jacket | stop shopping |

There is no next page

monitor    magnify    commodity description

end display

| 1 | 2 |
|---|---|
| 3 | 4 |

monitor No.

Touch MONITOR for commodity display
select eligible    monitor No.
EX:    MAGNIFY monitor No.
COMMODITY DESCRIPTION    monitor No.

previous page
next page
select eligible
previous eligible
next eligible

## FIG.14-7(m)

| commodity confirmation | | confirm |
|---|---|---|
| You have selected the following commodity. | | |
| commodity No. | brand | |
| 020501105 | tailored jacket | stop shopping |
| Touch CONFIRM for purchase. Touch STOP SHOPPING for quitting. | | |

## FIG.14-7(n)

| have favorite senses | number of commodities: | | | confirm |
|---|---|---|---|---|
| 1 high technology | | 6 retrospective | | help |
| 2 high touch | | 7 traditional | | selec- tions |
| 3 cheap chic | | 8 natural | | correct |
| 4 high grade | | 9 sporty | | |
| 5 romantic | | 10 simple | | stop shopping |
| | | There is no next page | | |
| For selecting plural functions, touch AND or OR, then number keys and CONFIRM. | | | | previous page |
| | | | | next page |
| | | | | A N D |
| A AND B      A OR B | | | | O R |

## FIG.14-8(o)

| want various functions | number of commodities: | confirm |
|---|---|---|

| 11 greatly improved safety | 16 greatly improved recreation | help |
| 12 greatly improved delicacy | 17 greatly improved comfort | selec-tions |
| 13 greatly improved live reproducibility | 18 greatly improved economy | correct |
| 14 greatly improved utility | 19 greatly improved operability | |
| 15 greatly improved surprising effect | 10 greatly improved durability | stop shopping |

There is no next page

For selecting plural senses, touch AND or OR, then number keys and CONFIRM.

previous page

next page

A N D

O R

A AND B        A OR B

## FIG.14-8(P)

| selection from monitor | There are commodities. | confirm |
|---|---|---|

| eligible No. brands | eligible No. brands | help |
|---|---|---|
| 1 antifouling high-low | 7 Kanekaron Flame-Proof | selec-tions |
| 2 all-wool high-low | 8 Mitsubishi Bonnel Floral | |
| 3 antifouling big loop | 9 Nikke Wool Big Loop | correct |
| 4 all-wool cut | 10 Asahi Kasei Limson Guard | |
| 5 monochro-loop | 11 Asahi Kasei Limson Guard | stop shopping |
| 6 Toray All-Wool Cut | 12 Wilton Living Loop | |

There is next page

monitor    magnify    commodity description

end display

| 1 | 2 |
|---|---|
| 3 | 4 |

monitor No.

Touch MONITOR for commodity display
        select eligible    monitor No.
EX:    MAGNIFY monitor No.
        COMMODITY DESCRIPTION    monitor No.

previous page

next page

select eligible

previous eligible

next eligible

## FIG.14-9(q)

| selections | | | |
|---|---|---|---|
| 1 senses | 10 simple | | |
| 7 functions | AND | | |
| | 17 greatly improved comfort | | |
| | 20 greatly improved durability | | |
| 8 commodity groups | 5 upholstery and bedding | | |
| | 3 carpets and rugs | | |
| | 2 easy order carpets | | |

Above three items have been selected.

previous screen

## FIG.14-9(r)

select gift purpose          number of commodities:   confirm

| 1 wedding | 6 employment | help |
| 2 congratulatory on birth | 7 wedding commemoration | selec-tions |
| 3 seasonal festival | 8 longevity | |
| 4 school entrance | 9 return gift | correct |
| 5 school graduation | 10 memorial service | stop shopping |

There is next page

For selecting plural senses, touch AND or OR, then number keys
and CONFIRM.

previous page

next page

A AND B          A OR B

AND

O R

## FIG.14 -10(s)

| select trend | | number of commodities: | confirm |
|---|---|---|---|
| 1  eat simple foods | 6  informatize | | help |
| 2  eat alone | 7  for 24 hours a day | | selections |
| 3  glut | 8  systematize | | |
| 4  eat little | 9  for lightweight and smallness | | correct |
| 5  play alone | 10  globalize | | |

There is next page

For selecting plural trends, touch AND or OR, then number keys and CONFIRM.

A AND B    A OR B

| | |
|---|---|
| stop shopping | |
| previous page | |
| next page | |
| AND | |
| O R | |

## FIG.14 -10(t)

| select trend | | number of commodities: | confirm |
|---|---|---|---|
| 1  eat simple foods | 6  informatize | | help |
| 2  eat alone | 7  for 24 hours a day | | selections |
| 3  glut | 8  systematize | | correct |
| 4  eat little | 9  for lightweight and smallness | | |
| 5  play alone | 10  globalize | | stop shopping |

There is next page

For selecting plural trends, touch AND or OR, then number keys and CONFIRM.

A AND B    A OR B

| | |
|---|---|
| previous page | |
| next page | |
| AND | |
| O R | |

# FIG. 15-1

## (a)

START

exit

initial screen — S 2

clear retrieval data — S 4

shopping? — S 6
N

Y ← entry

initial shopping screen — S 8

retrieval? — S10 — N → request demo screen — S88 ②

Y

classification retrieval ? — S12
N → ①

Y

large classification — S14

exit ← confirm ? — S16 → entry

Y

medial classification — S18

exit ← confirm ? — S20 → entry

Y

small classification — S22

exit ← confirm ? — S24 → entry

Y ③

FIG. 15-1

(b)
③

set retrieval data | S26

N ─── attributes ? S28

Y

designate attributes | S30

exit ← confirm ? S32 → entry

Y

set retrieval data | S34

④ ← add FG ? S36
      N

Y

FG large classification | S38

exit ← confirm ? S40 → entry

Y

FG small classification | S42

exit ← confirm ? S44 → entry

Y

set retrieval data | S46

S48 end ? N

Y

④

FIG. 15-2

(c)
④

designate price | S50

exit ← confirm ? S52 → entry

Y

set retrieval data | S54

S56 up to 32 com-
modities ? N

Y

reduce to 32 | S58
commodities

input commodity | S60
codes to computer

⑤

58

F I G. 1 5 - 2

(d)

⑤

S62
Y ← video data in
buffer memory?

N

request data from host st. S64

transmission

reception

store data in
buffer memory S66

②

commodity selection S90

S92
exit ← confirm ? → entry

Y

set retrieval data S94

confirm commodity S96

S98
exit ← confirm ? → entry

Y

order processing S100

reception

T 2
requested data
in buffer ?
N

Y

T 4
search file for
requested data
and set data to
buffer

read out descrip-
tion from file T 6

transmission
processing T 8

transmission

## F I G.  1 5 - 3

### ( e )

① 

| FG large classification | S68 |

exit ← confirm ? → entry   S70

Y

| FG small classification | S72 |

exit ← confirm ? → entry   S74

Y.

| set retrieval data | S76 |

S78   end ?   N

Y

N   add large clas-sification ?   S80

④

Y

| large classification | S82 |

exit ← confirm ? → entry   S84

Y

| set retrieval data | S86 |

④

F I G. 1 6 - 1

(a)

```
                    ┌─────────┐
                   ( START    )
                    └─────────┘
                         │
              ┌──────────────────┐
              │  display icon    │  N 2
              └──────────────────┘
                         │
         ┌──────────────────────────┐
         │ set mode to forward      │  N 4
         │ and clear waiting time   │
         └──────────────────────────┘
                         │
         ┌──────────────────────────┐
         │ highlight first icon     │  N 6
         └──────────────────────────┘
                         │
      ┌──────────────────┼──────────────── ②
      │         N 8      ╱╲        Y
      │              ╱ touch screen ╲──────────→ ①
      │              ╲   input ?   ╱
      │                  ╲╱
      │                  │ N
      │         N       ╱╲       N10
      ├←───────────╱ waiting time ╲
      │            ╲  expired ?   ╱
      │                ╲╱
      │                │ Y
      │      N12      ╱╲       N
      │           ╱ item already ╲──────────────────┐
      │           ╲  selected?   ╱                  │
      │               ╲╱                  ┌──────────────────┐
      │               │ Y                 │ cancel highlight │ N14
      │      N16     ╱╲      N             └──────────────────┘
      │          ╱ forward  ╲──────────────────┐
      │          ╲  mode ?  ╱                  │
      │              ╲╱                        │
      │              │ Y                        │
      │   ┌────────────────────┐      ┌────────────────────────┐
      │   │ highlight next icon│ N18  │ highlight previous icon│ N20
      │   └────────────────────┘      └────────────────────────┘
      │              │←────────────────────────┘
      │   ┌────────────────────┐
      │   │ clear waiting time │ N22
      │   └────────────────────┘
      │              │
      └──────────────┘
```

## FIG. 16−2

### ( b )

①

N24 ▷ ──Y──→ forward mode with long wait  N26

│N

N28 ▷▷ ──Y──→ forward mode with short wait  N30

│N

N32 ◁ ──Y──→ reverse mode with long wait  N34

│N

N36 ◁◁ ──Y──→ reverse mode with short wait  N38

│N

N40 □ ──N──→ N42 next page ? ──Y──→ N44 display next page if any, and highlight first icon

│Y          │N

set finger mark to highlighted icon  N52    N46 previous page? ──Y──→ N50 display previous page if any, and highlight first icon

│                                    │N

N54 input? ──N──↩                    end ?  N50

│Y          │N        │Y      │N

N56 highlighted icon ? ──N──→ set mode and waiting time  N58

│Y

RETURN  N48

N60 icon already selected ? ──Y──→ set mode and waiting time  N64

│N

set classification code  N62

②

## FIG.17-1(a)

initial shopping screen

1     look at recommended commodities

2     search free group

3     search commodity classification

exit

## FIG.17-1(b)

large classification

$l_1$   $l_2$   $l_3$   $l_4$     $l_5$

m

2

entry    ◀◀   ◀   ■   ▶   ▶▶    exit

## FIG.17-1(c)

attributes

O   X

col-or     Select attributes?     mate rial

size        weig ht

entry    ◀◀   ◀   ■   ▶   ▶▶    exit

## FIG.17-2 (d)

attribute selection    ◯  ✕

col-
or    ➞

~ m

entry    ◀◀  ◀  ■  ▶  ▶▶    exit

## FIG.17-2(e)

col-
ors

| bla-ck | whi-te | red | blue | yel-low | gre-en | pur-ple | dark blue |

entry    ◀◀  ◀  ■  ▶  ▶▶    exit

## FIG.17-2 (f)

◯  ✕

Add FG search?

entry    exit

EP 0 410 036 A1

# FIG.17-3 (g)

FG large classification — ○ × AND OR

entry ◄◄ ◄ ■ ► ►► exit

2

# FIG.17-3 (h)

price setting   D1   D2

[ ] - [ ]

7 8 9
4 5 6 C
0 1 2 3 =

over···?   between··· and···?   under···?

entry ◄ ■ ► exit

# FIG.17-3 (i)

look at recomended commodities

Upper display will show you 32 commodities in sequence.

Press STOP key to stop display.

You may see description of commodity in stopped frame.

entry ◄◄ ◄ ■ ► ►► exit

65

## FIG.17-4(j)

look at all commodities ◯ ✕

Upper display will show you retrieved commodities in

sequence.

Press STOP key to stop display.

You may see description of commodity in stopped frame.

entry ◀◀ ◀ ■ ▶ ▶▶ exit

## FIG.17-4(k)

commodity selection ◯ ✕

S_A STOP  S_B STOP

S_C STOP  S_D STOP

entry ◀◀ ◀ ■ ▶ ▶▶ exit

## FIG.17-4(l)

magnify

description of commodity

▶

# FIG 17-5(m)

magnifying

# FIG 17-5(n)

select commodity

HA HB HC HD

entry exit

# FIG 17-5(o)

confirm commodity

You have selected the following commodity:

entry exit

## FIG.18 (a)

## FIG.18 (b)

## FIG.18 (c)

## FIG.18 (d)

## FIG.18 (e)

FIG. 19-1

(a)

START

transfer video data
to scan monitor | M 2

N    M 4
down to 3
commodities ?

Y

black out one screen | M 6

normal mode : long
fast mode   : short

M 8              N    M10              N
touch screen          waiting time
input ?               lapsed ?

Y                          Y                    ①

M24         N    M26                    N
stop                  function
command?              switch ?

Y                          Y          ③

display description | M30     change mode | M28

M32              Y
magnify
command?

N                    magnify commodity | M36

freeze | M34

N              M38
freeze 4
screens ?

Y

scroll image | M40
frozen earliest

②

69

FIG. 19-2

(b)

FIG. 19−3

(c)

③

M42 ── N
comparison end?
↓ Y          ②

M44 ── Y
input ?
↓ N

M62 ── Y
function switch ?
↓ N

M64
change waiting time

Y
M46
stop mode ?
↓ N

M66 ── N
end ?
↓ Y
④

N
M48
waiting time expired ?
↓ Y

M68 ── N
purchase mark ?
↓ Y

M50 ── N
forward mode ?
↓ Y

M70
fix commodity

shift frame memory238 forward   M52

shift frame memory238 backward   M54

M56 ── N
up to 4 commodities ?
↓ Y

transfer data   M58

display data   M60

71

FIG. 19-4

(d)

④

| display brandname , price,etc | M72 |

| magnify commodity | M74 |

M76 input ? — N

Y

M78 end ? — Y → | order processing | M88 →

N

N ← M80 ▷ ?

Y

N ← M82 purchase plural commodities ?

Y

| display brandname , price,etc | M84 |

| magnify commodity | M86 |

FIG. 20-1
(a)

FIG. 20-1
(d)

FIG. 20-1
(b)

FIG. 20-1
(e)

FIG. 20-1
(c)

EP 0 410 036 A1

FIG. 20-1
(f)

FIG. 20-1
(h)

FIG. 20-1
(g)

FIG. 20-1
(i)

74

FIG. 20-2
(j)

FIG. 20-2
(ℓ)

FIG. 20-2
(n)

FIG. 20-2
(k)

FIG. 20-2
(m)

FIG. 20-2
(O)

75

FIG. 21
(a)

FIG. 21
(d).

FIG. 21
(b)

FIG. 21
(c)

F I G. 2 2 − 1

( a )

F I G. 2 2 - 2

( b )

(START)

clear elapsed time | V 2

V 4 — input ? — N

measure elapsed time | V 6

Y

shopping? | V12

N

time up ? | V 8 — N

Y

monitor switch ON ? | V14

monitor switch OFF | V10

collect mode ? | V20 — N

Y

in collecting period? | V22 — Y

register member No. | V16

set non-execute mode | V24

set execute mode | V18

clear elapsed time | V26

item selected ? | V28 — N

measure elapsed time | V30

Y

execute mode ? | V32 — N

register selected item and elapsed time | V34

end ? | V38 — N

next process | V40

clear elapsed time | V36

(END)

78

FIG. 22-3

(c)

BATCH TIME PROCESSING

U22 command ? — N

Y

U24 reception completed? — Y

N

U26 history delete ? — Y

N

U28 history request ? — N

Y

N — U30 history re-gistered ?

Y

send history  U32

U34 0 a.m. ? — N

Y

N — U36 history re-gistered ?

Y

delete history  U38

F I G. 2 3

250

252

| 0 | 1 | 0 | 1 | 0 | 0 | 0 | 1 | 0 | 0 | 0 | 0 | 3 |

shop No.

member's serial No.

membership No.

F I G. 2 4 − 1

(a)

retrieval history file

| No. of ops. (N) | operation data 1 | . . . . . | operation data N |
|---|---|---|---|

F I G. 2 4 − 1

(b)

operation data

| operation start time | monitor/ randam type | member- shipNo. | history data 1 | history data 2 | . . . . . . | history data M |
|---|---|---|---|---|---|---|

FIG. 24-2

(c)

| 15:18 | random | 01-05-0001-00000 | shopping<br><br>0 1 H | 0 | cl.<br>retrieval<br>start<br>0 6 H | 5 | large<br>cl.<br><br>1 1 H | 3 | 05 |
|---|---|---|---|---|---|---|---|---|---|

| medial<br>cl.<br>1 2 H | 8 | 13 | small<br>cl.<br>1 3 H | 5 | 04 | attribute<br>start<br>1 4 H | 20 | attribute<br>value<br>8 1 H | 1 3<br>upper<br>limit | 6<br>lower<br>limit | attribute<br>type<br>0 2 H | 03 |
|---|---|---|---|---|---|---|---|---|---|---|---|---|

| atribute<br>end<br>F 0 H | 15 | price<br>setting<br>1 6 H | 10 | 300000 | 100000 | commodity<br>select<br>1 A H | 15 | freeze<br><br>1 D H | 5 | magnify<br><br>1 C H | 18 |
|---|---|---|---|---|---|---|---|---|---|---|---|

no FG

| forward<br>0 B H | 3 | freeze<br>1 D H | 13 | reverse<br>0 A H | 21 | compari-<br>son end<br>1 E H | 7 | freeze<br>(eligible)<br>1 D H | 3 | commodity<br>select<br>end F1H | 2 | commodity<br>confirm<br>1 B H | 5 |
|---|---|---|---|---|---|---|---|---|---|---|---|---|

81

EP 0 410 036 A1

FIG. 24-3
(d)

| 15:18 | monitor | 01-05-0001-00001 | shopping  0  01H | FG start  5  05H | FG large cl.  3  0FH | 0 1 |

| FG small cl.  8  10H | 1 | 13 | FG large cl.  35  0FH | 0 4 | FG small cl.  20  10H | 3 | 0 4 | 0 7 | 1 1 |

| large cl.  15  11H | 0 6 | price setting  10  16H | 20000 | 5000 | commodity select  15  1AH | freeze  5  1DH | magnify  18  1CH |

| forward  3  0BH | freeze  13  1DH | reverse  21  0AH | comparison end  7  1EH | freeze (eligible)  3  1DH | commodity select end  2  F1H | commodity confirm  5  1BH |

FIG. 24-3
(e)

| 15:18 | random (monitor) | 01-05-0001-00000 | shopping  0  01H | demo start  5  04H | commodity select  10  1AH | freeze  1DH  30 |

| forward  3  0BH | freeze  13  1DH | fast forward  21  09H | comparison end  7  1EH | stop shopping  3  08H |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | S.M.P.T.E., vol. 94, no. 1, January 1985, pages 11-15; E. LEONARD: "Broadening video/graphics applications" * Page 11, right-hand column, lines 8-33; page 12, left-hand column, lines 48-64; figures 1,2 * | 1 | G 06 F 15/40 |
| A | IDEM | 14 | |
| Y | SYSTEMS-COMPUTER-CONTROLS, vol. 11, no. 1, January-February 1980, pages 10-17; H. NAKAGAWA et al.: "Picture data base on-line remote access system" * Page 10, right-hand column, line 19 - page 11, right-hand column, line 18; page 14, right-hand column, line 13 - page 15, left-hand column, line 28; figures 1,2 * | 1 | |
| A | IEEE TRANS. ON CONSUMER ELECTRONICS, vol. CE-26, no. 3, August 1980, pages 487-505; W.D. PIERCE et al.: "A low cost terminal for the 1980's: project green thumb" * Page 488, right-hand column, line 29 - page 490, left-hand column, line 27; figure 1 * | 1-4,17 | TECHNICAL FIELDS SEARCHED (Int. Cl.5) G 06 F 15/00 H 04 N 1/00 |
| A | EP-A-0 207 468 (SONY CORP.) * Abstract * | 1-3 | |
| A | US-A-4 266 284 (F. CAROSI et al.) * Abstract * | 1 | |
| A | US-A-4 064 490 (R. NAGEL) * Abstract * | 1 | |

The present search report has been drawn up for all claims

| Place of search | Date of completion of the search | Examiner |
|---|---|---|
| THE HAGUE | 27-03-1990 | POPINEAU G.J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)